# EUROPEAN PATENT APPLICATION

(11) **EP 4 564 973 A1**
(43) Date of publication of application: **04.06.2025**
(21) Application number: 23870643.6
(22) Date of filing: 22.09.2023
(51) Int. Cl.: H04W 72/044

(54) **BEAM DETERMINATION METHOD AND RELATED APPARATUS**

(30) Priority: 28.09.2022 CN 202211192931
(71) Applicant: Huawei Technologies Co., Ltd., Shenzhen, Guangdong 518129 (CN)
(72) Inventor: FAN, Bo, Shenzhen, Guangdong 518129 (CN); CHEN, Lei, Shenzhen, Guangdong 518129 (CN); YUAN, Shitong, Shenzhen, Guangdong 518129 (CN)
(74) Representative: Pfenning, Meinig & Partner mbB
(86) International application number: PCT/CN2023/120806
(87) International publication number: WO 2024/067412

(57) **Abstract**

This application provides a beam determining method and a related apparatus. The method includes: A terminal device determines, in a first beam and a second beam based on a beam parameter corresponding to a first control-resource set and a beam parameter corresponding to a second control-resource set, a beam used by the first control-resource set and a beam used by the second control-resource set, where the first beam and the second beam are two common beams available for downlink transmission, and the first control-resource set and the second control-resource set are two control-resource sets for physical downlink control channel repetition transmission. The terminal device receives, based on the beam used by the first control-resource set, a physical downlink control channel corresponding to the first control-resource set, and receives, based on the beam used by the second control-resource set, a physical downlink control channel corresponding to the second control-resource set. A network device does not need to indicate, to the terminal device, a beam used by each control-resource set, to reduce beam indication overheads.

## Description

This application claims priority to Chinese Patent Application No. 202211192931.7, filed with the China National Intellectual Property Administration on September 28, 2022 and entitled "BEAM DETERMINING METHOD AND RELATED APPARATUS", which is incorporated herein by reference in its entirety.

### TECHNICAL FIELD

This application relates to the field of communication technologies, and in particular, to a beam determining method and a related apparatus.

### BACKGROUND

In a 5th generation (5th generation, 5G) mobile communication system, high-frequency communication may be used. That is, data transmission is performed by using a super high frequency band (> 6 GHz) signal. A main problem of the high-frequency communication is that signal energy sharply decreases as a transmission distance increases, resulting in a short signal transmission distance. To resolve this problem, an analog beam technology is used for the high-frequency communication. Weighted processing is performed on an antenna array, and the signal energy is concentrated in a small angle range, to form a signal (referred to as an analog beam, a beam for short) similar to a light beam, so that the transmission distance is extended.

A beam is used for transmission between a network device and a terminal device. For example, the network device may indicate, to the terminal device, a plurality of beams available for downlink transmission, for example, a plurality of downlink common beams or a plurality of uplink and downlink common beams. How to correctly use, on corresponding channels, the beams indicated by the network device is an urgent problem to be resolved.

### SUMMARY

This application provides a beam determining method and a related apparatus, so that a terminal device correctly uses, on a physical downlink control channel corresponding to a first control-resource set and a physical downlink control channel corresponding to a second control-resource set, beams indicated by a network device, to improve communication transmission performance. The network device does not need to indicate, to the terminal device, a beam used by each control-resource set, to reduce beam indication overheads.

A first aspect of this application provides a beam determining method, including:
A terminal device determines, in a first beam and a second beam based on a beam parameter corresponding to a first control-resource set and a beam parameter corresponding to a second control-resource set, a beam used by the first control-resource set and a beam used by the second control-resource set. The first beam and the second beam are two common beams available for downlink transmission. That is, the first beam and the second beam are both the common beams available for downlink transmission. The first control-resource set and the second control-resource set are two control-resource sets for physical downlink control channel repetition transmission. That is, the first control-resource set and the second control-resource set are both for physical downlink control channel repetition transmission. The terminal device receives, based on the beam used by the first control-resource set, a physical downlink control channel corresponding to the first control-resource set, and receives, based on the beam used by the second control-resource set, a physical downlink control channel corresponding to the second control-resource set.

In the foregoing technical solution, the terminal device correctly uses, on the physical downlink control channel corresponding to the first control-resource set and the physical downlink control channel corresponding to the second control-resource set, beams indicated by a network device. The terminal device receives, based on the beam used by the first control-resource set, the physical downlink control channel corresponding to the first control-resource set, and receives, based on the beam used by the second control-resource set, the physical downlink control channel corresponding to the second control-resource set. In this way, communication transmission performance is improved. In addition, the terminal device determines, based on the beam parameter corresponding to the first control-resource set, the beam used by the first control-resource set, and determines, based on the beam parameter corresponding to the second control-resource set, the beam used by the second control-resource set. The network device does not need to indicate, to the terminal device, a beam used by each control-resource set, to reduce beam indication overheads.

A second aspect of this application provides a beam determining method, including:
A network device determines, in a first beam and a second beam based on a beam parameter corresponding to a first control-resource set and a beam parameter corresponding to a second control-resource set, a beam used by the first control-resource set and a beam used by the second control-resource set. The first beam and the second beam are two common beams available for downlink transmission. That is, the first beam and the second beam are both the common beams available for downlink transmission. The first control-resource set and the second control-resource set are two control-resource sets for physical downlink control channel repetition transmission. That is, the first control-resource set and the second control-resource set are both for physical downlink control channel repetition transmission. The network device sends, based on the beam used by the first control-resource set, a physical downlink control channel corresponding to the first control-resource set, and sends, based on the beam used by the second control-resource set, a physical downlink control channel corresponding to the second control-resource set.

In the foregoing technical solution, the network device determines, in the first beam and the second beam based on the beam parameter corresponding to the first control-resource set and the beam parameter corresponding to the second control-resource set, the beam used by the first control-resource set and the beam used by the second control-resource set. In this way, the physical downlink control channels corresponding to the corresponding control-resource sets are communicated between the network device and a terminal device by using the corresponding beams. Correct transmission between the network device and the terminal device is implemented, and communication transmission performance is improved. The network device does not need to indicate, to the terminal device, a beam used by each control-resource set, to reduce beam indication overheads.

Based on the first aspect or the second aspect, in a possible implementation, the first beam and the second beam are the two common beams that are available for downlink transmission and that are indicated by the network device to the terminal device, so that the terminal device selects appropriate beams for the first control-resource set and the second control-resource set from the first beam and the second beam.

Based on the first aspect or the second aspect, in a possible implementation, the first control-resource set and the second control-resource set are control-resource sets respectively associated with two search spaces for physical downlink control channel repetition transmission. That is, the first control-resource set and the second control-resource set are respectively associated with different search spaces. The first control-resource set is a control-resource set with a smaller index in the two control-resource sets, and the second control-resource set is a control-resource set with a larger index in the two control-resource sets. That is, an index of the first control-resource set is less than an index of the second control-resource set. Alternatively, the first control-resource set is a control-resource set with a larger index in the two control-resource sets, and the second control-resource set is a control-resource set with a smaller index in the two control-resource sets. That is, an index of the first control-resource set is greater than an index of the second control-resource set. Alternatively, the first control-resource set is a control-resource set with a higher configuration ranking in the two control-resource sets. That is, a configuration ranking of the first control-resource set is higher than a configuration ranking of the second control-resource set. The second control-resource set is a control-resource set with a lower configuration ranking in the two control-resource sets. Alternatively, the first control-resource set is a control-resource set with a lower configuration ranking in the two control-resource sets, and the second control-resource set is a control-resource set with a higher configuration ranking in the two control-resource sets. That is, a configuration ranking of the first control-resource set is lower than a configuration ranking of the second control-resource set. Alternatively, the first control-resource set is a control-resource set corresponding to a search space with a smaller index in the two search spaces, and the second control-resource set is a control-resource set corresponding to a search space with a larger index in the two search spaces. That is, an index of a search space associated with the first control-resource set is less than an index of a search space associated with the second control-resource set. Alternatively, the first control-resource set is a control-resource set corresponding to a search space with a higher configuration ranking in the two search spaces, and the second control-resource set is a control-resource set corresponding to a search space with a lower configuration ranking in the two search spaces. That is, a configuration ranking of a search space associated with the first control-resource set is higher than a configuration ranking of a search space associated with the second control-resource set. Alternatively, the first control-resource set is a control-resource set corresponding to a search space with a lower configuration ranking in the two search spaces, and the second control-resource set is a control-resource set corresponding to a search space with a higher configuration ranking in the two search spaces. That is, a configuration ranking of a search space associated with the first control-resource set is lower than a configuration ranking of a search space associated with the second control-resource set.

In this implementation, some possible manners of distinguishing between the first control-resource set and the second control-resource set are shown, so that the terminal device and the network device can distinguish between the first control-resource set and the second control-resource set.

Based on the first aspect or the second aspect, in a possible implementation, for either of the first control-resource set and the second control-resource set, when a value of a beam parameter corresponding to the control-resource set is a first value, the control-resource set uses the first beam; when a value of a beam parameter corresponding to the control-resource set is a second value, the control-resource set uses the second beam; or when a value of a beam parameter corresponding to the control-resource set is a third value, the control-resource set uses the first beam and the second beam.

In this implementation, various values of the beam parameter corresponding to the control-resource set and corresponding meanings are shown, to help the terminal device determine, with reference to the value of the beam parameter corresponding to the control-resource set, the beam used by the control-resource set. The terminal device receives, by using a correct beam, a physical downlink control channel corresponding to the control-resource set. The network device does not need to indicate, to the terminal device, the beam used by each control-resource set, to reduce the beam indication overheads.

Based on the first aspect or the second aspect, in a possible implementation, a value of the beam parameter corresponding to the first control-resource set and a value of the beam parameter corresponding to the second control-resource set are configured or indicated by the network device; and the beam parameter corresponding to the first control-resource set and the beam parameter corresponding to the second control-resource set satisfy at least one of the following: Neither the value of the beam parameter corresponding to the first control-resource set nor the value of the beam parameter corresponding to the second control-resource set is the third value; the value of the beam parameter corresponding to the first control-resource set is different from the value of the beam parameter corresponding to the second control-resource set; a value of a beam parameter corresponding to one of the first control-resource set and the second control-resource set is the first value, and a value of a beam parameter corresponding to the other control-resource set is the second value; the value of the beam parameter corresponding to the first control-resource set is the first value, and the value of the beam parameter corresponding to the second control-resource set is the second value; or the value of the beam parameter corresponding to the first control-resource set is the second value, and the value of the beam parameter corresponding to the second control-resource set is the first value.

In this implementation, the value of the beam parameter corresponding to the first control-resource set and the value of the beam parameter corresponding to the second control-resource set are configured by the network device, one or more items that the value of the beam parameter corresponding to the first control-resource set and the value of the beam parameter corresponding to the second control-resource set need to satisfy are shown. The values of the beam parameters are set from a configuration perspective, so that the first control-resource set and the second control-resource set use different beams. In this way, high-reliability physical downlink control channel repetition transmission based on the different beams is implemented.

Based on the first aspect or the second aspect, in a possible implementation, the value of the beam parameter corresponding to the first control-resource set and the value of the beam parameter corresponding to the second control-resource set are configured or indicated by the network device; and the beam used by the first control-resource set and the beam used by the second control-resource set satisfy at least one of the following: The first control-resource set is not configured or is not indicated to use the first beam and the second beam, and the second control-resource set is not configured or is not indicated not to use the first beam and the second beam; the first control-resource set and the second control-resource set use different beams; one of the first control-resource set and the second control-resource set uses the first beam, and the other control-resource set uses the second beam; the first control-resource set uses the first beam, and the second control-resource set uses the second beam; or the first control-resource set uses the second beam, and the second control-resource set uses the first beam.

Based on the first aspect or the second aspect, in a possible implementation, a value of a beam parameter corresponding to one of the first control-resource set and the second control-resource set is default, and a value of a beam parameter corresponding to the other control-resource set is configured by the network device, where the default value of the beam parameter corresponding to the one of the first control-resource set and the second control-resource set is determined based on the value of the beam parameter corresponding to the other control-resource set.

In this implementation, the default value of the beam parameter corresponding to the one of the first control-resource set and the second control-resource set is determined based on the value of the beam parameter corresponding to the other control-resource set. That is, a beam used by the one of the first control-resource set and the second control-resource set is a beam indicated based on the value of the beam parameter corresponding to the other control-resource set. In other words, a beam used by the one of the first control-resource set and the second control-resource set is determined based on a beam used by the other control-resource set. A manner of setting the default value of the beam parameter is shown, to help ensure that common beams used by the two control-resource sets are different. In this way, high-reliability physical downlink control channel repetition transmission based on the different beams is always implemented.

Based on the first aspect or the second aspect, in a possible implementation, that the value of the beam parameter corresponding to the one of the first control-resource set and the second control-resource set is determined based on the value of the beam parameter corresponding to the other control-resource set includes: If the value of the beam parameter corresponding to the other control-resource set is the first value, the default value of the beam parameter corresponding to the one of the first control-resource set and the second control-resource set is the second value; or if the value of the beam parameter corresponding to the other control-resource set is the second value, the default value of the beam parameter corresponding to the one of the first control-resource set and the second control-resource set is the first value. In other words, if the other control-resource set uses the first beam, the one of the first control-resource set and the second control-resource set uses the second beam; or if the other control-resource set uses the second beam, the one of the first control-resource set and the second control-resource set uses the first beam.

In this implementation, a specific manner of setting the default value of the beam parameter corresponding to the one of the first control-resource set and the second control-resource set is shown, to help ensure that the common beams used by the two control-resource sets are different. In this way, the high-reliability physical downlink control channel repetition transmission based on the different beams is always implemented.

Based on the first aspect or the second aspect, in a possible implementation, a value of the beam parameter corresponding to the first control-resource set and a value of the beam parameter corresponding to the second control-resource set are both default; and the default value of the beam parameter corresponding to the first control-resource set is the first value, and the default value of the beam parameter corresponding to the second control-resource set is the second value; or the default value of the beam parameter corresponding to the first control-resource set is the second value, and the default value of the beam parameter corresponding to the second control-resource set is the first value. In other words, the first control-resource set uses the first beam by default, and the second control-resource set uses the second beam by default; or the first control-resource set uses the second beam by default, and the second control-resource set uses the first beam by default.

In this implementation, when the value of the beam parameter corresponding to the first control-resource set and the value of the beam parameter corresponding to the second control-resource set are both default, that the default value of the beam parameter corresponding to the first control-resource set is the first value and a manner of setting the default value of the beam parameter corresponding to the second control-resource set are shown, to help ensure that common beams used by the two control-resource sets are different. In this way, high-reliability physical downlink control channel repetition transmission based on the different beams is always implemented.

Based on the first aspect or the second aspect, in a possible implementation, when a first condition is satisfied, the terminal device determines, in the first beam and the second beam based on the beam parameter corresponding to the first control-resource set and the beam parameter corresponding to the second control-resource set, the beam used by the first control-resource set and the beam used by the second control-resource set, where the first condition includes at least one or a combination of the following: The network device configures the first control-resource set and the second control-resource set to each use a common beam; the network device configures common beams for the terminal device; the network device configures, for the terminal device, two groups of common beams available for downlink transmission; or index values of control-resource set pools associated with all control-resource sets configured by the network device for the terminal device are the same, or all control-resource sets configured by the network device for the terminal device are associated with a same control-resource set pool.

In this implementation, a condition for determining, by the terminal device, the beam used by the first control-resource set and the beam used by the second control-resource set is further limited, to help the terminal device correctly use, on the physical downlink control channels corresponding to the control-resource sets, the beams indicated by the network device, and improve the communication transmission performance.

Based on the first aspect or the second aspect, in a possible implementation, when a first condition is satisfied, the network device determines, in the first beam and the second beam based on the beam parameter corresponding to the first control-resource set and the beam parameter corresponding to the second control-resource set, the beam used by the first control-resource set and the beam used by the second control-resource set, where the first condition includes at least one or a combination of the following: The network device configures the first control-resource set and the second control-resource set to each use a common beam; the network device configures common beams for the terminal device; the network device configures, for the terminal device, two groups of common beams available for downlink transmission; or index values of control-resource set pools associated with all control-resource sets configured by the network device for the terminal device are the same, or all control-resource sets configured by the network device for the terminal device are associated with a same control-resource set pool.

In this implementation, a condition for determining, by the network device, the beam used by the first control-resource set and the beam used by the second control-resource set is further limited, so that the network device and the terminal device perform correct transmission.

A third aspect of this application provides a beam determining method, including:
A terminal device determines a first control-resource set and a second control-resource set that are configured by a network device. The first control-resource set and the second control-resource set are two control-resource sets for physical downlink control channel repetition transmission. That is, the first control-resource set and the second control-resource set are both for physical downlink control channel repetition transmission. The first control-resource set uses a common beam, and the second control-resource set uses a dedicated beam. When a value of a beam parameter corresponding to the first control-resource set is default, the terminal device determines, based on the dedicated beam used by the second control-resource set, the default value of the beam parameter corresponding to the first control-resource set. The terminal device determines, in a first beam and a second beam based on the default value of the beam parameter corresponding to the first control-resource set, the beam used by the first control-resource set. The first beam and the second beam are two common beams available for downlink transmission. That is, the first beam and the second beam are both the common beams available for downlink transmission.

In the foregoing technical solution, the terminal device determines, in the first beam and the second beam based on the default value of the beam parameter corresponding to the first control-resource set, the beam used by the first control-resource set, so that the terminal device correctly uses, on a physical downlink control channel corresponding to the first control-resource set, a beam indicated by the network device. In this way, communication transmission performance is improved. In addition, the terminal device determines, based on the default value of the beam parameter corresponding to the first control-resource set, the beam used by the first control-resource set. The network device does not need to indicate, to the terminal device, a beam used by each control-resource set, to reduce beam indication overheads. When the value of the beam parameter corresponding to the first control-resource set is default, the terminal device determines, based on the dedicated beam used by the second control-resource set, the default value of the beam parameter corresponding to the first control-resource set. This helps the terminal device determine an appropriate default value for the beam parameter corresponding to the first control-resource set. This helps the terminal device receive, by using different beams, the physical downlink control channel corresponding to the first control-resource set and a physical downlink control channel corresponding to the second control-resource set, and improves communication transmission reliability.

A fourth aspect of this application provides a beam determining method, including:
A network device determines a first control-resource set and a second control-resource set that are determined for a terminal device. The first control-resource set and the second control-resource set are two control-resource sets for physical downlink control channel repetition transmission. That is, the first control-resource set and the second control-resource set are both for physical downlink control channel repetition transmission. The first control-resource set uses a common beam, and the second control-resource set uses a dedicated beam. When a value of a beam parameter corresponding to the first control-resource set is default, determining, by the network device based on the dedicated beam used by the second control-resource set, the default value of the beam parameter corresponding to the first control-resource set. The network device determines, in a first beam and a second beam based on the default value of the beam parameter corresponding to the first control-resource set, the beam used by the first control-resource set. The first beam and the second beam are two common beams available for downlink transmission. That is, the first beam and the second beam are both the common beams available for downlink transmission.

In the foregoing technical solution, the network device determines, in the first beam and the second beam based on the default value of the beam parameter corresponding to the first control-resource set, the beam used by the first control-resource set. In this way, correct transmission between the network device and the terminal device is implemented. In this way, communication transmission performance is improved. When the value of the beam parameter corresponding to the first control-resource set is default, the network device determines, based on the dedicated beam used by the second control-resource set, the default value of the beam parameter corresponding to the first control-resource set. This helps the network device determine an appropriate default value for the beam parameter corresponding to the first control-resource set. This helps the network device transmit, by using different beams, a physical downlink control channel corresponding to the first control-resource set and a physical downlink control channel corresponding to the second control-resource set, and improves communication transmission reliability.

Based on the third aspect or the fourth aspect, in a possible implementation, the first beam and the second beam are the two common beams that are available for downlink transmission and that are indicated by the network device to the terminal device, so that the terminal device selects an appropriate beam for the first control-resource set from the first beam and the second beam.

Based on the third aspect or the fourth aspect, in a possible implementation, when the default value of the beam parameter corresponding to the first control-resource set is a first value, the first control-resource set uses the first beam; when the default value of the beam parameter corresponding to the first control-resource set is a second value, the first control-resource set uses the second beam; or when the default value of the beam parameter corresponding to the first control-resource set is a third value, the first control-resource set uses the first beam and the second beam.

In this implementation, various values of the default value of the beam parameter corresponding to the first control-resource set and corresponding meanings are shown, to help the terminal device determine, with reference to the default value of the beam parameter corresponding to the first control-resource set, the beam used by the first control-resource set. The terminal device receives, by using the correct beam, the physical downlink control channel corresponding to the first control-resource set. The network device does not need to indicate, to the terminal device, the beam used by each control-resource set, to reduce the beam indication overheads.

Based on the third aspect or the fourth aspect, in a possible implementation, the default value of the beam parameter corresponding to the first control-resource set is one of the first value and the second value, and a beam indicated by the default value of the beam parameter corresponding to the first control-resource set and the dedicated beam used by the second control-resource set belong to two different beam sets, where the two different beam sets are two beam sets configured or activated by the network device for the terminal device. In other words, the first control-resource set uses one of the first beam and the second beam, and the beam used by the first control-resource set and the dedicated beam used by the second control-resource set belong to the two different beam sets.

In this implementation, the beam used by the first control-resource set is constrained in a manner of setting the default value of the beam parameter corresponding to the first control-resource set. In this way, the beam indicated by the default value of the beam parameter corresponding to the first control-resource set and the dedicated beam used by the second control-resource set belong to the two different beam sets. Different beam sets correspond to different transmission reception points (transmission and reception points, TRPs), so that physical downlink control channel repetition transmission is performed with the terminal device by using the different TRPs, and the communication transmission reliability is improved.

A fifth aspect of this application provides a beam determining method, including:
A network device determines a first control-resource set and a second control-resource set that are configured for a terminal device. The first control-resource set and the second control-resource set are two control-resource sets for physical downlink control channel repetition transmission. That is, the first control-resource set and the second control-resource set are both for physical downlink control channel repetition transmission. The first control-resource set uses a common beam, and the second control-resource set uses a dedicated beam. The network device determines, based on the dedicated beam used by the second control-resource set, a configuration value of a beam parameter corresponding to the first control-resource set. The network device determines, in a first beam and a second beam based on the configuration value of the beam parameter corresponding to the first control-resource set, the beam used by the first control-resource set, where the first beam and the second beam are two common beams available for downlink transmission. That is, the first beam and the second beam are both the common beams available for downlink transmission.

In the foregoing technical solution, the network device correctly determines the beam used by the first control-resource set, to use the beam on a physical downlink control channel corresponding to the first control-resource set, so that the physical downlink control channel corresponding to the first control-resource set is transmitted by using the correct beam, to improve communication transmission performance. In addition, the network device determines, based on the dedicated beam used by the second control-resource set, the configuration value of the beam parameter corresponding to the first control-resource set. This helps the network device configure an appropriate configuration value for the first control-resource set, to help the network device transmit, by using different beams, the physical downlink control channel corresponding to the first control-resource set and a physical downlink control channel corresponding to the second control-resource set, and improve communication transmission reliability.

Based on the fifth aspect, in a possible implementation, the first beam and the second beam are the two common beams that are available for downlink transmission and that are indicated by the network device to the terminal device, so that the terminal device selects an appropriate beam for the first control-resource set from the first beam and the second beam.

Based on the fifth aspect, in a possible implementation, when the configuration value of the beam parameter corresponding to the first control-resource set is a first value, the first control-resource set uses the first beam; when the configuration value of the beam parameter corresponding to the first control-resource set is a second value, the first control-resource set uses the second beam; or when the configuration value of the beam parameter corresponding to the first control-resource set is a third value, the first control-resource set uses the first beam and the second beam.

In this implementation, various values of the configuration value of the beam parameter corresponding to the first control-resource set and corresponding meanings are shown, to help the network device determine, with reference to the configuration value of the beam parameter corresponding to the first control-resource set, the beam used by the first control-resource set. The network device sends, by using the correct beam, the physical downlink control channel corresponding to the first control-resource set.

Based on the fifth aspect, in a possible implementation, the configuration value of the beam parameter corresponding to the first control-resource set is one of the first value and the second value, and a beam indicated by the configuration value of the beam parameter corresponding to the first control-resource set and the dedicated beam used by the second control-resource set belong to two different beam sets, where the two different beam sets are two beam sets configured or activated by the network device for the terminal device. In other words, the first control-resource set uses one of the first beam and the second beam, and the beam used by the first control-resource set and the dedicated beam used by the second control-resource set belong to the different beam sets.

In this implementation, the beam used by the first control-resource set is constrained in a manner of setting the configuration value of the beam parameter corresponding to the first control-resource set. In this way, the beam indicated by the configuration value of the beam parameter corresponding to the first control-resource set and the dedicated beam used by the second control-resource set belong to the two different beam sets. Different beam sets correspond to different TRPs, so that physical downlink control channel repetition transmission is performed with the terminal device by using the different TRPs, and the communication transmission reliability is improved.

Based on any one of the first aspect to the fifth aspect, in a possible implementation, the beam used by the first control-resource set belongs to a first beam set, and the beam used by the second control-resource set belongs to a second beam set; and the first beam set corresponds to a first transmission reception point TRP, and the second beam set corresponds to a second TRP.

In this implementation, the first control-resource set and the second control-resource set belong to different beam sets. Different beam sets correspond to different TRPs, so that physical downlink control channel repetition transmission is performed with the terminal device by using the different TRPs, and the communication transmission reliability is improved.

Based on any one of the third aspect to the fifth aspect, in a possible implementation, the first control-resource set and the second control-resource set are control-resource sets respectively associated with two search spaces for physical downlink control channel repetition transmission. That is, the first control-resource set and the second control-resource set are respectively associated with different search spaces. The first control-resource set is a control-resource set with a smaller index in the two control-resource sets, and the second control-resource set is a control-resource set with a larger index in the two control-resource sets. That is, an index of the first control-resource set is less than an index of the second control-resource set. Alternatively, the first control-resource set is a control-resource set with a larger index in the two control-resource sets, and the second control-resource set is a control-resource set with a smaller index in the two control-resource sets. That is, an index of the first control-resource set is greater than an index of the second control-resource set. Alternatively, the first control-resource set is a control-resource set with a higher configuration ranking in the two control-resource sets, and the second control-resource set is a control-resource set with a lower configuration ranking in the two control-resource sets. That is, a configuration ranking of the first control-resource set is higher than a configuration ranking of the second control-resource set. Alternatively, the first control-resource set is a control-resource set with a lower configuration ranking in the two control-resource sets, and the second control-resource set is a control-resource set with a higher configuration ranking in the two control-resource sets. That is, a configuration ranking of the first control-resource set is lower than a configuration ranking of the second control-resource set. Alternatively, the first control-resource set is a control-resource set corresponding to a search space with a smaller index in the two search spaces, and the second control-resource set is a control-resource set corresponding to a search space with a larger index in the two search spaces. That is, an index of a search space associated with the first control-resource set is less than an index of a search space associated with the second control-resource set. Alternatively, the first control-resource set is a control-resource set corresponding to a search space with a larger index in the two search spaces, and the second control-resource set is a control-resource set corresponding to a search space with a smaller index in the two search spaces. That is, an index of a search space associated with the first control-resource set is greater than an index of a search space associated with the second control-resource set. Alternatively, the first control-resource set is a control-resource set corresponding to a search space with a higher configuration ranking in the two search spaces, and the second control-resource set is a control-resource set corresponding to a search space with a lower configuration ranking in the two search spaces. That is, a configuration ranking of a search space associated with the first control-resource set is higher than a configuration ranking of a search space associated with the second control-resource set. Alternatively, the first control-resource set is a control-resource set corresponding to a search space with a lower configuration ranking in the two search spaces, and the second control-resource set is a control-resource set corresponding to a search space with a higher configuration ranking in the two search spaces. That is, a configuration ranking of a search space associated with the first control-resource set is lower than a configuration ranking of a search space associated with the second control-resource set. In this implementation, some possible manners of distinguishing between the first control-resource set and the second control-resource set are shown, so that the terminal device and the network device can distinguish between the first control-resource set and the second control-resource set.

A sixth aspect of this application provides a beam determining method, including:
A terminal device determines a first measurement resource. The terminal device determines, according to a first rule, a beam used by the first measurement resource. The terminal device receives, from a network device based on the beam used by the first measurement resource, a measurement signal corresponding to the first measurement resource.

In the foregoing technical solution, the terminal device may determine, according to the first rule, the beam used by the first measurement resource, to communicate the measurement signal between the terminal device and the network device. A channel between the terminal device and the network device is measured.

A seventh aspect of this application provides a beam determining method, including:
A network device determines a first measurement resource. The network device determines, according to a first rule, a beam used by the first measurement resource. The network device sends, to a terminal device based on the beam used by the first measurement resource, a measurement signal corresponding to the first measurement resource.

In the foregoing technical solution, the network device may determine, according to the first rule, the beam used by the first measurement resource, to communicate the measurement signal between the terminal device and the network device. A channel between the terminal device and the network device is measured.

Based on the sixth aspect, in a possible implementation, that the terminal device determines, according to a first rule, a beam used by the first measurement resource includes: The terminal device determines that the first measurement resource uses a preconfigured beam corresponding to the first measurement resource. In this implementation, for a measurement resource preconfigured with a corresponding beam, the terminal device may receive, by using the preconfigured beam corresponding to the first measurement resource, the measurement signal corresponding to the first measurement resource, thereby receiving the measurement signal corresponding to the first measurement resource, to facilitate the channel measurement.

Based on the seventh aspect, in a possible implementation, that the network device determines, according to a first rule, a beam used by the first measurement resource includes: The network device determines that the first measurement resource uses a preconfigured beam corresponding to the first measurement resource. In this implementation, for a measurement resource preconfigured with a corresponding beam, the network device may send, by using the preconfigured beam corresponding to the first measurement resource, the measurement signal corresponding to the first measurement resource, so that the terminal device measures the channel.

Based on the sixth aspect, in a possible implementation, that the terminal device determines, according to a first rule, a beam used by the first measurement resource and a beam used by a second measurement resource includes: The terminal device determines that the first measurement resource uses a default beam corresponding to the first measurement resource. In this implementation, the terminal device may receive, by using the default beam corresponding to the first measurement resource, the measurement signal corresponding to the first measurement resource, thereby receiving the measurement signal, to facilitate the channel measurement.

Based on the seventh aspect, in a possible implementation, that the network device determines, according to a first rule, a beam used by the first measurement resource includes: The network device determines that the first measurement resource uses a default beam corresponding to the first measurement resource. In this implementation, the network device may send, by using the default beam corresponding to the first measurement resource, the measurement signal corresponding to the first measurement resource, thereby sending the measurement signal, to facilitate the channel measurement.

Based on the sixth aspect or the seventh aspect, in a possible implementation, measurement resources configured by the network device for the terminal device are configured in two different resource sets, and the network device indicates, to the terminal device, a first beam available for downlink transmission and a second beam available for downlink transmission. If the first measurement resource belongs to a resource set with a smaller index in the two different resource sets, that is, if an index of a resource set to which the first measurement resource belongs is less than an index of the other resource set than the resource set to which the first measurement resource belongs in the two different resource sets, the default beam corresponding to the first measurement resource is the first beam. Alternatively, if the first measurement resource belongs to a resource set with a larger index in the two different resource sets, that is, if an index of a resource set to which the first measurement resource belongs is greater than an index of the other resource set than the resource set to which the first measurement resource belongs in the two different resource sets, the default beam corresponding to the first measurement resource is the second beam. Alternatively, if the first measurement resource belongs to a resource set with a higher configuration ranking in the two different resource sets, that is, if a configuration ranking of a resource set to which the first measurement resource belongs is higher than a configuration ranking of the other resource set than the resource set to which the first measurement resource belongs in the two different resource sets, the default beam corresponding to the first measurement resource is the first beam. Alternatively, if the first measurement resource belongs to a resource set with a lower configuration ranking in the two different resource sets, that is, if a configuration ranking of a resource set to which the first measurement resource belongs is lower than a configuration ranking of the other resource set than the resource set to which the first measurement resource belongs in the two different resource sets, the default beam corresponding to the first measurement resource is the second beam. Alternatively, if the first measurement resource belongs to a resource set with a larger index in the two different resource sets, that is, if an index of a resource set to which the first measurement resource belongs is greater than an index of the other resource set than the resource set to which the first measurement resource belongs in the two different resource sets, the default beam corresponding to the first measurement resource is the first beam. Alternatively, if the first measurement resource belongs to a resource set with a lower configuration ranking in the two different resource sets, that is, if a configuration ranking of a resource set to which the first measurement resource belongs is lower than a configuration ranking of the other resource set than the resource set to which the first measurement resource belongs in the two different resource sets, the default beam corresponding to the first measurement resource is the first beam. Alternatively, if the first measurement resource belongs to a resource set with a smaller index in the two different resource sets, that is, if an index of a resource set to which the first measurement resource belongs is less than an index of the other resource set than the resource set to which the first measurement resource belongs in the two different resource sets, the default beam corresponding to the first measurement resource is the second beam. Alternatively, if the first measurement resource belongs to a resource set with a higher configuration ranking in the two different resource sets, that is, if a configuration ranking of a resource set to which the first measurement resource belongs is higher than a configuration ranking of the other resource set than the resource set to which the first measurement resource belongs in the two different resource sets, the default beam corresponding to the first measurement resource is the second beam.

In this implementation, a possible manner of determining the default beam corresponding to the first measurement resource is shown, so that an appropriate beam is determined for the first measurement resource as the default beam corresponding to the first measurement resource, to facilitate joint beam measurement between the terminal device and a plurality of TRPs.

Based on the sixth aspect or the seventh aspect, in a possible implementation, measurement resources configured by the network device for the terminal device are configured in two different resource subsets in a same resource set, and the resource set includes a resource pair; and the network device indicates, to the terminal device, a first beam available for downlink transmission and a second beam available for downlink transmission, and the first measurement resource belongs to the resource pair. If the first measurement resource is a resource with a smaller index in the resource pair, that is, if an index of the first measurement resource is less than an index of the other resource in the resource pair, the default beam corresponding to the first measurement resource is the first beam. Alternatively, if the first measurement resource is a resource with a higher configuration ranking in the resource pair, that is, if a configuration ranking of the first measurement resource is higher than a configuration ranking of the other resource in the resource pair, the default beam corresponding to the first measurement resource is the first beam. Alternatively, if the first measurement resource is a resource with a larger index in the resource pair, that is, if an index of the first measurement resource is greater than an index of the other resource in the resource pair, the default beam corresponding to the first measurement resource is the second beam. Alternatively, if the first measurement resource is a resource with a lower configuration ranking in the resource pair, that is, if a configuration ranking of the first measurement resource is lower than a configuration ranking of the other resource in the resource pair, the default beam corresponding to the first measurement resource is the second beam. Alternatively, if the first measurement resource is a resource with a larger index in the resource pair, that is, if an index of the first measurement resource is greater than an index of the other resource in the resource pair, the default beam corresponding to the first measurement resource is the first beam. Alternatively, if the first measurement resource is a resource with a lower configuration ranking in the resource pair, that is, if a configuration ranking of the first measurement resource is lower than a configuration ranking of the other resource in the resource pair, the default beam corresponding to the first measurement resource is the first beam. Alternatively, if the first measurement resource is a resource with a smaller index in the resource pair, that is, if an index of the first measurement resource is less than an index of the other resource in the resource pair, the default beam corresponding to the first measurement resource is the second beam. Alternatively, if the first measurement resource is a resource with a higher configuration ranking in the resource pair, that is, if a configuration ranking of the first measurement resource is higher than an index of the other resource in the resource pair, the default beam corresponding to the first measurement resource is the second beam.

In this implementation, another possible manner of determining the default beam corresponding to the first measurement resource is shown, so that an appropriate beam is determined for the first measurement resource as the default beam corresponding to the first measurement resource, to facilitate joint beam measurement between the terminal device and a plurality of TRPs.

Based on the sixth aspect, in a possible implementation, when a first condition is satisfied, the terminal device determines that the first measurement resource uses the default beam corresponding to the first measurement resource, where the first condition includes one or a combination of the following:
The network device configures, for the terminal device, a common beam available for downlink transmission; the network device indicates, to the terminal device, two common beams available for downlink transmission; the first measurement resource has no corresponding preconfigured beam; the first measurement resource is an aperiodic measurement resource; a time interval between a start time point occupied by the first measurement resource and a triggering time point at which a downlink control channel triggers transmission of the first measurement resource is less than a first threshold; or a time domain symbol occupied by the first measurement resource does not carry a signal other than the measurement signal corresponding to the first measurement resource. In this implementation, a condition for using, by the terminal device, the default beam corresponding to the first measurement resource is further limited.

Based on the seventh aspect, in a possible implementation, when a first condition is satisfied, the network device determines that the first measurement resource uses the default beam corresponding to the first measurement resource, where the first condition includes one or a combination of the following:
The network device configures, for the terminal device, a common beam available for downlink transmission; the network device indicates, to the terminal device, two common beams available for downlink transmission; the first measurement resource has no corresponding preconfigured beam; the first measurement resource is an aperiodic measurement resource; a time interval between a start time point occupied by the first measurement resource and a triggering time point at which a downlink control channel triggers transmission of the first measurement resource is less than a first threshold; or a time domain symbol occupied by the first measurement resource does not carry a signal other than the measurement signal corresponding to the first measurement resource. In this implementation, a condition for using, by the network device, the default beam corresponding to the first measurement resource is further limited.

Based on the sixth aspect or the seventh aspect, in a possible implementation, if a control-resource set with a smallest index in one or more control-resource sets communicated by the terminal device in a latest slot corresponds to one beam, the default beam corresponding to the first measurement resource is the beam corresponding to the control-resource set with the smallest index.

Based on the sixth aspect or the seventh aspect, in a possible implementation, measurement resources configured by the network device for the terminal device are configured in two different resource sets, and a control-resource set with a smallest index in one or more control-resource sets communicated by the terminal device in a latest slot corresponds to two beams. If the first measurement resource belongs to a resource set with a smaller index in the two different resource sets, that is, if an index of a resource set to which the first measurement resource belongs is less than an index of the other resource set than the resource set to which the first measurement resource belongs in the two different resource sets, the default beam corresponding to the first measurement resource is a 1^{st} beam in the two beams. Alternatively, if the first measurement resource belongs to a resource set with a higher configuration ranking in the two different resource sets, that is, if a configuration ranking of a resource set to which the first measurement resource belongs is higher than a configuration ranking of the other resource set than the resource set to which the first measurement resource belongs, the default beam corresponding to the first measurement resource is a 1^{st} beam in the two beams. Alternatively, if the first measurement resource belongs to a resource set with a larger index in the two different resource sets, that is, if an index of a resource set to which the first measurement resource belongs is greater than an index of the other resource set than the resource set to which the first measurement resource belongs in the two different resource sets, the default beam corresponding to the first measurement resource is a 2^{nd} beam in the two beams. Alternatively, if the first measurement resource belongs to a resource set with a lower configuration ranking in the two different resource sets, that is, if a configuration ranking of a resource set to which the first measurement resource belongs is lower than a configuration ranking of the other resource set than the resource set to which the first measurement resource belongs, the default beam corresponding to the first measurement resource is a 2^{nd} beam in the two beams. Alternatively, if the first measurement resource belongs to a resource set with a larger index in the two different resource sets, that is, if an index of a resource set to which the first measurement resource belongs is greater than an index of a resource set other than the resource set to which the first measurement resource belongs in the two different resource sets, the default beam corresponding to the first measurement resource is a 1^{st} beam in the two beams. Alternatively, if the first measurement resource belongs to a resource set with a lower configuration ranking in the two different resource sets, that is, if a configuration ranking of a resource set to which the first measurement resource belongs is lower than a configuration ranking of the other resource set than the resource set to which the first measurement resource belongs, the default beam corresponding to the first measurement resource is a 1^{st} beam in the two beams. Alternatively, if the first measurement resource belongs to a resource set with a smaller index in the two different resource sets, that is, if an index of a resource set to which the first measurement resource belongs is less than an index of a resource set other than the resource set to which the first measurement resource belongs in the two different resource sets, the default beam corresponding to the first measurement resource is a 2^{nd} beam in the two beams. Alternatively, if the first measurement resource belongs to a resource set with a higher configuration ranking in the two different resource sets, that is, if a configuration ranking of a resource set to which the first measurement resource belongs is higher than a configuration ranking of the other resource set than the resource set to which the first measurement resource belongs, the default beam corresponding to the first measurement resource is a 2^{nd} beam in the two beams.

In this implementation, another possible manner of determining the default beam corresponding to the first measurement resource is shown, so that an appropriate beam is determined for the first measurement resource as the default beam corresponding to the first measurement resource, to facilitate joint beam measurement between the terminal device and a plurality of TRPs.

Based on the sixth aspect or the seventh aspect, in a possible implementation, measurement resources configured by the network device for the terminal device are configured in two different resource subsets in a same resource set, and the resource set includes a resource pair; and a control-resource set with a smallest index in one or more control-resource sets communicated by the terminal device in a latest slot corresponds to two beams, and the first measurement resource belongs to the resource pair. If the first measurement resource is a resource with a smaller index in the resource pair, that is, if an index of the first measurement resource is less than an index of the other resource in the resource pair, the default beam corresponding to the first measurement resource is a 1^{st} beam in the two beams. Alternatively, if the first measurement resource is a resource with a higher configuration ranking in the resource pair, that is, if a configuration ranking of the first measurement resource is higher than a configuration ranking of the other resource in the resource pair, the default beam corresponding to the first measurement resource is a 1^{st} beam in the two beams. Alternatively, if the first measurement resource is a resource with a larger index in the resource pair, that is, if an index of the first measurement resource is greater than an index of the other resource in the resource pair, the default beam corresponding to the first measurement resource is a 2^{nd} beam in the two beams. Alternatively, if the first measurement resource is a resource with a lower configuration ranking in the resource pair, that is, if a configuration ranking of the first measurement resource is lower than a configuration ranking of the other resource in the resource pair, the default beam corresponding to the first measurement resource is a 2^{nd} beam in the two beams. Alternatively, if the first measurement resource is a resource with a larger index in the resource pair, that is, if an index of the first measurement resource is greater than an index of the other resource in the resource pair, the default beam corresponding to the first measurement resource is a 2^{nd} beam in the two beams. Alternatively, if the first measurement resource is a resource with a lower configuration ranking in the resource pair, that is, if a configuration ranking of the first measurement resource is lower than a configuration ranking of the other resource in the resource pair, the default beam corresponding to the first measurement resource is a 2^{nd} beam in the two beams. Alternatively, if the first measurement resource is a resource with a smaller index in the resource pair, that is, if an index of the first measurement resource is less than an index of the other resource in the resource pair, the default beam corresponding to the first measurement resource is a 1^{st} beam in the two beams. Alternatively, if the first measurement resource is a resource with a higher configuration ranking in the resource pair, that is, if a configuration ranking of the first measurement resource is higher than an index of the other resource in the resource pair, the default beam corresponding to the first measurement resource is a 1^{st} beam in the two beams.

In this implementation, another possible manner of determining the default beam corresponding to the first measurement resource is shown, so that an appropriate beam is determined for the first measurement resource as the default beam corresponding to the first measurement resource, to facilitate joint beam measurement between the terminal device and a plurality of TRPs.

Based on the sixth aspect, in a possible implementation, when a second condition is satisfied, the terminal device determines that the first measurement resource uses the default beam corresponding to the first measurement resource, where the second condition includes one or a combination of the following: The network device does not configure, for the terminal device, a common beam available for downlink transmission; the network device does not indicate, to the terminal device, a common beam available for downlink transmission; the first measurement resource has no corresponding preconfigured beam; the first measurement resource is an aperiodic measurement resource; a time interval between a start time domain position occupied by the first measurement resource and a triggering time point at which a downlink control channel triggers transmission of the first measurement resource is less than a first threshold; a time domain symbol occupied by the first measurement resource does not carry a signal other than the measurement signal corresponding to the first measurement resource; the network device configures a single frequency network scheme A (sfnSchemeA) for the terminal device, where in the single frequency network scheme A, one control-resource set of the terminal device corresponds to two beams, and a physical downlink control channel corresponding to the control-resource set is simultaneously sent by using the two beams corresponding to the control-resource set; or the network device does not configure a first parameter for the terminal device, where the first parameter indicates the terminal device to receive a downlink shared channel of the terminal device by using two default beams.

Based on the seventh aspect, in a possible implementation, when a second condition is satisfied, the network device determines that the first measurement resource uses the default beam corresponding to the first measurement resource, where the second condition includes one or a combination of the following: The network device does not configure, for the terminal device, a common beam available for downlink transmission; the network device does not indicate, to the terminal device, a common beam available for downlink transmission; the first measurement resource has no corresponding preconfigured beam; the first measurement resource is an aperiodic measurement resource; a time interval between a start time domain position occupied by the first measurement resource and a triggering time point at which a downlink control channel triggers transmission of the first measurement resource is less than a first threshold; a time domain symbol occupied by the first measurement resource does not carry a signal other than the measurement signal corresponding to the first measurement resource; the network device configures a single frequency network scheme A (sfnSchemeA) for the terminal device, where in the single frequency network scheme A, one control-resource set of the terminal device corresponds to two beams, and a physical downlink control channel corresponding to the control-resource set is simultaneously sent by using the two beams corresponding to the control-resource set; or the network device does not configure a first parameter for the terminal device, where the first parameter indicates the terminal device to receive a downlink shared channel of the terminal device by using two default beams.

Based on the sixth aspect or the seventh aspect, in a possible implementation, measurement resources configured by the network device for the terminal device are configured in two different resource sets, the network device indicates transmission configuration indicator (transmission configuration indicator, TCI)-states to the terminal device by using downlink control information (downlink control information, DCI), and a TCI field in the DCI includes at least one TCI field value. If the first measurement resource belongs to a resource set with a smaller index in the two different resource sets, that is, if an index of a resource set to which the first measurement resource belongs is less than an index of a resource set other than the resource set to which the first measurement resource belongs in the two different resource sets, the default beam corresponding to the first measurement resource is a beam corresponding to a 1^{st} TCI state in two TCI states indicated by a first TCI field value, where the first TCI field value is a smallest TCI field value in TCI field values indicating two TCI states in the at least one TCI field value. Alternatively, if the first measurement resource belongs to a resource set with a higher configuration ranking in the two different resource sets, that is, if a configuration ranking of a resource set to which the first measurement resource belongs is higher than a configuration ranking of the other resource set than the resource set to which the first measurement resource belongs, the default beam corresponding to the first measurement resource is a beam corresponding to a 1^{st} TCI state in two TCI states indicated by a first TCI field value. Alternatively, if the first measurement resource belongs to a resource set with a larger index in the two different resource sets, that is, if an index of a resource set to which the first measurement resource belongs is greater than an index of a resource set other than the resource set to which the first measurement resource belongs in the two different resource sets, the default beam corresponding to the first measurement resource is a beam corresponding to a 2^{nd} TCI state in two TCI states indicated by a first TCI field value. Alternatively, if the first measurement resource belongs to a resource set with a lower configuration ranking in the two different resource sets, that is, if a configuration ranking of a resource set to which the first measurement resource belongs is lower than a configuration ranking of the other resource set than the resource set to which the first measurement resource belongs, the default beam corresponding to the first measurement resource is a beam corresponding to a 2^{nd} TCI state in two TCI states indicated by a first TCI field value. Alternatively, if the first measurement resource belongs to a resource set with a larger index in the two different resource sets, that is, if an index of a resource set to which the first measurement resource belongs is greater than an index of a resource set other than the resource set to which the first measurement resource belongs in the two different resource sets, the default beam corresponding to the first measurement resource is a beam corresponding to a 1^{st} TCI state in two TCI states indicated by a first TCI field value. Alternatively, if the first measurement resource belongs to a resource set with a lower configuration ranking in the two different resource sets, that is, if a configuration ranking of a resource set to which the first measurement resource belongs is lower than a configuration ranking of the other resource set than the resource set to which the first measurement resource belongs, the default beam corresponding to the first measurement resource is a beam corresponding to a 1^{st} TCI state in two TCI states indicated by a first TCI field value. Alternatively, if the first measurement resource belongs to a resource set with a smaller index in the two different resource sets, that is, if an index of a resource set to which the first measurement resource belongs is less than an index of a resource set other than the resource set to which the first measurement resource belongs in the two different resource sets, the default beam corresponding to the first measurement resource is a beam corresponding to a 2^{nd} TCI state in two TCI states indicated by a first TCI field value. Alternatively, if the first measurement resource belongs to a resource set with a higher configuration ranking in the two different resource sets, that is, if a configuration ranking of a resource set to which the first measurement resource belongs is higher than a configuration ranking of the other resource set than the resource set to which the first measurement resource belongs, the default beam corresponding to the first measurement resource is a beam corresponding to a 2^{nd} TCI state in two TCI states indicated by a first TCI field value.

In this implementation, another possible manner of determining the default beam corresponding to the first measurement resource is shown, so that an appropriate beam is determined for the first measurement resource as the default beam corresponding to the first measurement resource, to facilitate joint beam measurement between the terminal device and a plurality of TRPs.

Based on the sixth aspect or the seventh aspect, in a possible implementation, measurement resources configured by the network device for the terminal device are configured in two different resource subsets in a same resource set, and the resource set includes a resource pair; and the network device indicates TCI states to the terminal device by using DCI, a TCI field in the DCI includes at least one TCI field value, and the first measurement resource belongs to the resource pair. If the first measurement resource is a resource with a smaller index in the resource pair, that is, if an index of the first measurement resource is less than an index of the other resource in the resource pair, the default beam corresponding to the first measurement resource is a beam corresponding to a 1^{st} TCI state in two TCI states indicated by a first TCI field value, where the first TCI field value is a smallest TCI field value in TCI field values indicating two TCI states in the at least one TCI field value. Alternatively, if the first measurement resource is a resource with a higher configuration ranking in the resource pair, that is, if a configuration ranking of the first measurement resource is higher than a configuration ranking of the other resource in the resource pair, the default beam corresponding to the first measurement resource is a beam corresponding to a 1^{st} TCI state in two TCI states indicated by a first TCI field value. Alternatively, if the first measurement resource is a resource with a larger index in two different resource sets, that is, if an index of the first measurement resource is greater than an index of the other resource in the resource pair, the default beam corresponding to the first measurement resource is a beam corresponding to a 2^{nd} TCI state in two TCI states indicated by a first TCI field value. Alternatively, if the first measurement resource is a resource with a lower configuration ranking in the resource pair, that is, if a configuration ranking of the first measurement resource is lower than a configuration ranking of the other resource in the resource pair, the default beam corresponding to the first measurement resource is a beam corresponding to a 2^{nd} TCI state in two TCI states indicated by a first TCI field value. Alternatively, if the first measurement resource is a resource with a larger index in the resource pair, that is, if an index of the first measurement resource is greater than an index of the other resource in the resource pair, the default beam corresponding to the first measurement resource is a beam corresponding to a 1^{st} TCI state in two TCI states indicated by a first TCI field value. Alternatively, if the first measurement resource is a resource with a lower configuration ranking in the resource pair, that is, if a configuration ranking of the first measurement resource is lower than a configuration ranking of the other resource in the resource pair, the default beam corresponding to the first measurement resource is a beam corresponding to a 1^{st} TCI state in two TCI states indicated by a first TCI field value. Alternatively, if the first measurement resource is a resource with a smaller index in the resource pair, that is, if an index of the first measurement resource is less than an index of the other resource in the resource pair, the default beam corresponding to the first measurement resource is a beam corresponding to a 2^{nd} TCI state in two TCI states indicated by a first TCI field value. Alternatively, if the first measurement resource is a resource with a higher configuration ranking in the resource pair, that is, if a configuration ranking of the first measurement resource is higher than an index of the other resource in the resource pair, the default beam corresponding to the first measurement resource is a beam corresponding to a 2^{nd} TCI state in two TCI states indicated by a first TCI field value.

In this implementation, another possible manner of determining the default beam corresponding to the first measurement resource is shown, so that an appropriate beam is determined for the first measurement resource as the default beam corresponding to the first measurement resource, to facilitate joint beam measurement between the terminal device and a plurality of TRPs.

Based on the sixth aspect, in a possible implementation, when a third condition is satisfied, the terminal device determines that the first measurement resource uses the default beam corresponding to the first measurement resource, where the third condition includes one or a combination of the following: The network device does not configure, for the terminal device, a common beam available for downlink transmission; the network device does not indicate, to the terminal device, a common beam available for downlink transmission; the first measurement resource has no corresponding preconfigured beam; the first measurement resource is an aperiodic measurement resource; a time interval between a start time point occupied by the first measurement resource and a triggering time point at which a physical downlink control channel triggers transmission of the first measurement resource is less than a first threshold; a time domain symbol occupied by the first measurement resource does not carry a signal other than the measurement signal corresponding to the first measurement resource; or the network device configures a first parameter for the terminal device, where the first parameter is used by the terminal device to receive a physical downlink shared channel of the terminal device by using two default beams.

Based on the seventh aspect, in a possible implementation, when a third condition is satisfied, the network device determines that the first measurement resource uses the default beam corresponding to the first measurement resource, where the third condition includes one or a combination of the following: The network device does not configure, for the terminal device, a common beam available for downlink transmission; the network device does not indicate, to the terminal device, a common beam available for downlink transmission; the first measurement resource has no corresponding preconfigured beam; the first measurement resource is an aperiodic measurement resource; a time interval between a start time point occupied by the first measurement resource and a triggering time point at which a physical downlink control channel triggers transmission of the first measurement resource is less than a first threshold; a time domain symbol occupied by the first measurement resource does not carry a signal other than the measurement signal corresponding to the first measurement resource; or the network device configures a first parameter for the terminal device, where the first parameter is used by the terminal device to receive a physical downlink shared channel of the terminal device by using two default beams.

Based on any one of the first aspect to the seventh aspect, in a possible implementation, the first beam and the second beam include any one of the following:
The first beam is a beam with a smaller index in the two common beams available for downlink transmission, and the second beam is a beam with a larger index in the two common beams available for downlink transmission. That is, an index of the first beam is less than an index of the second beam.

Alternatively, the first beam is a beam with a higher configuration ranking in the two common beams available for downlink transmission, and the second beam is a beam with a lower configuration ranking in the two common beams available for downlink transmission. That is, a configuration ranking of the first beam is higher than a configuration ranking of the second beam.

Alternatively, the first beam belongs to the first beam set, and the second beam belongs to the second beam set, where the first beam set and the second beam set are two beam sets that are of a same type and that are configured by the network device for the terminal device; and the first beam set is a beam set with a smaller index in the two beam sets of the same type, and the second beam set is a beam set with a larger index in the two beam sets. That is, an index of the first beam set is less than an index of the second beam set. Alternatively, the first beam set is a beam set with a higher configuration ranking in the two beam sets of the same type, and the second beam set is a beam set with a lower configuration ranking in the two beam sets. That is, a configuration ranking of the first beam set is higher than a configuration ranking of the second beam set.

Alternatively, the first beam belongs to a first beam group, and the second beam belongs to a second beam group, where the first beam group and the second beam group are two beam groups that are of a same type and that are activated by the network device by using a medium access control control element (medium access control control element, MAC CE); and the first beam group is a beam group with a smaller index in the two beam groups of the same type, and the second beam group is a beam group with a larger index in the two beam groups of the same type. That is, an index of the first beam group is less than an index of the second beam group. Alternatively, the first beam group is a beam group with a higher ranking of activation in the MAC CE in the two beam groups of the same type, and the second beam group is a beam group with a lower ranking of activation in the MAC CE in the two beam groups of the same type. That is, an activation ranking of the first beam group is higher than an activation ranking of the second beam group.

Alternatively, the first beam is a beam corresponding to a smaller transmission configuration indicator (transmission configuration indicator, TCI) field value in the two common beams available for downlink transmission, and the second beam is a beam corresponding to a larger TCI field value in the two common beams available for downlink transmission. That is, a TCI field value corresponding to the first beam is less than a TCI field value corresponding to the second beam.

Alternatively, the first beam is a beam indicated by a 1^{st} transmission configuration indicator TCI field in downlink control information (downlink control information, DCI), and the second beam is a beam indicated by a 2^{nd} TCI field in the DCI.

Alternatively, the first beam is a beam corresponding to a 1^{st} part of field values in all field values of a TCI field in DCI, and the second beam is a beam corresponding to a 2^{nd} part of field values in all the field values of the TCI field in the DCI.

Alternatively, the first beam and the second beam are two beams that are of a same type and that are indicated by a same TCI field in DCI, the first beam is a beam with a higher ranking of activation in a MAC CE in the two beams of the same type, and the second beam is a beam with a lower ranking of activation in the MAC CE in the two beams of the same type. That is, an activation ranking of the first beam is higher than an activation ranking of the second beam.

Alternatively, the first beam is a beam indicated by first DCI, and the second beam is a beam indicated by second DCI, where the first DCI is DCI carried on a physical downlink control channel corresponding to a first control-resource set group in two control-resource set groups configured by the network device for the terminal device, the second DCI is DCI carried on a physical downlink control channel corresponding to a second control-resource set group in the two control-resource set groups, the first control-resource set group is a control-resource set group with a smaller group index in the two control-resource set groups, and the second control-resource set group is a control-resource set group with a larger group index in the two control-resource set groups. That is, a group index of the first control-resource set group is less than a group index of the second control-resource set group. Alternatively, a value of a first field in the first DCI indicates that a beam indicated by the first DCI is the first beam, and a value of a first field in the second DCI indicates that a beam indicated by the second DCI is the second beam.

In this implementation, some possible manners of distinguishing between the first beam and the second beam are shown, so that the terminal device and the network device distinguish between the first beam and the second beam.

An eighth aspect of this application provides a communication apparatus, including:
a processing module, configured to determine, in a first beam and a second beam based on a beam parameter corresponding to a first control-resource set and a beam parameter corresponding to a second control-resource set, a beam used by the first control-resource set and a beam used by the second control-resource set, where the first beam and the second beam are two common beams available for downlink transmission, that is, the first beam and the second beam are both the common beams available for downlink transmission; and the first control-resource set and the second control-resource set are two control-resource sets for physical downlink control channel repetition transmission, that is, the first control-resource set and the second control-resource set are both for physical downlink control channel repetition transmission; and
a transceiver module, configured to receive, based on the beam used by the first control-resource set, a physical downlink control channel corresponding to the first control-resource set, and receive, based on the beam used by the second control-resource set, a physical downlink control channel corresponding to the second control-resource set.

Based on the eighth aspect, in a possible implementation, the first beam and the second beam are the two common beams that are available for downlink transmission and that are indicated by the network device to the communication apparatus.

Based on the eighth aspect, in a possible implementation, for either of the first control-resource set and the second control-resource set, when a value of a beam parameter corresponding to the control-resource set is a first value, the control-resource set uses the first beam; when a value of a beam parameter corresponding to the control-resource set is a second value, the control-resource set uses the second beam; or when a value of a beam parameter corresponding to the control-resource set is a third value, the control-resource set uses the first beam and the second beam.

Based on the eighth aspect, in a possible implementation, a value of the beam parameter corresponding to the first control-resource set and a value of the beam parameter corresponding to the second control-resource set are configured or indicated by the network device; and the beam parameter corresponding to the first control-resource set and the beam parameter corresponding to the second control-resource set satisfy at least one of the following: Neither the value of the beam parameter corresponding to the first control-resource set nor the value of the beam parameter corresponding to the second control-resource set is the third value; the value of the beam parameter corresponding to the first control-resource set is different from the value of the beam parameter corresponding to the second control-resource set; a value of a beam parameter corresponding to one of the first control-resource set and the second control-resource set is the first value, and a value of a beam parameter corresponding to the other control-resource set is the second value; the value of the beam parameter corresponding to the first control-resource set is the first value, and the value of the beam parameter corresponding to the second control-resource set is the second value; or the value of the beam parameter corresponding to the first control-resource set is the second value, and the value of the beam parameter corresponding to the second control-resource set is the first value.

Based on the eighth aspect, in a possible implementation, the value of the beam parameter corresponding to the first control-resource set and the value of the beam parameter corresponding to the second control-resource set are configured or indicated by the network device; and the beam used by the first control-resource set and the beam used by the second control-resource set satisfy at least one of the following: The first control-resource set is not configured or is not indicated to use the first beam and the second beam, and the second control-resource set is not configured or is not indicated not to use the first beam and the second beam; the first control-resource set and the second control-resource set use different beams; one of the first control-resource set and the second control-resource set uses the first beam, and the other control-resource set uses the second beam; the first control-resource set uses the first beam, and the second control-resource set uses the second beam; or the first control-resource set uses the second beam, and the second control-resource set uses the first beam.

Based on the eighth aspect, in a possible implementation, a value of a beam parameter corresponding to one of the first control-resource set and the second control-resource set is default, and a value of a beam parameter corresponding to the other control-resource set is configured by the network device, where the default value of the beam parameter corresponding to the one of the first control-resource set and the second control-resource set is determined based on the value of the beam parameter corresponding to the other control-resource set.

Based on the eighth aspect, in a possible implementation, that the value of the beam parameter corresponding to the one of the first control-resource set and the second control-resource set is determined based on the value of the beam parameter corresponding to the other control-resource set includes: If the value of the beam parameter corresponding to the other control-resource set is the first value, the default value of the beam parameter corresponding to the one of the first control-resource set and the second control-resource set is the second value; or if the value of the beam parameter corresponding to the other control-resource set is the second value, the default value of the beam parameter corresponding to the one of the first control-resource set and the second control-resource set is the first value. In other words, if the other control-resource set uses the first beam, the one of the first control-resource set and the second control-resource set uses the second beam; or if the other control-resource set uses the second beam, the one of the first control-resource set and the second control-resource set uses the first beam.

Based on the eighth aspect, in a possible implementation, a value of the beam parameter corresponding to the first control-resource set and a value of the beam parameter corresponding to the second control-resource set are both default; and the default value of the beam parameter corresponding to the first control-resource set is the first value, and the default value of the beam parameter corresponding to the second control-resource set is the second value; or the default value of the beam parameter corresponding to the first control-resource set is the second value, and the default value of the beam parameter corresponding to the second control-resource set is the first value. In other words, the first control-resource set uses the first beam by default, and the second control-resource set uses the second beam by default; or the first control-resource set uses the second beam by default, and the second control-resource set uses the first beam by default.

Based on the eighth aspect, in a possible implementation, when a first condition is satisfied, the communication apparatus determines, in the first beam and the second beam based on the beam parameter corresponding to the first control-resource set and the beam parameter corresponding to the second control-resource set, the beam used by the first control-resource set and the beam used by the second control-resource set, where the first condition includes at least one or a combination of the following: The network device configures the first control-resource set and the second control-resource set to each use a common beam; the network device configures common beams for the communication apparatus; the network device configures, for the communication apparatus, two groups of common beams available for downlink transmission; or index values of control-resource set pools associated with all control-resource sets configured by the network device for the communication apparatus are the same, or all control-resource sets configured by the network device for a terminal device are associated with a same control-resource set pool.

A ninth aspect of this application provides a communication apparatus, including:
a processing module, configured to determine, in a first beam and a second beam based on a beam parameter corresponding to a first control-resource set and a beam parameter corresponding to a second control-resource set, a beam used by the first control-resource set and a beam used by the second control-resource set, where the first beam and the second beam are two common beams available for downlink transmission, that is, the first beam and the second beam are both the common beams available for downlink transmission; and the first control-resource set and the second control-resource set are two control-resource sets for physical downlink control channel repetition transmission, that is, the first control-resource set and the second control-resource set are both for physical downlink control channel repetition transmission; and
a transceiver module, configured to send, based on the beam used by the first control-resource set, a physical downlink control channel corresponding to the first control-resource set, and send, based on the beam used by the second control-resource set, a physical downlink control channel corresponding to the second control-resource set.

Based on the ninth aspect, in a possible implementation, the first beam and the second beam are the two common beams that are available for downlink transmission and that are indicated by the communication apparatus to the terminal device.

Based on the ninth aspect, in a possible implementation, for either of the first control-resource set and the second control-resource set, when a value of a beam parameter corresponding to the control-resource set is a first value, the control-resource set uses the first beam; when a value of a beam parameter corresponding to the control-resource set is a second value, the control-resource set uses the second beam; or when a value of a beam parameter corresponding to the control-resource set is a third value, the control-resource set uses the first beam and the second beam.

Based on the ninth aspect, in a possible implementation, a value of the beam parameter corresponding to the first control-resource set and a value of the beam parameter corresponding to the second control-resource set are configured or indicated by the communication apparatus; and the beam parameter corresponding to the first control-resource set and the beam parameter corresponding to the second control-resource set satisfy at least one of the following: Neither the value of the beam parameter corresponding to the first control-resource set nor the value of the beam parameter corresponding to the second control-resource set is the third value; the value of the beam parameter corresponding to the first control-resource set is different from the value of the beam parameter corresponding to the second control-resource set; a value of a beam parameter corresponding to one of the first control-resource set and the second control-resource set is the first value, and a value of a beam parameter corresponding to the other control-resource set is the second value; the value of the beam parameter corresponding to the first control-resource set is the first value, and the value of the beam parameter corresponding to the second control-resource set is the second value; or the value of the beam parameter corresponding to the first control-resource set is the second value, and the value of the beam parameter corresponding to the second control-resource set is the first value.

Based on the ninth aspect, in a possible implementation, the value of the beam parameter corresponding to the first control-resource set and the value of the beam parameter corresponding to the second control-resource set are configured or indicated by the communication apparatus; and the beam used by the first control-resource set and the beam used by the second control-resource set satisfy at least one of the following: The first control-resource set is not configured or is not indicated to use the first beam and the second beam, and the second control-resource set is not configured or is not indicated not to use the first beam and the second beam; the first control-resource set and the second control-resource set use different beams; one of the first control-resource set and the second control-resource set uses the first beam, and the other control-resource set uses the second beam; the first control-resource set uses the first beam, and the second control-resource set uses the second beam; or the first control-resource set uses the second beam, and the second control-resource set uses the first beam.

Based on the ninth aspect, in a possible implementation, a value of a beam parameter corresponding to one of the first control-resource set and the second control-resource set is default, and a value of a beam parameter corresponding to the other control-resource set is configured by the communication apparatus, where the default value of the beam parameter corresponding to the one of the first control-resource set and the second control-resource set is determined based on the value of the beam parameter corresponding to the other control-resource set.

Based on the ninth aspect, in a possible implementation, that the value of the beam parameter corresponding to the one of the first control-resource set and the second control-resource set is determined based on the value of the beam parameter corresponding to the other control-resource set includes: If the value of the beam parameter corresponding to the other control-resource set is the first value, the default value of the beam parameter corresponding to the one of the first control-resource set and the second control-resource set is the second value; or if the value of the beam parameter corresponding to the other control-resource set is the second value, the default value of the beam parameter corresponding to the one of the first control-resource set and the second control-resource set is the first value. In other words, if the other control-resource set uses the first beam, the one of the first control-resource set and the second control-resource set uses the second beam; or if the other control-resource set uses the second beam, the one of the first control-resource set and the second control-resource set uses the first beam.

Based on the ninth aspect, in a possible implementation, a value of the beam parameter corresponding to the first control-resource set and a value of the beam parameter corresponding to the second control-resource set are both default; and the default value of the beam parameter corresponding to the first control-resource set is the first value, and the default value of the beam parameter corresponding to the second control-resource set is the second value; or the default value of the beam parameter corresponding to the first control-resource set is the second value, and the default value of the beam parameter corresponding to the second control-resource set is the first value. In other words, the first control-resource set uses the first beam by default, and the second control-resource set uses the second beam by default; or the first control-resource set uses the second beam by default, and the second control-resource set uses the first beam by default.

Based on the ninth aspect, in a possible implementation, when a first condition is satisfied, the communication apparatus determines, in the first beam and the second beam based on the beam parameter corresponding to the first control-resource set and the beam parameter corresponding to the second control-resource set, the beam used by the first control-resource set and the beam used by the second control-resource set, where the first condition includes at least one or a combination of the following: The communication apparatus configures the first control-resource set and the second control-resource set to each use a common beam; the communication apparatus configures common beams for the terminal device; the communication apparatus configures, for the terminal device, two groups of common beams available for downlink transmission; or index values of control-resource set pools associated with all control-resource sets configured by the communication apparatus for the terminal device are the same, or all control-resource sets configured by the communication apparatus for the terminal device are associated with a same control-resource set pool.

Based on the eighth aspect or the ninth aspect, in a possible implementation, the first control-resource set and the second control-resource set are control-resource sets respectively associated with two search spaces for physical downlink control channel repetition transmission. That is, the first control-resource set and the second control-resource set are respectively associated with different search spaces. The first control-resource set is a control-resource set with a smaller index in the two control-resource sets, and the second control-resource set is a control-resource set with a larger index in the two control-resource sets. That is, an index of the first control-resource set is less than an index of the second control-resource set. Alternatively, the first control-resource set is a control-resource set with a larger index in the two control-resource sets, and the second control-resource set is a control-resource set with a smaller index in the two control-resource sets. That is, an index of the first control-resource set is greater than an index of the second control-resource set. Alternatively, the first control-resource set is a control-resource set with a higher configuration ranking in the two control-resource sets, and the second control-resource set is a control-resource set with a lower configuration ranking in the two control-resource sets. That is, a configuration ranking of the first control-resource set is higher than a configuration ranking of the second control-resource set. Alternatively, the first control-resource set is a control-resource set with a lower configuration ranking in the two control-resource sets, and the second control-resource set is a control-resource set with a higher configuration ranking in the two control-resource sets. That is, a configuration ranking of the first control-resource set is lower than a configuration ranking of the second control-resource set. Alternatively, the first control-resource set is a control-resource set corresponding to a search space with a smaller index in the two search spaces, and the second control-resource set is a control-resource set corresponding to a search space with a larger index in the two search spaces. That is, an index of a search space associated with the first control-resource set is less than an index of a search space associated with the second control-resource set. Alternatively, the first control-resource set is a control-resource set corresponding to a search space with a higher configuration ranking in the two search spaces, and the second control-resource set is a control-resource set corresponding to a search space with a lower configuration ranking in the two search spaces. That is, a configuration ranking of a search space associated with the first control-resource set is higher than a configuration ranking of a search space associated with the second control-resource set. Alternatively, the first control-resource set is a control-resource set corresponding to a search space with a lower configuration ranking in the two search spaces, and the second control-resource set is a control-resource set corresponding to a search space with a higher configuration ranking in the two search spaces. That is, a configuration ranking of a search space associated with the first control-resource set is lower than a configuration ranking of a search space associated with the second control-resource set.

A tenth aspect of this application provides a communication apparatus, including:
a processing module, configured to: determine a first control-resource set and a second control-resource set that are configured by a network device, where the first control-resource set and the second control-resource set are two control-resource sets for physical downlink control channel repetition transmission, that is, the first control-resource set and the second control-resource set are both for physical downlink control channel repetition transmission; and the first control-resource set uses a common beam, and the second control-resource set uses a dedicated beam; when a value of a beam parameter corresponding to the first control-resource set is default, determine, based on the dedicated beam used by the second control-resource set, the default value of the beam parameter corresponding to the first control-resource set; and determine, in a first beam and a second beam based on the default value of the beam parameter corresponding to the first control-resource set, the beam used by the first control-resource set, where the first beam and the second beam are two common beams available for downlink transmission, that is, the first beam and the second beam are both the common beams available for downlink transmission.

An eleventh aspect of this application provides a beam determining method, including:
a processing module, configured to: determine a first control-resource set and a second control-resource set that are configured for a terminal device, where the first control-resource set and the second control-resource set are two control-resource sets for physical downlink control channel repetition transmission, that is, the first control-resource set and the second control-resource set are both for physical downlink control channel repetition transmission; and the first control-resource set uses a common beam, and the second control-resource set uses a dedicated beam; when a value of a beam parameter corresponding to the first control-resource set is default, determine, based on the dedicated beam used by the second control-resource set, the default value of the beam parameter corresponding to the first control-resource set; and determine, in a first beam and a second beam based on the default value of the beam parameter corresponding to the first control-resource set, the beam used by the first control-resource set, where the first beam and the second beam are two common beams available for downlink transmission, that is, the first beam and the second beam are both the common beams available for downlink transmission.

Based on the tenth aspect, in a possible implementation, the first beam and the second beam are the two common beams that are available for downlink transmission and that are indicated by the network device to the communication apparatus.

Based on the eleventh aspect, in a possible implementation, the first beam and the second beam are the two common beams that are available for downlink transmission and that are indicated by a communication apparatus to the terminal device.

Based on the tenth aspect or the eleventh aspect, in a possible implementation, when the default value of the beam parameter corresponding to the first control-resource set is a first value, the first control-resource set uses the first beam; when the default value of the beam parameter corresponding to the first control-resource set is a second value, the first control-resource set uses the second beam; or when the default value of the beam parameter corresponding to the first control-resource set is a third value, the first control-resource set uses the first beam and the second beam.

Based on the tenth aspect, in a possible implementation, the default value of the beam parameter corresponding to the first control-resource set is one of the first value and the second value, and a beam indicated by the default value of the beam parameter corresponding to the first control-resource set and the dedicated beam used by the second control-resource set belong to two different beam sets, where the two different beam sets are two beam sets configured or activated by the network device for the communication apparatus. In other words, the first control-resource set uses one of the first beam and the second beam, and the beam used by the first control-resource set and the dedicated beam used by the second control-resource set belong to the two different beam sets.

Based on the eleventh aspect, in a possible implementation, the default value of the beam parameter corresponding to the first control-resource set is one of the first value and the second value, and a beam indicated by the default value of the beam parameter corresponding to the first control-resource set and the dedicated beam used by the second control-resource set belong to two different beam sets, where the two different beam sets are two beam sets configured or activated by the communication apparatus for the terminal device. In other words, the first control-resource set uses one of the first beam and the second beam, and the beam used by the first control-resource set and the dedicated beam used by the second control-resource set belong to the two different beam sets.

Based on the tenth aspect or the eleventh aspect, in a possible implementation, the beam used by the first control-resource set belongs to a first beam set, and the beam used by the second control-resource set belongs to a second beam set; and the first beam set corresponds to a first transmission reception point TRP, and the second beam set corresponds to a second TRP.

A twelfth aspect of this application provides a communication apparatus, including:
a processing module, configured to: determine a first control-resource set and a second control-resource set that are configured for a terminal device, where the first control-resource set and the second control-resource set are two control-resource sets for physical downlink control channel repetition transmission, that is, the first control-resource set and the second control-resource set are both for physical downlink control channel repetition transmission; and the first control-resource set uses a common beam, and the second control-resource set uses a dedicated beam; determine, based on the dedicated beam used by the second control-resource set, a configuration value of a beam parameter corresponding to the first control-resource set; and determine, in a first beam and a second beam based on the configuration value of the beam parameter corresponding to the first control-resource set, the beam used by the first control-resource set, where the first beam and the second beam are two common beams available for downlink transmission, that is, the first beam and the second beam are both the common beams available for downlink transmission.

Based on the twelfth aspect, in a possible implementation, the first beam and the second beam are the two common beams that are available for downlink transmission and that are indicated by the communication apparatus to the terminal device.

Based on the twelfth aspect, in a possible implementation, when the configuration value of the beam parameter corresponding to the first control-resource set is a first value, the first control-resource set uses the first beam; when the configuration value of the beam parameter corresponding to the first control-resource set is a second value, the first control-resource set uses the second beam; or when the configuration value of the beam parameter corresponding to the first control-resource set is a third value, the first control-resource set uses the first beam and the second beam.

Based on the twelfth aspect, in a possible implementation, the configuration value of the beam parameter corresponding to the first control-resource set is one of the first value and the second value, and a beam indicated by the configuration value of the beam parameter corresponding to the first control-resource set and the dedicated beam used by the second control-resource set belong to two different beam sets, where the two different beam sets are two beam sets configured or activated by the communication apparatus for the terminal device. In other words, the first control-resource set uses one of the first beam and the second beam, and the beam used by the first control-resource set and the dedicated beam used by the second control-resource set belong to the different beam sets.

Based on the twelfth aspect, in a possible implementation, the beam used by the first control-resource set belongs to a first beam set, and the beam used by the second control-resource set belongs to a second beam set; and the first beam set corresponds to a first transmission reception point TRP, and the second beam set corresponds to a second TRP.

Based on the tenth aspect, the eleventh aspect, or the twelfth aspect, in a possible implementation, the first control-resource set and the second control-resource set are control-resource sets respectively associated with two search spaces for physical downlink control channel repetition transmission. That is, the first control-resource set and the second control-resource set are respectively associated with different search spaces. The first control-resource set is a control-resource set with a smaller index in the two control-resource sets, and the second control-resource set is a control-resource set with a larger index in the two control-resource sets. That is, an index of the first control-resource set is less than an index of the second control-resource set. Alternatively, the first control-resource set is a control-resource set with a larger index in the two control-resource sets, and the second control-resource set is a control-resource set with a smaller index in the two control-resource sets. That is, an index of the first control-resource set is greater than an index of the second control-resource set. Alternatively, the first control-resource set is a control-resource set with a higher configuration ranking in the two control-resource sets, and the second control-resource set is a control-resource set with a lower configuration ranking in the two control-resource sets. That is, a configuration ranking of the first control-resource set is higher than a configuration ranking of the second control-resource set. Alternatively, the first control-resource set is a control-resource set with a lower configuration ranking in the two control-resource sets, and the second control-resource set is a control-resource set with a higher configuration ranking in the two control-resource sets. That is, a configuration ranking of the first control-resource set is lower than a configuration ranking of the second control-resource set. Alternatively, the first control-resource set is a control-resource set corresponding to a search space with a smaller index in the two search spaces, and the second control-resource set is a control-resource set corresponding to a search space with a larger index in the two search spaces. That is, an index of a search space associated with the first control-resource set is less than an index of a search space associated with the second control-resource set. Alternatively, the first control-resource set is a control-resource set corresponding to a search space with a higher configuration ranking in the two search spaces, and the second control-resource set is a control-resource set corresponding to a search space with a lower configuration ranking in the two search spaces. That is, a configuration ranking of a search space associated with the first control-resource set is higher than a configuration ranking of a search space associated with the second control-resource set. Alternatively, the first control-resource set is a control-resource set corresponding to a search space with a lower configuration ranking in the two search spaces, and the second control-resource set is a control-resource set corresponding to a search space with a higher configuration ranking in the two search spaces. That is, a configuration ranking of a search space associated with the first control-resource set is lower than a configuration ranking of a search space associated with the second control-resource set.

A thirteenth aspect of this application provides a communication apparatus, including:
a processing module, configured to determine a first measurement resource, and determine, according to a first rule, a beam used by the first measurement resource; and
a transceiver module, configured to receive, from a network device based on the beam used by the first measurement resource, a measurement signal corresponding to the first measurement resource.

Based on the thirteenth aspect, in a possible implementation, the processing module is specifically configured to:
determine that the first measurement resource uses a preconfigured beam corresponding to the first measurement resource.

Based on the thirteenth aspect, in a possible implementation, the processing module is specifically configured to:
determine that the first measurement resource uses a default beam corresponding to the first measurement resource.

Based on the thirteenth aspect, in a possible implementation, measurement resources configured by the network device for the communication apparatus are configured in two different resource sets, and the network device indicates, to the communication apparatus, a first beam available for downlink transmission and a second beam available for downlink transmission. If the first measurement resource belongs to a resource set with a smaller index in the two different resource sets, that is, if an index of a resource set to which the first measurement resource belongs is less than an index of the other resource set than the resource set to which the first measurement resource belongs in the two different resource sets, the default beam corresponding to the first measurement resource is the first beam. Alternatively, if the first measurement resource belongs to a resource set with a larger index in the two different resource sets, that is, if an index of a resource set to which the first measurement resource belongs is greater than an index of the other resource set than the resource set to which the first measurement resource belongs in the two different resource sets, the default beam corresponding to the first measurement resource is the second beam. Alternatively, if the first measurement resource belongs to a resource set with a higher configuration ranking in the two different resource sets, that is, if a configuration ranking of a resource set to which the first measurement resource belongs is higher than a configuration ranking of the other resource set than the resource set to which the first measurement resource belongs in the two different resource sets, the default beam corresponding to the first measurement resource is the first beam. Alternatively, if the first measurement resource belongs to a resource set with a lower configuration ranking in the two different resource sets, that is, if a configuration ranking of a resource set to which the first measurement resource belongs is lower than a configuration ranking of the other resource set than the resource set to which the first measurement resource belongs in the two different resource sets, the default beam corresponding to the first measurement resource is the second beam. Alternatively, if the first measurement resource belongs to a resource set with a larger index in the two different resource sets, that is, if an index of a resource set to which the first measurement resource belongs is greater than an index of the other resource set than the resource set to which the first measurement resource belongs in the two different resource sets, the default beam corresponding to the first measurement resource is the first beam. Alternatively, if the first measurement resource belongs to a resource set with a lower configuration ranking in the two different resource sets, that is, if a configuration ranking of a resource set to which the first measurement resource belongs is lower than a configuration ranking of the other resource set than the resource set to which the first measurement resource belongs in the two different resource sets, the default beam corresponding to the first measurement resource is the first beam. Alternatively, if the first measurement resource belongs to a resource set with a smaller index in the two different resource sets, that is, if an index of a resource set to which the first measurement resource belongs is less than an index of the other resource set than the resource set to which the first measurement resource belongs in the two different resource sets, the default beam corresponding to the first measurement resource is the second beam. Alternatively, if the first measurement resource belongs to a resource set with a higher configuration ranking in the two different resource sets, that is, if a configuration ranking of a resource set to which the first measurement resource belongs is higher than a configuration ranking of the other resource set than the resource set to which the first measurement resource belongs in the two different resource sets, the default beam corresponding to the first measurement resource is the second beam.

Based on the thirteenth aspect, in a possible implementation, measurement resources configured by the network device for the communication apparatus are configured in two different resource subsets in a same resource set, and the resource set includes a resource pair; and the network device indicates, to the communication apparatus, a first beam available for downlink transmission and a second beam available for downlink transmission, and the first measurement resource belongs to the resource pair. If the first measurement resource is a resource with a smaller index in the resource pair, that is, if an index of the first measurement resource is less than an index of the other resource in the resource pair, the default beam corresponding to the first measurement resource is the first beam. Alternatively, if the first measurement resource is a resource with a higher configuration ranking in the resource pair, that is, if a configuration ranking of the first measurement resource is higher than a configuration ranking of the other resource in the resource pair, the default beam corresponding to the first measurement resource is the first beam. Alternatively, if the first measurement resource is a resource with a larger index in the resource pair, that is, if an index of the first measurement resource is greater than an index of the other resource in the resource pair, the default beam corresponding to the first measurement resource is the second beam. Alternatively, if the first measurement resource is a resource with a lower configuration ranking in the resource pair, that is, if a configuration ranking of the first measurement resource is lower than a configuration ranking of the other resource in the resource pair, the default beam corresponding to the first measurement resource is the second beam. Alternatively, if the first measurement resource is a resource with a larger index in the resource pair, that is, if an index of the first measurement resource is greater than an index of the other resource in the resource pair, the default beam corresponding to the first measurement resource is the first beam. Alternatively, if the first measurement resource is a resource with a lower configuration ranking in the resource pair, that is, if a configuration ranking of the first measurement resource is lower than a configuration ranking of the other resource in the resource pair, the default beam corresponding to the first measurement resource is the first beam. Alternatively, if the first measurement resource is a resource with a smaller index in the resource pair, that is, if an index of the first measurement resource is less than an index of the other resource in the resource pair, the default beam corresponding to the first measurement resource is the second beam. Alternatively, if the first measurement resource is a resource with a higher configuration ranking in the resource pair, that is, if a configuration ranking of the first measurement resource is higher than an index of the other resource in the resource pair, the default beam corresponding to the first measurement resource is the second beam.

Based on the thirteenth aspect, in a possible implementation, when a first condition is satisfied, the communication apparatus determines that the first measurement resource uses the default beam corresponding to the first measurement resource, where the first condition includes one or a combination of the following:
The network device configures, for the communication apparatus, a common beam available for downlink transmission; the network device indicates, to the communication apparatus, two common beams available for downlink transmission; the first measurement resource has no corresponding preconfigured beam; the first measurement resource is an aperiodic measurement resource; a time interval between a start time point occupied by the first measurement resource and a triggering time point at which a downlink control channel triggers transmission of the first measurement resource is less than a first threshold; or a time domain symbol occupied by the first measurement resource does not carry a signal other than the measurement signal corresponding to the first measurement resource. In this implementation, a condition for using, by the communication apparatus, the default beam corresponding to the first measurement resource is further limited.

Based on the thirteenth aspect, in a possible implementation, if a control-resource set with a smallest index in one or more control-resource sets communicated by the communication apparatus in a latest slot corresponds to one beam, the default beam corresponding to the first measurement resource is the beam corresponding to the control-resource set with the smallest index.

Based on the thirteenth aspect, in a possible implementation, measurement resources configured by the network device for the communication apparatus are configured in two different resource sets, and a control-resource set with a smallest index in one or more control-resource sets communicated by the communication apparatus in a latest slot corresponds to two beams. If the first measurement resource belongs to a resource set with a smaller index in the two different resource sets, that is, if an index of a resource set to which the first measurement resource belongs is less than an index of the other resource set than the resource set to which the first measurement resource belongs in the two different resource sets, the default beam corresponding to the first measurement resource is a 1^{st} beam in the two beams. Alternatively, if the first measurement resource belongs to a resource set with a higher configuration ranking in the two different resource sets, that is, if a configuration ranking of a resource set to which the first measurement resource belongs is higher than a configuration ranking of the other resource set than the resource set to which the first measurement resource belongs, the default beam corresponding to the first measurement resource is a 1^{st} beam in the two beams. Alternatively, if the first measurement resource belongs to a resource set with a larger index in the two different resource sets, that is, if an index of a resource set to which the first measurement resource belongs is greater than an index of the other resource set than the resource set to which the first measurement resource belongs in the two different resource sets, the default beam corresponding to the first measurement resource is a 2^{nd} beam in the two beams. Alternatively, if the first measurement resource belongs to a resource set with a lower configuration ranking in the two different resource sets, that is, if a configuration ranking of a resource set to which the first measurement resource belongs is lower than a configuration ranking of the other resource set than the resource set to which the first measurement resource belongs, the default beam corresponding to the first measurement resource is a 2^{nd} beam in the two beams. Alternatively, if the first measurement resource belongs to a resource set with a larger index in the two different resource sets, that is, if an index of a resource set to which the first measurement resource belongs is greater than an index of a resource set other than the resource set to which the first measurement resource belongs in the two different resource sets, the default beam corresponding to the first measurement resource is a 1^{st} beam in the two beams. Alternatively, if the first measurement resource belongs to a resource set with a lower configuration ranking in the two different resource sets, that is, if a configuration ranking of a resource set to which the first measurement resource belongs is lower than a configuration ranking of the other resource set than the resource set to which the first measurement resource belongs, the default beam corresponding to the first measurement resource is a 1^{st} beam in the two beams. Alternatively, if the first measurement resource belongs to a resource set with a smaller index in the two different resource sets, that is, if an index of a resource set to which the first measurement resource belongs is less than an index of a resource set other than the resource set to which the first measurement resource belongs in the two different resource sets, the default beam corresponding to the first measurement resource is a 2^{nd} beam in the two beams. Alternatively, if the first measurement resource belongs to a resource set with a higher configuration ranking in the two different resource sets, that is, if a configuration ranking of a resource set to which the first measurement resource belongs is higher than a configuration ranking of the other resource set than the resource set to which the first measurement resource belongs, the default beam corresponding to the first measurement resource is a 2^{nd} beam in the two beams.

Based on the thirteenth aspect, in a possible implementation, measurement resources configured by the network device for the communication apparatus are configured in two different resource subsets in a same resource set, and the resource set includes a resource pair; and a control-resource set with a smallest index in one or more control-resource sets communicated by the communication apparatus in a latest slot corresponds to two beams, and the first measurement resource belongs to the resource pair. If the first measurement resource is a resource with a smaller index in the resource pair, that is, if an index of the first measurement resource is less than an index of the other resource in the resource pair, the default beam corresponding to the first measurement resource is a 1^{st} beam in the two beams. Alternatively, if the first measurement resource is a resource with a higher configuration ranking in the resource pair, that is, if a configuration ranking of the first measurement resource is higher than a configuration ranking of the other resource in the resource pair, the default beam corresponding to the first measurement resource is a 1^{st} beam in the two beams. Alternatively, if the first measurement resource is a resource with a larger index in the resource pair, that is, if an index of the first measurement resource is greater than an index of the other resource in the resource pair, the default beam corresponding to the first measurement resource is a 2^{nd} beam in the two beams. Alternatively, if the first measurement resource is a resource with a lower configuration ranking in the resource pair, that is, if a configuration ranking of the first measurement resource is lower than a configuration ranking of the other resource in the resource pair, the default beam corresponding to the first measurement resource is a 2^{nd} beam in the two beams. Alternatively, if the first measurement resource is a resource with a larger index in the resource pair, that is, if an index of the first measurement resource is greater than an index of the other resource in the resource pair, the default beam corresponding to the first measurement resource is a 2^{nd} beam in the two beams. Alternatively, if the first measurement resource is a resource with a lower configuration ranking in the resource pair, that is, if a configuration ranking of the first measurement resource is lower than a configuration ranking of the other resource in the resource pair, the default beam corresponding to the first measurement resource is a 2^{nd} beam in the two beams. Alternatively, if the first measurement resource is a resource with a smaller index in the resource pair, that is, if an index of the first measurement resource is less than an index of the other resource in the resource pair, the default beam corresponding to the first measurement resource is a 1^{st} beam in the two beams. Alternatively, if the first measurement resource is a resource with a higher configuration ranking in the resource pair, that is, if a configuration ranking of the first measurement resource is higher than an index of the other resource in the resource pair, the default beam corresponding to the first measurement resource is a 1^{st} beam in the two beams.

Based on the thirteenth aspect, in a possible implementation, when a second condition is satisfied, the communication apparatus determines that the first measurement resource uses the default beam corresponding to the first measurement resource, where the second condition includes one or a combination of the following: The network device does not configure, for the communication apparatus, a common beam available for downlink transmission; the network device does not indicate, to the communication apparatus, a common beam available for downlink transmission; the first measurement resource has no corresponding preconfigured beam; the first measurement resource is an aperiodic measurement resource; a time interval between a start time domain position occupied by the first measurement resource and a triggering time point at which a downlink control channel triggers transmission of the first measurement resource is less than a first threshold; a time domain symbol occupied by the first measurement resource does not carry a signal other than the measurement signal corresponding to the first measurement resource; the network device configures a single frequency network scheme A (sfnSchemeA) for the communication apparatus, where in the single frequency network scheme A, one control-resource set of the communication apparatus corresponds to two beams, and a physical downlink control channel corresponding to the control-resource set is simultaneously sent by using the two beams corresponding to the control-resource set; or the network device does not configure a first parameter for the communication apparatus, where the first parameter indicates the communication apparatus to receive a downlink shared channel of the communication apparatus by using two default beams.

Based on the thirteenth aspect, in a possible implementation, measurement resources configured by the network device for the communication apparatus are configured in two different resource sets, the network device indicates TCI states to the communication apparatus by using DCI, and a TCI field in the DCI includes at least one TCI field value. If the first measurement resource belongs to a resource set with a smaller index in the two different resource sets, that is, if an index of a resource set to which the first measurement resource belongs is less than an index of a resource set other than the resource set to which the first measurement resource belongs in the two different resource sets, the default beam corresponding to the first measurement resource is a beam corresponding to a 1^{st} TCI state in two TCI states indicated by a first TCI field value, where the first TCI field value is a smallest TCI field value in TCI field values indicating two TCI states in the at least one TCI field value. Alternatively, if the first measurement resource belongs to a resource set with a higher configuration ranking in the two different resource sets, that is, if a configuration ranking of a resource set to which the first measurement resource belongs is higher than a configuration ranking of the other resource set than the resource set to which the first measurement resource belongs, the default beam corresponding to the first measurement resource is a beam corresponding to a 1^{st} TCI state in two TCI states indicated by a first TCI field value. Alternatively, if the first measurement resource belongs to a resource set with a larger index in the two different resource sets, that is, if an index of a resource set to which the first measurement resource belongs is greater than an index of a resource set other than the resource set to which the first measurement resource belongs in the two different resource sets, the default beam corresponding to the first measurement resource is a beam corresponding to a 2^{nd} TCI state in two TCI states indicated by a first TCI field value. Alternatively, if the first measurement resource belongs to a resource set with a lower configuration ranking in the two different resource sets, that is, if a configuration ranking of a resource set to which the first measurement resource belongs is lower than a configuration ranking of the other resource set than the resource set to which the first measurement resource belongs, the default beam corresponding to the first measurement resource is a beam corresponding to a 2^{nd} TCI state in two TCI states indicated by a first TCI field value. Alternatively, if the first measurement resource belongs to a resource set with a larger index in the two different resource sets, that is, if an index of a resource set to which the first measurement resource belongs is greater than an index of a resource set other than the resource set to which the first measurement resource belongs in the two different resource sets, the default beam corresponding to the first measurement resource is a beam corresponding to a 1^{st} TCI state in two TCI states indicated by a first TCI field value. Alternatively, if the first measurement resource belongs to a resource set with a lower configuration ranking in the two different resource sets, that is, if a configuration ranking of a resource set to which the first measurement resource belongs is lower than a configuration ranking of the other resource set than the resource set to which the first measurement resource belongs, the default beam corresponding to the first measurement resource is a beam corresponding to a 1^{st} TCI state in two TCI states indicated by a first TCI field value. Alternatively, if the first measurement resource belongs to a resource set with a smaller index in the two different resource sets, that is, if an index of a resource set to which the first measurement resource belongs is less than an index of a resource set other than the resource set to which the first measurement resource belongs in the two different resource sets, the default beam corresponding to the first measurement resource is a beam corresponding to a 2^{nd} TCI state in two TCI states indicated by a first TCI field value. Alternatively, if the first measurement resource belongs to a resource set with a higher configuration ranking in the two different resource sets, that is, if a configuration ranking of a resource set to which the first measurement resource belongs is higher than a configuration ranking of the other resource set than the resource set to which the first measurement resource belongs, the default beam corresponding to the first measurement resource is a beam corresponding to a 2^{nd} TCI state in two TCI states indicated by a first TCI field value.

Based on the thirteenth aspect, in a possible implementation, measurement resources configured by the network device for the communication apparatus are configured in two different resource subsets in a same resource set, and the resource set includes a resource pair; and the network device indicates TCI states to the communication apparatus by using DCI, a TCI field in the DCI includes at least one TCI field value, and the first measurement resource belongs to the resource pair. If the first measurement resource is a resource with a smaller index in the resource pair, that is, if an index of the first measurement resource is less than an index of the other resource in the resource pair, the default beam corresponding to the first measurement resource is a beam corresponding to a 1^{st} TCI state in two TCI states indicated by a first TCI field value, where the first TCI field value is a smallest TCI field value in TCI field values indicating two TCI states in the at least one TCI field value. Alternatively, if the first measurement resource is a resource with a higher configuration ranking in the resource pair, that is, if a configuration ranking of the first measurement resource is higher than a configuration ranking of the other resource in the resource pair, the default beam corresponding to the first measurement resource is a beam corresponding to a 1^{st} TCI state in two TCI states indicated by a first TCI field value. Alternatively, if the first measurement resource is a resource with a larger index in two different resource sets, that is, if an index of the first measurement resource is greater than an index of the other resource in the resource pair, the default beam corresponding to the first measurement resource is a beam corresponding to a 2^{nd} TCI state in two TCI states indicated by a first TCI field value. Alternatively, if the first measurement resource is a resource with a lower configuration ranking in the resource pair, that is, if a configuration ranking of the first measurement resource is lower than a configuration ranking of the other resource in the resource pair, the default beam corresponding to the first measurement resource is a beam corresponding to a 2^{nd} TCI state in two TCI states indicated by a first TCI field value. Alternatively, if the first measurement resource is a resource with a larger index in the resource pair, that is, if an index of the first measurement resource is greater than an index of the other resource in the resource pair, the default beam corresponding to the first measurement resource is a beam corresponding to a 1^{st} TCI state in two TCI states indicated by a first TCI field value. Alternatively, if the first measurement resource is a resource with a lower configuration ranking in the resource pair, that is, if a configuration ranking of the first measurement resource is lower than a configuration ranking of the other resource in the resource pair, the default beam corresponding to the first measurement resource is a beam corresponding to a 1^{st} TCI state in two TCI states indicated by a first TCI field value. Alternatively, if the first measurement resource is a resource with a smaller index in the resource pair, that is, if an index of the first measurement resource is less than an index of the other resource in the resource pair, the default beam corresponding to the first measurement resource is a beam corresponding to a 2^{nd} TCI state in two TCI states indicated by a first TCI field value. Alternatively, if the first measurement resource is a resource with a higher configuration ranking in the resource pair, that is, if a configuration ranking of the first measurement resource is higher than an index of the other resource in the resource pair, the default beam corresponding to the first measurement resource is a beam corresponding to a 2^{nd} TCI state in two TCI states indicated by a first TCI field value.

Based on the thirteenth aspect, in a possible implementation, when a third condition is satisfied, the communication apparatus determines that the first measurement resource uses the default beam corresponding to the first measurement resource, where the third condition includes one or a combination of the following: The network device does not configure, for the communication apparatus, a common beam available for downlink transmission; the network device does not indicate, to the communication apparatus, a common beam available for downlink transmission; the first measurement resource has no corresponding preconfigured beam; the first measurement resource is an aperiodic measurement resource; a time interval between a start time point occupied by the first measurement resource and a triggering time point at which a physical downlink control channel triggers transmission of the first measurement resource is less than a first threshold; a time domain symbol occupied by the first measurement resource does not carry a signal other than the measurement signal corresponding to the first measurement resource; or the network device configures a first parameter for the communication apparatus, where the first parameter is used by the communication apparatus to receive a physical downlink shared channel of the communication apparatus by using two default beams.

Based on the eighth aspect, the tenth aspect, or the thirteenth aspect, in a possible implementation, the first beam and the second beam include any one of the following:
The first beam is a beam with a smaller index in the two common beams available for downlink transmission, and the second beam is a beam with a larger index in the two common beams available for downlink transmission. That is, an index of the first beam is less than an index of the second beam.

Alternatively, the first beam is a beam with a higher configuration ranking in the two common beams available for downlink transmission, and the second beam is a beam with a lower configuration ranking in the two common beams available for downlink transmission. That is, a configuration ranking of the first beam is higher than a configuration ranking of the second beam.

Alternatively, the first beam belongs to the first beam set, and the second beam belongs to the second beam set, where the first beam set and the second beam set are two beam sets that are of a same type and that are configured by the network device for the communication apparatus; and the first beam set is a beam set with a smaller index in the two beam sets of the same type, and the second beam set is a beam set with a larger index in the two beam sets. That is, an index of the first beam set is less than an index of the second beam set. Alternatively, the first beam set is a beam set with a higher configuration ranking in the two beam sets of the same type, and the second beam set is a beam set with a lower configuration ranking in the two beam sets. That is, a configuration ranking of the first beam set is higher than a configuration ranking of the second beam set.

Alternatively, the first beam belongs to a first beam group, and the second beam belongs to a second beam group, where the first beam group and the second beam group are two beam groups that are of a same type and that are activated by the network device by using a MAC CE; and the first beam group is a beam group with a smaller index in the two beam groups of the same type, and the second beam group is a beam group with a larger index in the two beam groups of the same type. That is, an index of the first beam group is less than an index of the second beam group. Alternatively, the first beam group is a beam group with a higher ranking of activation in the MAC CE in the two beam groups of the same type, and the second beam group is a beam group with a lower ranking of activation in the MAC CE in the two beam groups of the same type. That is, an activation ranking of the first beam group is higher than an activation ranking of the second beam group.

Alternatively, the first beam is a beam corresponding to a smaller TCI field value in the two common beams available for downlink transmission, and the second beam is a beam corresponding to a larger TCI field value in the two common beams available for downlink transmission. That is, a TCI field value corresponding to the first beam is less than a TCI field value corresponding to the second beam.

Alternatively, the first beam is a beam indicated by a 1^{st} transmission configuration indicator TCI field in DCI, and the second beam is a beam indicated by a 2^{nd} TCI field in the DCI.

Alternatively, the first beam is a beam corresponding to a 1^{st} part of field values in all field values of a TCI field in DCI, and the second beam is a beam corresponding to a 2^{nd} part of field values in all the field values of the TCI field in the DCI.

Alternatively, the first beam and the second beam are two beams that are of a same type and that are indicated by a same TCI field in DCI, the first beam is a beam with a higher ranking of activation in a MAC CE in the two beams of the same type, and the second beam is a beam with a lower ranking of activation in the MAC CE in the two beams of the same type. That is, an activation ranking of the first beam is higher than an activation ranking of the second beam.

Alternatively, the first beam is a beam indicated by first DCI, and the second beam is a beam indicated by second DCI, where the first DCI is DCI carried on a physical downlink control channel corresponding to a first control-resource set group in two control-resource set groups configured by the network device for the communication apparatus, the second DCI is DCI carried on a physical downlink control channel corresponding to a second control-resource set group in the two control-resource set groups, the first control-resource set group is a control-resource set group with a smaller group index in the two control-resource set groups, and the second control-resource set group is a control-resource set group with a larger group index in the two control-resource set groups. That is, a group index of the first control-resource set group is less than a group index of the second control-resource set group. Alternatively, a value of a first field in the first DCI indicates that a beam indicated by the first DCI is the first beam, and a value of a first field in the second DCI indicates that a beam indicated by the second DCI is the second beam.

A fourteenth aspect of this application provides a communication apparatus, including:
a processing module, configured to determine a first measurement resource, and determine, according to a first rule, a beam used by the first measurement resource; and
a transceiver module, configured to send, to a terminal device based on the beam used by the first measurement resource, a measurement signal corresponding to the first measurement resource.

Based on the fourteenth aspect, in a possible implementation, the processing module is specifically configured to:
determine that the first measurement resource uses a preconfigured beam corresponding to the first measurement resource.

Based on the fourteenth aspect, in a possible implementation, the processing module is specifically configured to:
determine that the first measurement resource uses a default beam corresponding to the first measurement resource.

Based on the fourteenth aspect, in a possible implementation, measurement resources configured by the communication apparatus for the terminal device are configured in two different resource sets, and the communication apparatus indicates, to the terminal device, a first beam available for downlink transmission and a second beam available for downlink transmission. If the first measurement resource belongs to a resource set with a smaller index in the two different resource sets, that is, if an index of a resource set to which the first measurement resource belongs is less than an index of the other resource set than the resource set to which the first measurement resource belongs in the two different resource sets, the default beam corresponding to the first measurement resource is the first beam. Alternatively, if the first measurement resource belongs to a resource set with a larger index in the two different resource sets, that is, if an index of a resource set to which the first measurement resource belongs is greater than an index of the other resource set than the resource set to which the first measurement resource belongs in the two different resource sets, the default beam corresponding to the first measurement resource is the second beam. Alternatively, if the first measurement resource belongs to a resource set with a higher configuration ranking in the two different resource sets, that is, if a configuration ranking of a resource set to which the first measurement resource belongs is higher than a configuration ranking of the other resource set than the resource set to which the first measurement resource belongs in the two different resource sets, the default beam corresponding to the first measurement resource is the first beam. Alternatively, if the first measurement resource belongs to a resource set with a lower configuration ranking in the two different resource sets, that is, if a configuration ranking of a resource set to which the first measurement resource belongs is lower than a configuration ranking of the other resource set than the resource set to which the first measurement resource belongs in the two different resource sets, the default beam corresponding to the first measurement resource is the second beam. Alternatively, if the first measurement resource belongs to a resource set with a larger index in the two different resource sets, that is, if an index of a resource set to which the first measurement resource belongs is greater than an index of the other resource set than the resource set to which the first measurement resource belongs in the two different resource sets, the default beam corresponding to the first measurement resource is the first beam. Alternatively, if the first measurement resource belongs to a resource set with a lower configuration ranking in the two different resource sets, that is, if a configuration ranking of a resource set to which the first measurement resource belongs is lower than a configuration ranking of the other resource set than the resource set to which the first measurement resource belongs in the two different resource sets, the default beam corresponding to the first measurement resource is the first beam. Alternatively, if the first measurement resource belongs to a resource set with a smaller index in the two different resource sets, that is, if an index of a resource set to which the first measurement resource belongs is less than an index of the other resource set than the resource set to which the first measurement resource belongs in the two different resource sets, the default beam corresponding to the first measurement resource is the second beam. Alternatively, if the first measurement resource belongs to a resource set with a higher configuration ranking in the two different resource sets, that is, if a configuration ranking of a resource set to which the first measurement resource belongs is higher than a configuration ranking of the other resource set than the resource set to which the first measurement resource belongs in the two different resource sets, the default beam corresponding to the first measurement resource is the second beam.

Based on the fourteenth aspect, in a possible implementation, measurement resources configured by the communication apparatus for the terminal device are configured in two different resource subsets in a same resource set, and the resource set includes a resource pair; and the communication apparatus indicates, to the terminal device, a first beam available for downlink transmission and a second beam available for downlink transmission, and the first measurement resource belongs to the resource pair. If the first measurement resource is a resource with a smaller index in the resource pair, that is, if an index of the first measurement resource is less than an index of the other resource in the resource pair, the default beam corresponding to the first measurement resource is the first beam. Alternatively, if the first measurement resource is a resource with a higher configuration ranking in the resource pair, that is, if a configuration ranking of the first measurement resource is higher than a configuration ranking of the other resource in the resource pair, the default beam corresponding to the first measurement resource is the first beam. Alternatively, if the first measurement resource is a resource with a larger index in the resource pair, that is, if an index of the first measurement resource is greater than an index of the other resource in the resource pair, the default beam corresponding to the first measurement resource is the second beam. Alternatively, if the first measurement resource is a resource with a lower configuration ranking in the resource pair, that is, if a configuration ranking of the first measurement resource is lower than a configuration ranking of the other resource in the resource pair, the default beam corresponding to the first measurement resource is the second beam. Alternatively, if the first measurement resource is a resource with a larger index in the resource pair, that is, if an index of the first measurement resource is greater than an index of the other resource in the resource pair, the default beam corresponding to the first measurement resource is the first beam. Alternatively, if the first measurement resource is a resource with a lower configuration ranking in the resource pair, that is, if a configuration ranking of the first measurement resource is lower than a configuration ranking of the other resource in the resource pair, the default beam corresponding to the first measurement resource is the first beam. Alternatively, if the first measurement resource is a resource with a smaller index in the resource pair, that is, if an index of the first measurement resource is less than an index of the other resource in the resource pair, the default beam corresponding to the first measurement resource is the second beam. Alternatively, if the first measurement resource is a resource with a higher configuration ranking in the resource pair, that is, if a configuration ranking of the first measurement resource is higher than an index of the other resource in the resource pair, the default beam corresponding to the first measurement resource is the second beam.

Based on the fourteenth aspect, in a possible implementation, when a first condition is satisfied, the communication apparatus determines that the first measurement resource uses the default beam corresponding to the first measurement resource, where the first condition includes one or a combination of the following:
The communication apparatus configures, for the terminal device, a common beam available for downlink transmission; the communication apparatus indicates, to the terminal device, two common beams available for downlink transmission; the first measurement resource has no corresponding preconfigured beam; the first measurement resource is an aperiodic measurement resource; a time interval between a start time point occupied by the first measurement resource and a triggering time point at which a downlink control channel triggers transmission of the first measurement resource is less than a first threshold; or a time domain symbol occupied by the first measurement resource does not carry a signal other than the measurement signal corresponding to the first measurement resource. **In** this implementation, a condition for using, by the communication apparatus, the default beam corresponding to the first measurement resource is further limited.

Based on the fourteenth aspect, in a possible implementation, if a control-resource set with a smallest index in one or more control-resource sets communicated by the terminal device in a latest slot corresponds to one beam, the default beam corresponding to the first measurement resource is the beam corresponding to the control-resource set with the smallest index.

Based on the fourteenth aspect, in a possible implementation, measurement resources configured by the communication apparatus for the terminal device are configured in two different resource sets, and a control-resource set with a smallest index in one or more control-resource sets communicated by the terminal device in a latest slot corresponds to two beams. If the first measurement resource belongs to a resource set with a smaller index in the two different resource sets, that is, if an index of a resource set to which the first measurement resource belongs is less than an index of the other resource set than the resource set to which the first measurement resource belongs in the two different resource sets, the default beam corresponding to the first measurement resource is a 1^{st} beam in the two beams. Alternatively, if the first measurement resource belongs to a resource set with a higher configuration ranking in the two different resource sets, that is, if a configuration ranking of a resource set to which the first measurement resource belongs is higher than a configuration ranking of the other resource set than the resource set to which the first measurement resource belongs, the default beam corresponding to the first measurement resource is a 1^{st} beam in the two beams. Alternatively, if the first measurement resource belongs to a resource set with a larger index in the two different resource sets, that is, if an index of a resource set to which the first measurement resource belongs is greater than an index of the other resource set than the resource set to which the first measurement resource belongs in the two different resource sets, the default beam corresponding to the first measurement resource is a 2^{nd} beam in the two beams. Alternatively, if the first measurement resource belongs to a resource set with a lower configuration ranking in the two different resource sets, that is, if a configuration ranking of a resource set to which the first measurement resource belongs is lower than a configuration ranking of the other resource set than the resource set to which the first measurement resource belongs, the default beam corresponding to the first measurement resource is a 2^{nd} beam in the two beams. Alternatively, if the first measurement resource belongs to a resource set with a larger index in the two different resource sets, that is, if an index of a resource set to which the first measurement resource belongs is greater than an index of a resource set other than the resource set to which the first measurement resource belongs in the two different resource sets, the default beam corresponding to the first measurement resource is a 1^{st} beam in the two beams. Alternatively, if the first measurement resource belongs to a resource set with a lower configuration ranking in the two different resource sets, that is, if a configuration ranking of a resource set to which the first measurement resource belongs is lower than a configuration ranking of the other resource set than the resource set to which the first measurement resource belongs, the default beam corresponding to the first measurement resource is a 1^{st} beam in the two beams. Alternatively, if the first measurement resource belongs to a resource set with a smaller index in the two different resource sets, that is, if an index of a resource set to which the first measurement resource belongs is less than an index of a resource set other than the resource set to which the first measurement resource belongs in the two different resource sets, the default beam corresponding to the first measurement resource is a 2^{nd} beam in the two beams. Alternatively, if the first measurement resource belongs to a resource set with a higher configuration ranking in the two different resource sets, that is, if a configuration ranking of a resource set to which the first measurement resource belongs is higher than a configuration ranking of the other resource set than the resource set to which the first measurement resource belongs, the default beam corresponding to the first measurement resource is a 2^{nd} beam in the two beams.

Based on the fourteenth aspect, in a possible implementation, measurement resources configured by the communication apparatus for the terminal device are configured in two different resource subsets in a same resource set, and the resource set includes a resource pair; and a control-resource set with a smallest index in one or more control-resource sets communicated by the terminal device in a latest slot corresponds to two beams, and the first measurement resource belongs to the resource pair. If the first measurement resource is a resource with a smaller index in the resource pair, that is, if an index of the first measurement resource is less than an index of the other resource in the resource pair, the default beam corresponding to the first measurement resource is a 1^{st} beam in the two beams. Alternatively, if the first measurement resource is a resource with a higher configuration ranking in the resource pair, that is, if a configuration ranking of the first measurement resource is higher than a configuration ranking of the other resource in the resource pair, the default beam corresponding to the first measurement resource is a 1^{st} beam in the two beams. Alternatively, if the first measurement resource is a resource with a larger index in the resource pair, that is, if an index of the first measurement resource is greater than an index of the other resource in the resource pair, the default beam corresponding to the first measurement resource is a 2^{nd} beam in the two beams. Alternatively, if the first measurement resource is a resource with a lower configuration ranking in the resource pair, that is, if a configuration ranking of the first measurement resource is lower than a configuration ranking of the other resource in the resource pair, the default beam corresponding to the first measurement resource is a 2^{nd} beam in the two beams. Alternatively, if the first measurement resource is a resource with a larger index in the resource pair, that is, if an index of the first measurement resource is greater than an index of the other resource in the resource pair, the default beam corresponding to the first measurement resource is a 2^{nd} beam in the two beams. Alternatively, if the first measurement resource is a resource with a lower configuration ranking in the resource pair, that is, if a configuration ranking of the first measurement resource is lower than a configuration ranking of the other resource in the resource pair, the default beam corresponding to the first measurement resource is a 2^{nd} beam in the two beams. Alternatively, if the first measurement resource is a resource with a smaller index in the resource pair, that is, if an index of the first measurement resource is less than an index of the other resource in the resource pair, the default beam corresponding to the first measurement resource is a 1^{st} beam in the two beams. Alternatively, if the first measurement resource is a resource with a higher configuration ranking in the resource pair, that is, if a configuration ranking of the first measurement resource is higher than an index of the other resource in the resource pair, the default beam corresponding to the first measurement resource is a 1^{st} beam in the two beams.

Based on the fourteenth aspect, in a possible implementation, when a second condition is satisfied, the communication apparatus determines that the first measurement resource uses the default beam corresponding to the first measurement resource, where the second condition includes one or a combination of the following: The communication apparatus does not configure, for the terminal device, a common beam available for downlink transmission; the communication apparatus does not indicate, to the terminal device, a common beam available for downlink transmission; the first measurement resource has no corresponding preconfigured beam; the first measurement resource is an aperiodic measurement resource; a time interval between a start time domain position occupied by the first measurement resource and a triggering time point at which a downlink control channel triggers transmission of the first measurement resource is less than a first threshold; a time domain symbol occupied by the first measurement resource does not carry a signal other than the measurement signal corresponding to the first measurement resource; the communication apparatus configures a single frequency network scheme A (sfnSchemeA) for the terminal device, where in the single frequency network scheme A, one control-resource set of the terminal device corresponds to two beams, and a physical downlink control channel corresponding to the control-resource set is simultaneously sent by using the two beams corresponding to the control-resource set; or the communication apparatus does not configure a first parameter for the terminal device, where the first parameter indicates the terminal device to receive a downlink shared channel of the terminal device by using two default beams.

Based on the fourteenth aspect, in a possible implementation, the measurement resources configured by the communication apparatus for the terminal device are configured in two different resource sets, the communication apparatus indicates TCI states to the terminal device by using DCI, and a TCI field in the DCI includes at least one TCI field value. If the first measurement resource belongs to a resource set with a smaller index in the two different resource sets, that is, if an index of a resource set to which the first measurement resource belongs is less than an index of a resource set other than the resource set to which the first measurement resource belongs in the two different resource sets, the default beam corresponding to the first measurement resource is a beam corresponding to a 1^{st} TCI state in two TCI states indicated by a first TCI field value, where the first TCI field value is a smallest TCI field value in TCI field values indicating two TCI states in the at least one TCI field value. Alternatively, if the first measurement resource belongs to a resource set with a higher configuration ranking in the two different resource sets, that is, if a configuration ranking of a resource set to which the first measurement resource belongs is higher than a configuration ranking of the other resource set than the resource set to which the first measurement resource belongs, the default beam corresponding to the first measurement resource is a beam corresponding to a 1^{st} TCI state in two TCI states indicated by a first TCI field value. Alternatively, if the first measurement resource belongs to a resource set with a larger index in the two different resource sets, that is, if an index of a resource set to which the first measurement resource belongs is greater than an index of a resource set other than the resource set to which the first measurement resource belongs in the two different resource sets, the default beam corresponding to the first measurement resource is a beam corresponding to a 2^{nd} TCI state in two TCI states indicated by a first TCI field value. Alternatively, if the first measurement resource belongs to a resource set with a lower configuration ranking in the two different resource sets, that is, if a configuration ranking of a resource set to which the first measurement resource belongs is lower than a configuration ranking of the other resource set than the resource set to which the first measurement resource belongs, the default beam corresponding to the first measurement resource is a beam corresponding to a 2^{nd} TCI state in two TCI states indicated by a first TCI field value. Alternatively, if the first measurement resource belongs to a resource set with a larger index in the two different resource sets, that is, if an index of a resource set to which the first measurement resource belongs is greater than an index of a resource set other than the resource set to which the first measurement resource belongs in the two different resource sets, the default beam corresponding to the first measurement resource is a beam corresponding to a 1^{st} TCI state in two TCI states indicated by a first TCI field value. Alternatively, if the first measurement resource belongs to a resource set with a lower configuration ranking in the two different resource sets, that is, if a configuration ranking of a resource set to which the first measurement resource belongs is lower than a configuration ranking of the other resource set than the resource set to which the first measurement resource belongs, the default beam corresponding to the first measurement resource is a beam corresponding to a 1^{st} TCI state in two TCI states indicated by a first TCI field value. Alternatively, if the first measurement resource belongs to a resource set with a smaller index in the two different resource sets, that is, if an index of a resource set to which the first measurement resource belongs is less than an index of a resource set other than the resource set to which the first measurement resource belongs in the two different resource sets, the default beam corresponding to the first measurement resource is a beam corresponding to a 2^{nd} TCI state in two TCI states indicated by a first TCI field value. Alternatively, if the first measurement resource belongs to a resource set with a higher configuration ranking in the two different resource sets, that is, if a configuration ranking of a resource set to which the first measurement resource belongs is higher than a configuration ranking of the other resource set than the resource set to which the first measurement resource belongs, the default beam corresponding to the first measurement resource is a beam corresponding to a 2^{nd} TCI state in two TCI states indicated by a first TCI field value.

Based on the fourteenth aspect, in a possible implementation, measurement resources configured by the communication apparatus for the terminal device are configured in two different resource subsets in a same resource set, and the resource set includes a resource pair; and the communication apparatus indicates TCI states to the terminal device by using DCI, a TCI field in the DCI includes at least one TCI field value, and the first measurement resource belongs to the resource pair. If the first measurement resource is a resource with a smaller index in the resource pair, that is, if an index of the first measurement resource is less than an index of the other resource in the resource pair, the default beam corresponding to the first measurement resource is a beam corresponding to a 1^{st} TCI state in two TCI states indicated by a first TCI field value, where the first TCI field value is a smallest TCI field value in TCI field values indicating two TCI states in the at least one TCI field value. Alternatively, if the first measurement resource is a resource with a higher configuration ranking in the resource pair, that is, if a configuration ranking of the first measurement resource is higher than a configuration ranking of the other resource in the resource pair, the default beam corresponding to the first measurement resource is a beam corresponding to a 1^{st} TCI state in two TCI states indicated by a first TCI field value. Alternatively, if the first measurement resource is a resource with a larger index in two different resource sets, that is, if an index of the first measurement resource is greater than an index of the other resource in the resource pair, the default beam corresponding to the first measurement resource is a beam corresponding to a 2^{nd} TCI state in two TCI states indicated by a first TCI field value. Alternatively, if the first measurement resource is a resource with a lower configuration ranking in the resource pair, that is, if a configuration ranking of the first measurement resource is lower than a configuration ranking of the other resource in the resource pair, the default beam corresponding to the first measurement resource is a beam corresponding to a 2^{nd} TCI state in two TCI states indicated by a first TCI field value. Alternatively, if the first measurement resource is a resource with a larger index in the resource pair, that is, if an index of the first measurement resource is greater than an index of the other resource in the resource pair, the default beam corresponding to the first measurement resource is a beam corresponding to a 1^{st} TCI state in two TCI states indicated by a first TCI field value. Alternatively, if the first measurement resource is a resource with a lower configuration ranking in the resource pair, that is, if a configuration ranking of the first measurement resource is lower than a configuration ranking of the other resource in the resource pair, the default beam corresponding to the first measurement resource is a beam corresponding to a 1^{st} TCI state in two TCI states indicated by a first TCI field value. Alternatively, if the first measurement resource is a resource with a smaller index in the resource pair, that is, if an index of the first measurement resource is less than an index of the other resource in the resource pair, the default beam corresponding to the first measurement resource is a beam corresponding to a 2^{nd} TCI state in two TCI states indicated by a first TCI field value. Alternatively, if the first measurement resource is a resource with a higher configuration ranking in the resource pair, that is, if a configuration ranking of the first measurement resource is higher than an index of the other resource in the resource pair, the default beam corresponding to the first measurement resource is a beam corresponding to a 2^{nd} TCI state in two TCI states indicated by a first TCI field value.

Based on the fourteenth aspect, in a possible implementation, when a third condition is satisfied, the communication apparatus determines that the first measurement resource uses the default beam corresponding to the first measurement resource, where the third condition includes one or a combination of the following: The communication apparatus does not configure, for the terminal device, a common beam available for downlink transmission; the communication apparatus does not indicate, to the terminal device, a common beam available for downlink transmission; the first measurement resource has no corresponding preconfigured beam; the first measurement resource is an aperiodic measurement resource; a time interval between a start time point occupied by the first measurement resource and a triggering time point at which a physical downlink control channel triggers transmission of the first measurement resource is less than a first threshold; a time domain symbol occupied by the first measurement resource does not carry a signal other than the measurement signal corresponding to the first measurement resource; or the communication apparatus configures a first parameter for the terminal device, where the first parameter is used by the terminal device to receive a physical downlink shared channel of the terminal device by using two default beams.

Based on the ninth aspect, the eleventh aspect, the twelfth aspect, or the fourteenth aspect, in a possible implementation, the first beam and the second beam include any one of the following:
The first beam is a beam with a smaller index in the two common beams available for downlink transmission, and the second beam is a beam with a larger index in the two common beams available for downlink transmission. That is, an index of the first beam is less than an index of the second beam.

Alternatively, the first beam is a beam with a higher configuration ranking in the two common beams available for downlink transmission, and the second beam is a beam with a lower configuration ranking in the two common beams available for downlink transmission. That is, a configuration ranking of the first beam is higher than a configuration ranking of the second beam.

Alternatively, the first beam belongs to the first beam set, and the second beam belongs to the second beam set, where the first beam set and the second beam set are two beam sets that are of a same type and that are configured by the communication apparatus for the terminal device; and the first beam set is a beam set with a smaller index in the two beam sets of the same type, and the second beam set is a beam set with a larger index in the two beam sets. That is, an index of the first beam set is less than an index of the second beam set. Alternatively, the first beam set is a beam set with a higher configuration ranking in the two beam sets of the same type, and the second beam set is a beam set with a lower configuration ranking in the two beam sets. That is, a configuration ranking of the first beam set is higher than a configuration ranking of the second beam set.

Alternatively, the first beam belongs to a first beam group, and the second beam belongs to a second beam group, where the first beam group and the second beam group are two beam groups that are of a same type and that are activated by the communication apparatus by using a MAC CE; and the first beam group is a beam group with a smaller index in the two beam groups of the same type, and the second beam group is a beam group with a larger index in the two beam groups of the same type. That is, an index of the first beam group is less than an index of the second beam group. Alternatively, the first beam group is a beam group with a higher ranking of activation in the MAC CE in the two beam groups of the same type, and the second beam group is a beam group with a lower ranking of activation in the MAC CE in the two beam groups of the same type. That is, an activation ranking of the first beam group is higher than an activation ranking of the second beam group.

Alternatively, the first beam is a beam corresponding to a smaller TCI field value in the two common beams available for downlink transmission, and the second beam is a beam corresponding to a larger TCI field value in the two common beams available for downlink transmission. That is, a TCI field value corresponding to the first beam is less than a TCI field value corresponding to the second beam.

Alternatively, the first beam is a beam indicated by a 1^{st} transmission configuration indicator TCI field in DCI, and the second beam is a beam indicated by a 2^{nd} TCI field in the DCI.

Alternatively, the first beam is a beam corresponding to a 1^{st} part of field values in all field values of a TCI field in DCI, and the second beam is a beam corresponding to a 2^{nd} part of field values in all the field values of the TCI field in the DCI.

Alternatively, the first beam and the second beam are two beams that are of a same type and that are indicated by a same TCI field in DCI, the first beam is a beam with a higher ranking of activation in a MAC CE in the two beams of the same type, and the second beam is a beam with a lower ranking of activation in the MAC CE in the two beams of the same type. That is, an activation ranking of the first beam is higher than an activation ranking of the second beam.

Alternatively, the first beam is a beam indicated by first DCI, and the second beam is a beam indicated by second DCI, where the first DCI is DCI carried on a physical downlink control channel corresponding to a first control-resource set group in two control-resource set groups configured by the communication apparatus for the terminal device, the second DCI is DCI carried on a physical downlink control channel corresponding to a second control-resource set group in the two control-resource set groups, the first control-resource set group is a control-resource set group with a smaller group index in the two control-resource set groups, and the second control-resource set group is a control-resource set group with a larger group index in the two control-resource set groups. That is, a group index of the first control-resource set group is less than a group index of the second control-resource set group. Alternatively, a value of a first field in the first DCI indicates that a beam indicated by the first DCI is the first beam, and a value of a first field in the second DCI indicates that a beam indicated by the second DCI is the second beam.

A fifteenth aspect of this application provides a communication apparatus. The communication apparatus includes a processor. The processor is configured to invoke and run a computer program stored in a memory, so that the processor implements any implementation of any one of the first aspect to the seventh aspect.

Optionally, the communication apparatus further includes a transceiver. The processor is further configured to control the transceiver to transmit and receive a signal.

Optionally, the communication apparatus includes the memory. The memory stores the computer program.

A sixteenth aspect of this application provides a computer program product including instructions. When the computer program product runs on a computer, the computer is enabled to perform any implementation of the first aspect to the seventh aspect.

A seventeenth aspect of this application provides a computer-readable storage medium, including computer instructions. When the computer instructions are run on a computer, the computer is enabled to perform any implementation of the first aspect to the seventh aspect.

An eighteenth aspect of this application provides a chip apparatus, including a processor, configured to connect to a memory, and invoke a program stored in the memory, so that the processor performs any implementation of the first aspect to the seventh aspect.

A nineteenth aspect of this application provides a communication system. The communication system includes the communication apparatus shown in the eighth aspect and the communication apparatus shown in the ninth aspect; the communication system includes the communication apparatus shown in the tenth aspect and the communication apparatus shown in the eleventh aspect; or the communication system includes the communication apparatus shown in the thirteenth aspect and the communication apparatus shown in the fourteenth aspect.

It can be learned from the foregoing technical solutions that embodiments of this application have the following advantages.

It can be learned from the foregoing technical solutions that the terminal device determines, in the first beam and the second beam based on the beam parameter corresponding to the first control-resource set and the beam parameter corresponding to the second control-resource set, the beam used by the first control-resource set and the beam used by the second control-resource set. The first beam and the second beam are the two common beams available for downlink transmission. The first control-resource set and the second control-resource set are the two control-resource sets for physical downlink control channel repetition transmission. The terminal device receives, based on the beam used by the first control-resource set, the physical downlink control channel corresponding to the first control-resource set, and receives, based on the beam used by the second control-resource set, the physical downlink control channel corresponding to the second control-resource set. In this way, the terminal device correctly uses, on the channels corresponding to the corresponding control-resource sets, the beams indicated by the network device, so that the channels corresponding to the control-resource sets are received by using the correct beams, to improve the communication transmission performance. In addition, the terminal device determines, based on the beam parameter corresponding to the first control-resource set, the beam used by the first control-resource set, and determines, based on the beam parameter corresponding to the second control-resource set, the beam used by the second control-resource set. The network device does not need to indicate, to the terminal device, the beam used by each control-resource set, to reduce the beam indication overheads.

### BRIEF DESCRIPTION OF DRAWINGS

FIG. 1 is a diagram of a communication system to which an embodiment of this application is applied;
FIG. 2 is another diagram of a communication system to which an embodiment of this application is applied;
FIG. 3 is a diagram of a first embodiment of a beam determining method according to an embodiment of this application;
FIG. 4 is a diagram of a scenario of a beam determining method according to an embodiment of this application;
FIG. 5 is a diagram of a second embodiment of a beam determining method according to an embodiment of this application;
FIG. 6 is a diagram of a third embodiment of a beam determining method according to an embodiment of this application;
FIG. 7 is a diagram of a fourth embodiment of a beam determining method according to an embodiment of this application;
FIG. 8 is a diagram of a first structure of a communication apparatus according to an embodiment of this application;
FIG. 9 is a diagram of a second structure of a communication apparatus according to an embodiment of this application;
FIG. 10 is a diagram of a third structure of a communication apparatus according to an embodiment of this application;
FIG. 11 is a diagram of a fourth structure of a communication apparatus according to an embodiment of this application;
FIG. 12 is a diagram of a fifth structure of a communication apparatus according to an embodiment of this application;
FIG. 13 is a diagram of a sixth structure of a communication apparatus according to an embodiment of this application; and
FIG. 14 is a diagram of a seventh structure of a communication apparatus according to an embodiment of this application.

### DESCRIPTION OF EMBODIMENTS

Embodiments of this application provide a beam determining method and a related apparatus, so that a terminal device correctly uses, on channels corresponding to corresponding control-resource sets, beams indicated by a network device, to improve communication transmission performance. The network device does not need to indicate, to the terminal device, a beam used by each control-resource set, to reduce beam indication overheads.

The following describes technical solutions in this application with reference to accompanying drawings.

The technical solutions in this application may be applied to various communication systems, such as a 5G system, a new radio (new radio, NR) system, a long term evolution (long term evolution, LTE) system, an LTE frequency division duplex (frequency division duplex, FDD) system, an LTE time division duplex (time division duplex, TDD), a universal mobile telecommunications system (universal mobile telecommunication system, UMTS), a mobile communication system (for example, a 6G mobile communication system) after a 5G network, and a vehicle to everything (vehicle to everything, V2X) communication system.

The communication system to which this application is applicable includes the terminal device and the network device. The following describes the terminal device and the network device in this application.

The terminal device may be a wireless terminal device that can receive scheduling and indication information of the network device. The terminal device may be a device that provides voice and/or data connectivity for a user, a handheld device with a wireless connection function, or another processing device connected to a wireless modem.

The terminal device is also referred to as user equipment (user equipment, UE), a mobile station (mobile station, MS), a mobile terminal (mobile terminal, MT), or the like. The terminal device is a device that includes a wireless communication function (providing voice/data connectivity for the user), for example, a handheld device or a vehicle-mounted device having a wireless connection function. Currently, some examples of the terminal device are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control, a wireless terminal in vehicle to everything, a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. For example, the wireless terminal in the vehicle to everything may be a vehicle-mounted device, an entire vehicle device, an in-vehicle module, or a vehicle; the wireless terminal in the industrial control may be a camera or a robot; and the wireless terminal in the smart home may be a television, an air conditioner, a sweeper, a sound box, or a set-top box.

The network device may be a device in a wireless network. For example, the network device may be a device that is deployed in a radio access network and that provides a wireless communication function for the terminal device. For example, the network device may be a radio access network (radio access network, RAN) node that connects the terminal device to the wireless network, and may also be referred to as an access network device.

The network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, home evolved NodeB or home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a TRP, or the like, or may be a network device in a 5G mobile communication system, for example, a next generation NodeB (next generation NodeB, gNB), a transmission reception point (transmission reception point, TRP), or a TP in an NR system; or one antenna panel or one group of antenna panels (including a plurality of antenna panels) of a base station in the 5G mobile communication system. Alternatively, the network device may be a network node that constitutes a gNB or a transmission point, for example, a BBU or a distributed unit (distributed unit, DU).

In some deployments, a gNB may include a central unit (centralized unit, CU) and the DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a MAC layer, and a physical (physical, PHY) layer. The AAU implements some physical layer processing functions, radio frequency processing, and a function related to an active antenna. Information at the RRC layer is finally changed to information at the PHY layer, or is changed from the information at the PHY layer. Therefore, in this architecture, higher layer signaling (for example, RRC layer signaling) may also be considered to be sent by the DU, or sent by the DU and the AAU. It may be understood that the network device may be a device including one or more of a CU node, a DU node, and an AAU node. In addition, the CU may be classified as a network device in the RAN, or the CU may be classified as a network device in a core network (core network, CN). This is not limited in this application.

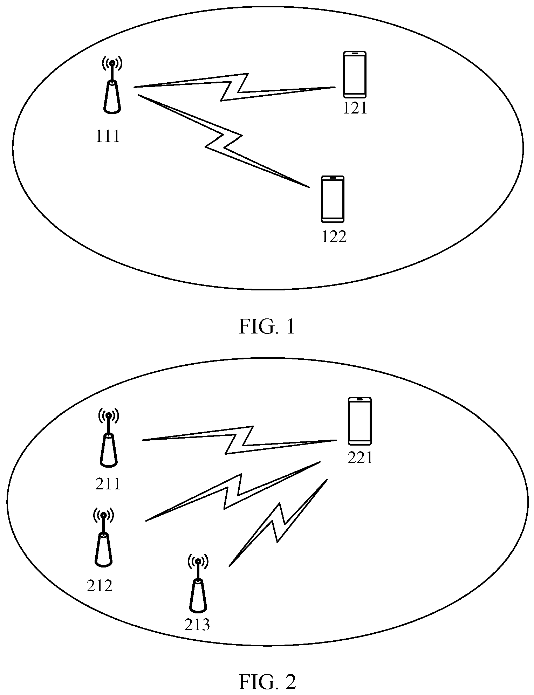

To facilitate understanding of the technical solutions in embodiments of this application, the following shows, with reference to FIG. 1 and FIG. 2, two possible communication systems to which a beam using method provided in embodiments of this application is applicable.

FIG. 1 is a diagram of a communication system to which an embodiment of this application is applied. As shown in FIG. 1, the communication system includes at least one network device, for example, a network device 111 shown in FIG. 1. The communication system further includes at least one terminal device, for example, a terminal device 121 and a terminal device 122 shown in FIG. 1. The network device 111 may perform transmission with the terminal device 121 and the terminal device 122 by using beams.

FIG. 2 is another diagram of a communication system to which an embodiment of this application is applied. As shown in FIG. 2, the communication system may include at least two network devices, for example, a network device 211, a network device 212, and a network device 213 shown in FIG. 2. The communication system further includes at least one terminal device, for example, a terminal device 221 shown in FIG. 2. The terminal device 221 may be provided with communication services by a plurality of network devices. For example, as shown in FIG. 2, the network device 211 may perform transmission with the terminal device 221 by using a beam 1, the network device 212 may perform transmission with the terminal device 221 by using a beam 2, and the network device 213 may perform transmission with the terminal device 221 by using a beam 3. In other words, one terminal device may be provided with communication services by a plurality of network devices simultaneously.

To facilitate understanding of the technical solutions in this application, the following describes some technical terms in this application.
1. Beam (beam): The beam is a communication resource. The beam may be a wide beam, a narrow beam, or another type of beam, and a technology for forming the beam may be a beamforming technology or another technical means. The beamforming technology may be specifically a digital beamforming technology, an analog beamforming technology, and a hybrid digital/analog beamforming technology. Different beams may be considered as different resources.

In an NR protocol, the beam may be referred to as a spatial domain filter (spatial domain filter), a spatial filter (spatial filter), a spatial domain parameter (spatial domain parameter), a spatial parameter (spatial parameter), a spatial domain setting (spatial domain setting), a spatial setting (spatial setting), quasi-co-location (quasi-colocation, QCL) information, a QCL assumption, a QCL indication, or the like. The beam may be indicated by a TCI-state parameter or a spatial relation (spatial relation) parameter. Therefore, in this application, the beam may be replaced with the spatial domain filter, the spatial filter, the spatial domain parameter, the spatial parameter, the spatial domain setting, the spatial setting, the QCL information, the QCL assumption, the QCL indication, TCI-states (including an uplink TCI-state and a downlink TCI-state), a spatial relation, or the like. The foregoing terms are also equivalent to each other. Alternatively, the beam may be replaced with another term for representing the beam. This is not limited in this application.

A beam for sending a signal may be referred to as a transmit beam (transmission beam, Tx beam), a spatial domain transmit filter (spatial domain transmit filter), a spatial transmit filter (spatial transmit filter), a spatial domain transmit parameter (spatial domain transmit parameter), a spatial transmit parameter (spatial transmit parameter), a spatial domain transmit setting (spatial domain transmit setting), or a spatial transmit setting (spatial transmit setting). The transmit beam may be indicated by the TCI-state.

A beam for receiving a signal may be referred to as a receive beam (reception beam, Rx beam), a spatial domain receive filter (spatial domain receive filter), a spatial receive filter (spatial receive filter), a spatial domain receive parameter (spatial domain receive parameter), a spatial receive parameter (spatial receive parameter), a spatial domain receive setting (spatial domain receive setting), or a spatial receive setting (spatial receive setting).

The transmit beam and the receive beam each may be indicated by any one of the spatial relation, the TCI-state, and an SRS resource (indicating using of a transmit beam of an SRS). Therefore, the transmit beam may alternatively be replaced with the SRS resource.

The transmit beam may refer to distribution of signal strength formed in different directions in space after a signal is transmitted through an antenna, and the receive beam may refer to distribution of signal strength, in different directions in space, of a radio signal received from an antenna.

In addition, the beam may be the wide beam, the narrow beam, or the another type of beam. The technology for forming the beam may be the beamforming technology or another technology. The beamforming technology may be specifically the digital beamforming technology, the analog beamforming technology, the hybrid digital beamforming technology, the hybrid analog beamforming technology, or the like.

The beam usually corresponds to a resource. For example, during beam measurement, a network device measures different beams using different resources, a terminal device feeds back resource quality obtained through the measurement, and the network device learns of quality of a corresponding beam. During data transmission, beam information is also indicated by a resource corresponding to the beam information. For example, the network device indicates information about a PDSCH beam of the terminal device by a TCI field in DCI.

In a possible implementation, a plurality of beams that have same or similar communication features are considered as one beam. One beam may include one or more antenna ports for transmission of a data channel, a control channel, a sounding signal, and the like. The one or more antenna ports forming the beam may also be considered as one antenna port set.
2. Quasi-co-location (quasi-co-location, QCL): A quasi-co-location relation represents that a plurality of resources have one or more same or similar communication features. Same or similar communication configurations may be used for the plurality of resources having the quasi-co-location relation. For example, if two antenna ports have the quasi-co-location relation, a large-scale channel property of transmitting one symbol through one port may be deduced from a large-scale channel property of transmitting one symbol through the other port. The large-scale property may include delay spread, average delay, Doppler spread, a Doppler frequency shift, an average gain, a receive parameter, a receive beam number of a terminal device, transmit/receive channel correlation, a receive angle of arrival, spatial correlation of a receiver antenna, a dominant angle of arrival (Angel--of-Arrival, AoA), an average angle of arrival, AoA spread, and the like. Specifically, that a co-location indication indicates whether at least two groups of antenna ports have a co-location relation includes: The co-location indication indicates whether channel state information reference signals sent by the at least two groups of antenna ports are from a same transmission point, or the co-location indication indicates whether channel state information reference signals sent by the at least two groups of antenna ports are from a same beam group.
3. TCI: The TCI may also be referred to as a TCI state (TCI-State). A communication protocol specifies that QCL is configured based on a TCI state, and a TCI state parameter is for configuring a quasi-co-location relation between one or two downlink reference signals and a demodulation reference signal (demodulation reference signal, DMRS) on a physical downlink shared channel (physical downlink shared channel, PDSCH). DCI may include a TCI field, and the TCI field is a field that is in the DCI and that indicates quasi-co-location of PDSCH antenna ports.

The TCI is configured by a network device for a terminal device by using an RRC message, and is referred to as the TCI state in configuration signaling. After the network device configures the TCI state for the terminal device by using the RRC message, the network device may send a MAC-CE to the terminal device, where the MAC is for activating one or more of TCI states configured by the network device for the terminal device. Optionally, the network device may further send the DCI to the terminal device, where the DCI indicates one of the TCI states activated by using the MAC CE.

The TCI state includes one or two QCL relations. The QCL relation represents a consistency relation between a signal/channel to be received currently and a previously known reference signal. If there is a QCL relation, the terminal device may receive or send an upcoming signal/channel by inheriting a receiving or sending parameter for previously receiving a reference signal. Each TCI state corresponds to one beam. The terminal device may perform communication transmission by using the beam.

The following describes TCI state configuration, activation, and indication.

TCI state configuration: The network device configures a plurality of TCI states for the terminal device by using RRC signaling. Each of these TCI states includes a piece of quasi-co-location information (QCL-Info) whose type is typeD (typeD). Alternatively, the network device may configure TCI-states that do not include QCL-info whose type is typeD. However, these TCI states do not indicate a data transmission beam. Therefore, details are not further described herein.

TCI state activation: After configuring a plurality of TCI states, the network device further needs to activate eight of the TCI states by using the MAC-CE. The eight TCI states correspond one-to-one to eight values of the TCI field in the DCI. That is, the eight TCI states corresponding to the eight values of the TCI field in the DCI are determined by using the MAC CE.

TCI state indication: The network device indicates a specific TCI-state by using the TCI field in the DCI. For example, a value of the TCI field in the DCI sent by the network device to the terminal device is 000, indicating that a TCI state corresponding to 000 is used for the data transmission beam. A reference signal included in QCL-Info whose type is typeD in the TCI state is a channel state information reference signal (channel state information reference signal, CSI-RS) whose index is #1, indicating that the data transmission beam is the same as a receive beam corresponding to the CSI-RS whose index is #1. The receive beam corresponding to the CSI-RS whose index is #1 may be determined through a beam measurement procedure, and is known to the terminal device. Therefore, the terminal device may determine, based on a specific value of the TCI field, a beam corresponding to the data transmission beam, to send or receive data by using the corresponding beam.

It should be noted that the two description manners, namely, the TCI-state and the TCI state, in this specification may be interchanged.

4. Common beam: Currently, each channel is indicated by a separate beam. The channel has a corresponding beam thereof. In this application, the common beam is defined, and is for a plurality of uplink and/or downlink channels.

Common beam: a same beam used by one or more channels, one or more types of channels, one or more reference signals, and/or one or more types of reference signals. The channel includes but is not limited to at least one of a physical downlink control channel (physical downlink control channel, PDCCH), a physical downlink shared channel (physical downlink share channel, PDSCH), a physical uplink control channel (physical uplink control channel, PUCCH), a physical uplink shared channel (physical uplink shared channel, PUSCH), and a physical random access channel (physical random access channel, PRACH). The reference signal includes but is not limited to at least one of a synchronization signal and physical broadcast channel block (synchronization signal and physical broadcast channel block, SSB), a channel state information reference signal, a demodulation reference signal (demodulation reference signal, DMRS), a phase tracking reference signal (phase tracking reference signal, PTRS), a time-frequency tracking reference signal (tracking reference signal, TRS), a sounding reference signal (sounding reference signal, SRS), and the like.

Joint (joint) common beam: The joint common beam is for both transmission of at least one uplink channel or at least one uplink reference signal and transmission of at least one downlink channel or at least one downlink reference signal, for example, the physical downlink control channel, the physical downlink shared channel, the physical uplink control channel, and the physical uplink shared channel. The joint common beam may also be referred to as an uplink and downlink common beam.

Uplink common beam: The uplink common beam is for transmission of a plurality of uplink channels, for transmission of a plurality of types of uplink channels, and/or for transmission of one or more uplink reference signals, for example, the physical uplink control channel, the physical uplink shared channel, and the sounding reference signal.

Downlink common beam: The downlink common beam is for transmission of a plurality of downlink channels, for transmission of a plurality of types of downlink channels, and/or for transmission of one or more downlink reference signals, for example, the physical downlink control channel, the physical downlink shared channel, and the channel state information reference signal.

Form of the common beam: The common beam may have a newly defined structure (different from an existing TCI-state). For example, the common beam includes beam indication-related information, including but not limited to one or more of the following: a common beam identifier (identifier, ID), a logical cell identifier (cell ID), a physical cell identifier, a bandwidth part identifier, a reference signal resource for determining a beam, a QCL type, an uplink power control-related parameter (for example, a path loss measurement reference signal resource, p0, or a closed-loop index (closedLoopIndex)), and an identifier of a path loss reference signal.

Application range of the common beam: The common beam may be at a cell level. That is, one common beam is for transmission of a plurality of channels in one cell. The common beam may be at a bandwidth part (bandwidth part, BWP) level, and is for transmission of a plurality of beams in one BWP. The common beam may alternatively be cross-cell, that is, for transmission of a plurality of channels in a plurality of cells. The plurality of cells may be a plurality of cells in one band (band). The plurality of cells may alternatively be a plurality of inter-band cells.

5. Control-resource set: The control-resource set indicates a frequency domain resource set for physical downlink control channel transmission, is a parameter configuration unit for the physical downlink control channel transmission, and includes a related configuration parameter of a physical downlink control channel.

6. Control-resource set group: The control-resource set group includes at least one control-resource set. Each control-resource set group corresponds to one group index (CORESETPoolIndex). A configuration parameter of the control-resource set includes a group index, indicating the control-resource set group corresponding to the control-resource set.

7. Search space: The search space indicates a time domain position set for physical downlink control channel transmission and time-frequency positions corresponding to a plurality of physical downlink control channel resources in the search space. For example, the search space defines a physical downlink control channel transmission periodicity, namely, a periodicity of a physical downlink control channel occasion in the search space. A physical downlink control channel may be actually understood as a detection point or a detection time period of the physical downlink control channel in time domain. For example, a time unit is a slot, and one physical downlink control channel transmission periodicity includes P slots. Further, the search space indicates an offset value, for example, S, of a start slot of the physical downlink control channel transmission periodicity. In this case, one physical downlink control channel transmission periodicity corresponds to one time window, a number of a start slot is S+P*n, and a number of an end slot is S+P*(n+1)-1, where n is a positive integer, and P is a positive integer. Further, the search space indicates consecutive slots in which there is a physical downlink control channel occasion and that are in the physical downlink control channel transmission periodicity, and symbols on which there is a physical downlink control channel occasion and that are in these slots.

In this application, a network device indicates, to a terminal device, at least two beams available for downlink transmission. The at least two beams available for downlink transmission may be at least two downlink common beams or at least two uplink and downlink common beams, or include at least one downlink common beam and at least one uplink and downlink common beam. The at least two beams available for downlink transmission may be for transmission of a physical downlink control channel, a physical downlink shared channel, and/or a channel state information reference signal. In the following embodiments, an example in which a network device indicates a first beam and a second beam to a terminal device is used to describe a transmission solution in which the terminal device correctly uses, on corresponding physical downlink control channel transmission, beams indicated by the network device.

It should be noted that, when one TRP serves the terminal device, the network device in this application may be understood as the TRP, or a logical device including the TRP. When a plurality of TRPs serve the terminal device, the network device in this application may be understood as one of the plurality of TRPs, or a logical device including the plurality of TRPs. This is not specifically limited in this application. A method provided in this application may be performed between the network device and the terminal device. A form of the network device is not described below again.

In this application, a beam parameter corresponding to a control-resource set is for determining a beam used by the control-resource set. For example, the beam parameter is used by the control-resource set to use a 1^{st} or 2^{nd} common beam, or 1^{st} and 2^{nd} common beams in two currently effective common beams available for downlink transmission. The beam parameter may also be referred to as a beam association parameter, a beam correlation parameter, or another name. Specifically, a name of the beam parameter is not limited in this application.

In this application, a beam used by the control-resource set may alternatively be described as a beam used by a physical downlink control channel corresponding to the control-resource set.

In this application, if a value of the beam parameter corresponding to the control-resource set is default, the value of the beam parameter corresponding to the control-resource set is a default value of the beam parameter corresponding to the control-resource set. If a value of the beam parameter corresponding to the control-resource set is configured by the network device, the value of the beam parameter corresponding to the control-resource set is a configuration value of the beam parameter corresponding to the control-resource set.

The technical solutions in this application are described below with reference to specific embodiments.

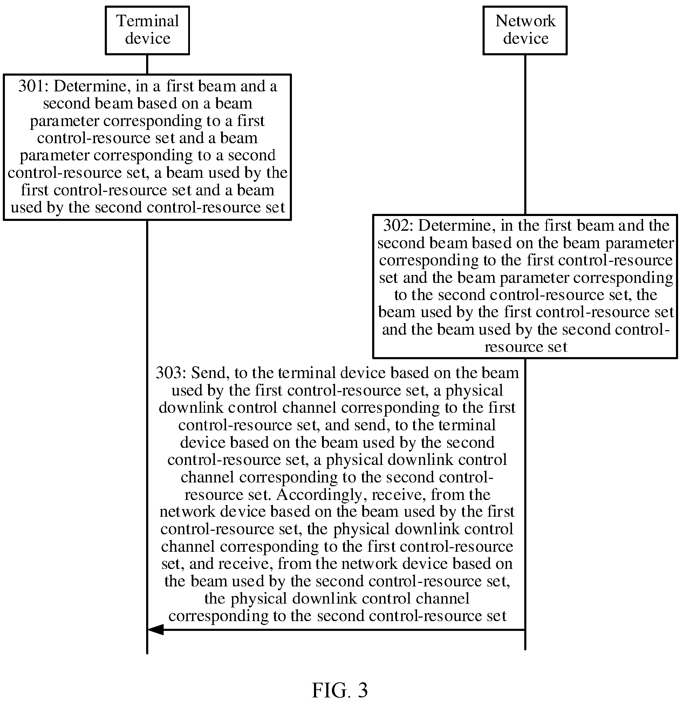

FIG. 3 is a diagram of a first embodiment of a beam determining method according to an embodiment of this application. Refer to FIG. 3. The method includes the following steps.

301: A terminal device determines, in a first beam and a second beam based on a beam parameter corresponding to a first control-resource set and a beam parameter corresponding to a second control-resource set, a beam used by the first control-resource set and a beam used by the second control-resource set.

The first beam and the second beam are two common beams available for downlink transmission. That is, the first beam and the second beam are both the common beams available for downlink transmission. Optionally, the first beam and the second beam are indicated by a network device to the terminal device. For the common beam, refer to the related descriptions of the foregoing technical term. For example, the first beam and the second beam may be two downlink common beams indicated by the network device to the terminal device. Alternatively, the first beam and the second beam may be a downlink common beam and an uplink and downlink common beam that are indicated by the network device to the terminal device. Alternatively, the first beam and the second beam may be two uplink and downlink common beams indicated by the network device to the terminal device.

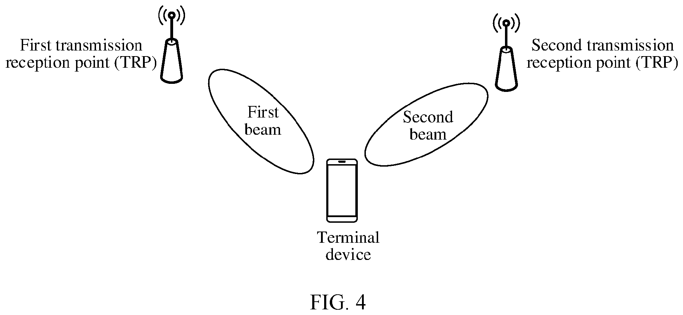

In this application, the first beam and the second beam are beams used by different TRPs. For example, as shown in FIG. 4, in a scenario in which the terminal device performs transmission with a plurality of TRPs, a first TRP performs transmission with the terminal device by using the first beam, and a second TRP performs transmission with the terminal device by using the second beam.

The following describes some manners of distinguishing between the first beam and the second beam. Optionally, the first beam and the second beam include any one of the following:
1. The first beam is a beam with a smaller index in the two common beams available for downlink transmission, and the second beam is a beam with a larger index in the two common beams available for downlink transmission. That is, an index of the first beam is less than an index of the second beam. Alternatively, the first beam is a beam with a larger index in the two common beams available for downlink transmission, and the second beam is a beam with a smaller index in the two common beams available for downlink transmission. That is, an index of the first beam is greater than an index of the second beam.
2. The first beam is a beam with a higher configuration ranking in the two common beams available for downlink transmission, and the second beam is a beam with a lower configuration ranking in the two common beams available for downlink transmission. That is, a configuration ranking of the first beam is higher than a configuration ranking of the second beam. Alternatively, the first beam is a beam with a lower configuration ranking in the two common beams available for downlink transmission, and the second beam is a beam with a higher configuration ranking in the two common beams available for downlink transmission. That is, a configuration ranking of the first beam is lower than a configuration ranking of the second beam.
   Specifically, a configuration ranking of a beam may be understood as an arrangement ranking of the beam in a beam list configured by the network device for the terminal device. The beam list includes a plurality of beams that are of a same type and that are configured by the network device for the terminal device, and specifically includes the first beam and the second beam, for example, a beam list {beam 0, beam 2, beam 3}. A configuration ranking of the beam 0 is highest, and a configuration ranking of the beam 3 is lowest.
3. The first beam belongs to a first beam set, and the second beam belongs to a second beam set.

The first beam set and the second beam set are two beam sets that are of a same type and that are configured by the network device for the terminal device. For example, the first beam set and the second beam set are both downlink common beam sets, or the first beam set and the second beam set are both uplink and downlink common beam sets. In addition, alternatively, one of the first beam set and the second beam set may be a downlink common beam set, and the other one is an uplink and downlink common beam set. The first beam set is a beam set with a smaller index in the two beam sets, and the second beam set is a beam set with a larger index in the two beam sets. That is, an index of the first beam set is less than an index of the second beam set. Alternatively, the first beam set is a beam set with a larger index in the two beam sets, and the second beam set is a beam set with a smaller index in the two beam sets. That is, an index of the first beam set is greater than an index of the second beam set. Alternatively, the first beam set is a beam set with a higher configuration ranking in the two beam sets, and the second beam set is a beam set with a lower configuration ranking in the two beam sets. That is, a configuration ranking of the first beam set is higher than a configuration ranking of the second beam set. Alternatively, the first beam set is a beam set with a lower configuration ranking in the two beam sets, and the second beam set is a beam set with a higher configuration ranking in the two beam sets. A configuration ranking of the first beam set is lower than a configuration ranking of the second beam set.

It should be noted that, optionally, the first beam set corresponds to the first TRP, and the second beam set corresponds to the second TRP. That is, the first beam set includes a beam that is configured by the network device for the terminal device and that is for communication transmission between the first TRP and the terminal device. The second beam set includes a beam that is configured by the network device for the terminal device and that is for communication transmission between the second TRP and the terminal device.

4. The first beam belongs to a first beam group, and the second beam belongs to a second beam group. In a possible implementation, the first beam group and the second beam group are two beam groups that are of a same type and that are activated by the network device by using a MAC CE. For example, the first beam group and the second beam group are both downlink common beam groups, or a first beam set and a second beam set are both uplink and downlink common beam groups. In another possible implementation, alternatively, one of a first beam set and a second beam set may be a downlink common beam group, and the other one is an uplink and downlink common beam group.

Optionally, the first beam group is a beam group with a smaller index in the two beam groups (namely, the first beam group and the second beam group), and the second beam group is a beam group with a larger index in the two beam groups. That is, an index of the first beam group is less than an index of the second beam group. Alternatively, the first beam group is a beam group with a larger index in the two beam groups, and the second beam group is a beam group with a smaller index in the two beam groups. That is, an index of the first beam group is greater than an index of the second beam group. Alternatively, the first beam group is a beam group with a higher ranking of activation in the MAC CE in the two beam groups, and the second beam group is a beam group with a lower ranking of activation in the MAC CE in the two beam groups. An activation ranking of the first beam group is higher than an activation ranking of the second beam group. Alternatively, the first beam group is a beam group with a lower ranking of activation in the MAC CE in the two beam groups, and the second beam group is a beam group with a higher ranking of activation in the MAC CE in the two beam groups. That is, an activation ranking of the first beam group is lower than an activation ranking of the second beam group.

5. The first beam is a beam corresponding to a smaller TCI field value in the two common beams available for downlink transmission, and the second beam is a beam corresponding to a larger TCI field value in the two common beams available for downlink transmission. That is, a TCI field value corresponding to the first beam is less than a TCI field value corresponding to the second beam. Alternatively, the first beam is a beam corresponding to a larger TCI field value in the two common beams available for downlink transmission, and the second beam is a beam corresponding to a smaller TCI field value in the two common beams available for downlink transmission. That is, a TCI field value corresponding to the first beam is greater than a TCI field value corresponding to the second beam.

Specifically, the network device indicates a beam to the terminal device by using a TCI field in DCI. For example, the network device sends two pieces of DCI. DCI with a smaller TCI field value indicates the first beam, and DCI with a larger TCI field value indicates the second beam. That is, a value of a TCI field indicating the first beam is less than a value of a TCI field indicating the second beam. Alternatively, DCI with a larger TCI field value indicates the first beam, and DCI with a smaller TCI field value indicates the second beam. That is, a value of a TCI field indicating the first beam is greater than a value of a TCI field indicating the second beam.

6. The first beam is a beam indicated by a 1^{st} transmission configuration indicator TCI field in DCI, and the second beam is a beam indicated by a 2^{nd} TCI field in the DCI.

The 1^{st} TCI field corresponds to a first beam group, and the 2^{nd} TCI field corresponds to a second beam group. The terminal device determines the first beam in the first beam group based on a field value of the 1^{st} TCI field, and determines the second beam in the second beam group based on a field value of the 2^{nd} TCI field. The 2^{nd} TCI field does not always exist, and whether the 2^{nd} TCI field exists in the DCI depends on configuration information. For example, when two control-resource set groups are configured, the 2^{nd} TCI field does not exist. For another example, when a single control-resource set group is configured, and two common beams of a same type are configured, the 2^{nd} TCI field exists.

Specifically, the DCI includes a plurality of TCI fields, and the TCI fields in the DCI are sequentially interpreted. A 1^{st} read TCI field may be considered as the 1^{st} TCI field in the DCI, a 2^{nd} read TCI field may be considered as the 2^{nd} TCI field in the DCI. The beam indicated by the 1^{st} TCI field in the DCI is the first beam, and the beam indicated by the 2^{nd} TCI field in the DCI is the second beam.

Optionally, the 1^{st} TCI field and the 2^{nd} TCI field in the DCI may be understood as two different subfields in a same TCI field, or a former part of bits and a latter part of bits in the same TCI field.

7. The first beam is a beam corresponding to the network device by using a 1^{st} part of field values in all field values of a TCI field in DCI, and the second beam is a beam corresponding to the network device by using a 2^{nd} part of field values in all the field values of the TCI field in the DCI.

The 1^{st} part of field values correspond to a first beam group, and the 2^{nd} part of field values correspond to a second beam group. The terminal device determines the first beam in the first beam group based on the 1^{st} part of field values, and determines the second beam in the second beam group based on the 2^{nd} part of field values.

Specifically, all the field values of the TCI field in the DCI are divided into two parts, including the 1^{st} part of field values and the 2^{nd} part of field values. Optionally, the 1^{st} part of field values are a part of field values that are smaller, and the 2^{nd} part of field values are a part of field values that are larger. For example, the 1^{st} part of field values are a field value 0 to a field value 3, and the 2^{nd} part of field values are a field value 4 to a field value 7. Alternatively, the 1^{st} part of field values are even-numbered field values, and the 2^{nd} part of field values are odd-numbered field values. For example, the 1^{st} part of field values are even numbers, and the 2^{nd} part of field values are odd numbers. Alternatively, the 1^{st} part of field values are odd-numbered field values, and the 2^{nd} part of field values are even-numbered field values. In other words, if a value of the TCI field in the DCI is the 1^{st} part of field values, it indicates that the DCI indicates the first beam. If a value of the TCI field in the DCI is the 2^{nd} part of field values, it indicates that the DCI indicates the second beam.

8. The first beam and the second beam are two beams that are available for downlink transmission and that are indicated by the network device by using a same TCI field in DCI, for example, two downlink common beams, two uplink and downlink common beams, or one downlink common beam and one uplink and downlink common beam. The first beam is a 1^{st} beam in the two beams available for downlink transmission, and the second beam is a 2^{nd} beam in the two beams. Alternatively, the first beam is a beam with a higher ranking in a MAC CE format in the two beams available for downlink transmission, and the second beam is a beam with a lower ranking in the MAC CE format in the two beams available for downlink transmission. That is, a ranking of the first beam in the MAC CE format is higher than a ranking of the second beam in the MAC CE format. Alternatively, the first beam is a beam with a lower ranking in a MAC CE format in the two beams available for downlink transmission, and the second beam is a beam with a higher ranking in the MAC CE format in available for downlink transmissionthe two beams of a same type. That is, a ranking of the first beam in the MAC CE format is lower than a ranking of the second beam in the MAC CE format.

9. The first beam is a beam indicated by first DCI, and the second beam is a beam indicated by second DCI.

In a possible implementation, the first DCI is used by the network device to indicate the first beam to the terminal device, and the second DCI is used by the network device to indicate the second beam to the terminal device. A value of a first field in the first DCI indicates that a beam indicated by the first DCI is the first beam, and a value of a first field in the second DCI indicates that a beam indicated by the second DCI is the second beam.

The first DCI and the second DCI may be distinguished by using a field in DCI or a part of bits in the field (for example, a 1^{st} bit or a last bit in a TCI field) in the DCI. For example, if a value of the 1^{st} bit in the TCI field in the DCI is equal to 0, the DCI is the first DCI. If a value of the 1^{st} bit in the TCI field in the DCI is equal to 1, the DCI is the second DCI. For another example, if a value of a 1-bit field in the DCI is equal to 0, the DCI is the first DCI. If a value of the 1-bit field is equal to 1, the DCI is the second DCI. In other words, the field or the part of bits in the field in the DCI indicate whether the DCI indicates the first beam or the second beam. When a value of the field or the part of bits in the field is a first value, for example, when the value is equal to 0, it indicates that the DCI indicates the first beam. That is, the DCI is the first DCI. When a value of the field or the part of bits in the field is a second value, for example, when the value is equal to 1, it indicates that the DCI indicates the second beam. That is, the DCI is the second DCI. For another example, when a value of the field or the part of bits in the field in the DCI is a first value, for example, when the value is equal to 0, the TCI field in the DCI corresponds to a first beam group, and the terminal device determines the first beam in the first beam group based on a field value of the TCI field. That is, the DCI is the first DCI. When a value of the field or the part of bits in the field in the DCI is a second value, for example, when the value is equal to 1, the TCI field in the DCI corresponds to a second beam group, and the terminal device determines the second beam in the second beam group based on a field value of the TCI field. That is, the DCI is the second DCI.

In the foregoing implementation, the first beam group and the second beam group are two beam groups activated by using a single MAC CE. Alternatively, the first beam group and the second beam group are two beam groups respectively activated by using two independent MAC CEs. The MAC CE includes one field. When a value of the field is the first value, for example, when the value is 0, it indicates that a beam group indicated by the MAC CE is the first beam group. When a value of the field is the second value, for example, when the value is 1, it indicates that a beam group indicated by the MAC CE is the second beam group.

In another possible implementation, the first DCI and the second DCI may be distinguished by using a control-resource set group corresponding to a PDCCH for carrying. The first DCI is DCI carried on a PDCCH corresponding to a first control-resource set group in two control-resource set groups configured by the network device for the terminal device, and the second DCI is DCI carried on a PDCCH corresponding to a second control-resource set group in the two control-resource set groups.

The beam parameter corresponding to the first control-resource set is for determining the beam used by the first control-resource set. The beam parameter corresponding to the second control-resource set is for determining the beam used by the second control-resource set.

The first control-resource set uses a common beam, and the second control-resource set uses a common beam. The first control-resource set and the second control-resource set are two control-resource sets for physical downlink control channel repetition transmission. In other words, the first control-resource set and the second control-resource set are both for physical downlink control channel repetition transmission.

Optionally, the first control-resource set and the second control-resource set are control-resource sets respectively associated with two search spaces for physical downlink control channel repetition transmission. **In** other words, the first control-resource set and the second control-resource set are respectively associated with different search spaces.

Specifically, the two search spaces are associated with a same association identifier, to indicate that the two search spaces are for physical downlink control channel repetition transmission. The first control-resource set and the second control-resource set are the control-resource sets respectively associated with the two search spaces. It can be learned that the first control-resource set and the second control-resource set are for physical downlink control channel repetition transmission.

The following describes some manners of distinguishing between the first control-resource set and the second control-resource set. Optionally, the first control-resource set and the second control-resource set include any one of the following:
1. The first control-resource set is a control-resource set with a smaller index in the two control-resource sets, and the second control-resource set is a control-resource set with a larger index in the two control-resource sets. That is, an index of the first control-resource set is less than an index of the second control-resource set. Alternatively, the first control-resource set is a control-resource set with a larger index in the two control-resource sets, and the second control-resource set is a control-resource set with a smaller index in the two control-resource sets. That is, an index of the first control-resource set is greater than an index of the second control-resource set.
2. The first control-resource set is a control-resource set with a higher configuration ranking in the two control-resource sets, and the second control-resource set is a control-resource set with a lower configuration ranking in the two control-resource sets. That is, a configuration ranking of the first control-resource set is higher than a configuration ranking of the second control-resource set. Alternatively, the first control-resource set is a control-resource set with a lower configuration ranking in the two control-resource sets, and the second control-resource set is a control-resource set with a higher configuration ranking in the two control-resource sets. That is, a configuration ranking of the first control-resource set is lower than a configuration ranking of the second control-resource set.
3. The first control-resource set is a control-resource set corresponding to a search space with a smaller index in the two search spaces, and the second control-resource set is a control-resource set corresponding to a search space with a larger index in the two search spaces. That is, an index of a search space associated with the first control-resource set is less than an index of a search space associated with the second control-resource set. Alternatively, the first control-resource set is a control-resource set corresponding to a search space with a larger index in the two search spaces, and the second control-resource set is a control-resource set corresponding to a search space with a smaller index in the two search spaces. That is, an index of a search space associated with the first control-resource set is greater than an index of a search space associated with the second control-resource set.
4. The first control-resource set is a control-resource set corresponding to a search space with a higher configuration ranking in the two search spaces, and the second control-resource set is a control-resource set corresponding to a search space with a lower configuration ranking in the two search spaces. That is, a configuration ranking of a search space associated with the first control-resource set is higher than a configuration ranking of a search space associated with the second control-resource set. Alternatively, the first control-resource set is a control-resource set corresponding to a search space with a lower configuration ranking in the two search spaces, and the second control-resource set is a control-resource set corresponding to a search space with a higher configuration ranking in the two search spaces. That is, a configuration ranking of a search space associated with the first control-resource set is lower than a configuration ranking of a search space associated with the second control-resource set.

Optionally, the beam used by the first control-resource set is different from the beam used by the second control-resource set.

Optionally, for either of the first control-resource set and the second control-resource set, when a value of a beam parameter corresponding to the control-resource set is the first value, the control-resource set uses the first beam. Alternatively, when a value of a beam parameter corresponding to the control-resource set is the second value, the control-resource set uses the second beam. For example, the first value is 0, and the second value is 1.

Optionally, for either of the first control-resource set and the second control-resource set, when a value of a beam parameter corresponding to the control-resource set is the first value, the control-resource set uses the first beam. Alternatively, when a value of a beam parameter corresponding to the control-resource set is the second value, the control-resource set uses the second beam. Alternatively, when a value of a beam parameter corresponding to the control-resource set is a third value, the control-resource set uses the first beam and the second beam. For example, the first value is 0, the second value is 1, and the third value is 2.

For example, when a value of the beam parameter corresponding to the first control-resource set is the first value, the terminal device determines that the first control-resource set uses the first beam. Alternatively, when a value of the beam parameter corresponding to the first control-resource set is the second value, the terminal device determines that the second control-resource set uses the second beam. Alternatively, when a value of the beam parameter corresponding to the first control-resource set is the third value, the terminal device determines that the second control-resource set uses the first beam and the second beam. Similarly, for the second control-resource set, the terminal device may determine, with reference to a value of the beam parameter corresponding to the second control-resource set, the beam used by the second control-resource set.

Optionally, the beam used by the first control-resource set is different from the beam used by the second control-resource set. For example, the first control-resource set uses the first beam, and the second control-resource set uses the second beam. Alternatively, the first control-resource set uses the second beam, and the second control-resource set uses the first beam.

Optionally, the beam used by the first control-resource set and the beam used by the second control-resource set belong to different beam sets or different TCI state sets. For example, the beam used by the first control-resource set belongs to the first beam set, and the beam used by the second control-resource set belongs to the second beam set. The first beam set and the second beam set may be two beam sets configured by the network device for the terminal device, or two beam sets activated by the network device for the terminal device. The first beam set corresponds to the first TRP, and the second beam set corresponds to the second TRP. As shown in FIG. 4, in the scenario in which the terminal device performs transmission with the plurality of TRPs, the terminal device communicates, with the first TRP by using the first beam, a physical downlink control channel corresponding to the first control-resource set, and the terminal device communicates, with the second TRP by using the second beam, a physical downlink control channel corresponding to the second control-resource set, so that physical downlink control channel repetition transmission is performed by using the different TRPs, and communication transmission reliability is improved.

In this application, the value of the beam parameter corresponding to the first control-resource set and the value of the beam parameter corresponding to the second control-resource set may be configured or indicated by the network device, or may be default. The following describes three possible cases.

Case 1: The value of the beam parameter corresponding to the first control-resource set and the value of the beam parameter corresponding to the second control-resource set are configured or indicated by the network device.

In Case 1, the network device explicitly configures or indicates the value of the beam parameter for each of the first control-resource set and the second control-resource set.

In a possible implementation, the network device respectively configures the values of the beam parameters for the first control-resource set and the second control-resource set by using an RRC message. Further, optionally, the beam parameter corresponding to the first control-resource set may be included in configuration information of the first control-resource set. The beam parameter corresponding to the second control-resource set may be included in configuration information of the second control-resource set.

In another possible implementation, the network device respectively indicates the values of the beam parameters for the first control-resource set and the second control-resource set by using a MAC CE.

In Case 1, the value of the beam parameter corresponding to the first control-resource set and the beam parameter corresponding to the second control-resource set satisfy at least one of the following:
1. Neither the value of the beam parameter corresponding to the first control-resource set nor the value of the beam parameter corresponding to the second control-resource set is the third value.
   Specifically, neither of the values of the beam parameters respectively corresponding to the first control-resource set and the second control-resource set can be configured or indicated as the third value. That is, the first control-resource set cannot be configured to use the first beam and the second beam, and the second control-resource set cannot be configured to use the first beam and the second beam. In this way, the value of the beam parameter corresponding to the first control-resource set and the value of the beam parameter corresponding to the second control-resource set are constrained from a configuration perspective. In other words, the value of the beam parameter of the first control-resource set can only be one of the first value and the second value, and the value of the beam parameter of the second control-resource set can only be one of the first value and the second value.
2. The value of the beam parameter corresponding to the first control-resource set is different from the value of the beam parameter corresponding to the second control-resource set.
   Specifically, the values of the beam parameters respectively corresponding to the first control-resource set and the second control-resource set need to be different. The first control-resource set and the second control-resource set cannot use completely same common beams. The first beam corresponds to the first TRP, and the second beam corresponds to the second TRP. The first control-resource set and the second control-resource set are for physical downlink control channel repetition transmission. In this way, physical downlink control channel repetition transmission is performed with the terminal device by using the different TRPs, to implement reliable transmission, and help improve communication transmission performance.
3. A value of a beam parameter corresponding to one of the first control-resource set and the second control-resource set is the first value, and a value of a beam parameter corresponding to the other control-resource set is the second value.
   Specifically, the one of the first control-resource set and the second control-resource set uses the first beam, and the other control-resource set uses the second beam. In this way, physical downlink control channel repetition transmission is performed with the terminal device by using the different TRPs, to implement reliable transmission, and help improve communication transmission performance.
4. The value of the beam parameter corresponding to the first control-resource set is the first value, and the value of the beam parameter corresponding to the second control-resource set is the second value. That is, it is specified that the first control-resource set uses the first beam, and the second control-resource set uses the second beam.
5. The value of the beam parameter corresponding to the first control-resource set is the second value, and the value of the beam parameter corresponding to the second control-resource set is the first value. That is, it is specified that the first control-resource set uses the second beam, and the second control-resource set uses the first beam.

In Case 1, when the network device configures or indicates the values of the beam parameters for the first control-resource set and the second control-resource set, one or more of the foregoing need to be satisfied. In this way, physical downlink control channel repetition transmission is performed with the terminal device by using the different TRPs, to implement the reliable transmission, and help improve the communication transmission performance.

Case 2: A value of a beam parameter corresponding to one of the first control-resource set and the second control-resource set is default, and a value of a beam parameter corresponding to the other control-resource set is configured by the network device.

Optionally, the network device configures, for the terminal device by using an RRC message, the value of the beam parameter corresponding to the other control-resource set. Further, optionally, the beam parameter corresponding to the other control-resource set may be included in configuration information of the other control-resource set.

In Case 2, the default value of the beam parameter corresponding to the one of the first control-resource set and the second control-resource set is determined based on the value of the beam parameter corresponding to the other control-resource set.

Specifically, in Case 2, the terminal device needs to determine the default value of the beam parameter corresponding to the one of the first control-resource set and the second control-resource set. The default value depends on the value of the beam parameter corresponding to the other control-resource set.

For example, the value of the beam parameter corresponding to the first control-resource set is configured by the network device, and the value of the beam parameter corresponding to the second control-resource set is default. The terminal device needs to determine the default value of the beam parameter corresponding to the second control-resource set. The default value is determined based on the value of the beam parameter corresponding to the first control-resource set. Specifically, if the value of the beam parameter corresponding to the first control-resource set is configured as the first value, the default value of the beam parameter corresponding to the second control-resource set is the second value. If the value of the beam parameter corresponding to the first control-resource set is configured as the second value, the default value of the beam parameter corresponding to the second control-resource set is the first value.

For example, the value of the beam parameter corresponding to the second control-resource set is configured by the network device, and the value of the beam parameter corresponding to the first control-resource set is default. The terminal device needs to determine the default value of the beam parameter corresponding to the first control-resource set. The default value is determined based on the value of the beam parameter corresponding to the second control-resource set. Specifically, if the value of the beam parameter corresponding to the second control-resource set is configured as the first value, the default value of the beam parameter corresponding to the first control-resource set is the second value. If the value of the beam parameter corresponding to the second control-resource set is configured as the second value, the default value of the beam parameter corresponding to the first control-resource set is the first value.

In Case 2, in other words, when the one of the first control-resource set and the second control-resource set is configured to use the first beam, and the value of the beam parameter corresponding to the other control-resource set is default (not configured), the other control-resource set uses the second beam by default. Alternatively, when the one of the first control-resource set and the second control-resource set is configured to use the second beam, and the value of the beam parameter corresponding to the other control-resource set is default (not configured), the other control-resource set uses the first beam by default.

In Case 2, optionally, the values of the beam parameters respectively corresponding to the first control-resource set and the second control-resource set are not the third value.

In the manner shown in Case 2, even if a beam parameter corresponding to a single control-resource set in the first control-resource set and the second control-resource set is default, it can always be ensured that the common beams used by the two control-resource sets are always respectively the first beam and the second beam. In this way, high-reliability physical downlink control channel repetition transmission based on different beams is always implemented.

Case 3: The value of the beam parameter corresponding to the first control-resource set and the value of the beam parameter corresponding to the second control-resource set are default.

The default value of the beam parameter corresponding to the first control-resource set is the first value, and the default value of the beam parameter corresponding to the second control-resource set is the second value. Alternatively, the default value of the beam parameter corresponding to the first control-resource set is the second value, and the default value of the beam parameter corresponding to the second control-resource set is the first value.

In Case 3, neither of the values of the beam parameters respectively corresponding to the first control-resource set and the second control-resource set are explicitly configured. The terminal device may uniquely determine, according to a first rule, the default value of the beam parameter corresponding to the first control-resource set and the default value of the beam parameter corresponding to the second control-resource set. The first rule includes: The default value of the beam parameter corresponding to the first control-resource set is the first value, and the default value of the beam parameter corresponding to the second control-resource set is the second value. Alternatively, the default value of the beam parameter corresponding to the first control-resource set is the second value, and the default value of the beam parameter corresponding to the second control-resource set is the first value. In other words, in Case 3, the first control-resource set uses the first beam by default, and the second control-resource set uses the second beam by default; or the first control-resource set uses the second beam by default, and the second control-resource set uses the first beam by default.

According to the foregoing method, the three possible cases are provided for the first control-resource set and the second control-resource set, and a corresponding configuration or indication constraint and methods for determining a default value of a default beam parameter are respectively provided. In this way, in any one of the foregoing cases, the terminal device can determine the beam used by the first control-resource set and the beam used by the second control-resource set. In addition, it is always ensured that the common beams used by the first control-resource set and the second control-resource set are always the first beam and the second beam respectively. In this way, the high-reliability physical downlink control channel repetition transmission based on the different beams is always implemented.

Optionally, step 301 specifically includes: When a first condition is satisfied, the terminal device determines, in the first beam and the second beam based on the beam parameter corresponding to the first control-resource set and the beam parameter corresponding to the second control-resource set, the beam used by the first control-resource set and the beam used by the second control-resource set. In other words, the terminal device determines, by using the method shown in step 301 only when the first condition is satisfied, the beams respectively used by the first control-resource set and the second control-resource set.

The first condition includes at least one or a combination of the following:
1. The first control-resource set and the second control-resource set each use the common beam. Optionally, the network device configures the first control-resource set and the second control-resource set to each use the common beam. Alternatively, the first control-resource set and the second control-resource set each use the common beam by default.

Optionally, a further limitation is as follows: Only when the first control-resource set and the second control-resource set each are configured to use the common beam, does the terminal device determine, based on the beam parameter corresponding to the first control-resource set, the beam used by the first control-resource set, and determine, based on the beam parameter corresponding to the second control-resource set, the beam used by the second control-resource set. The value of the beam parameter corresponding to the first control-resource set and the value of the beam parameter corresponding to the second control-resource set should satisfy a constraint condition shown in one of Case 1 to Case 3.

It should be noted that, if a control-resource set uses a common beam, the control-resource set uses one of common beams configured by the network device. If a control-resource set does not use a common beam, the control-resource set uses a dedicated beam separately indicated by the network device to the terminal device instead of the common beam.

Optionally, each of the first control-resource set and the second control-resource set has a corresponding common beam indication parameter, indicating whether the control-resource set uses a common beam. The common beam indication parameter may also be referred to as a beam indication parameter or another name. Specifically, a name of the common beam indication parameter is not limited in this application. In this embodiment, a common beam indication parameter corresponding to the first control-resource set indicates that the first control-resource set uses the common beam, and common beam indication parameter corresponding to the second control-resource set indicates that the second control-resource set uses the common beam.
2. The network device configures common beams for the terminal device.
3. The network device configures, for the terminal device, two groups of common beams available for downlink transmission.
4. Index values of control-resource set pools associated with all control-resource sets configured by the network device for the terminal device are the same. Alternatively, all control-resource sets configured by the network device for the terminal device are associated with a same control-resource set pool. In other words, the network device does not configure, for the terminal device, control-resource sets that belong to two different control-resource set pools.

For example, the index values of the control-resource set pools associated with all the control-resource sets of the terminal device are all configured as 0, or are all configured as 1. Alternatively, one part of the index values are configured as 0, and the other part of the index values are not configured (a default value of a control-resource set for which an index value of a control-resource set pool is not configured is 0).

Optionally, that the network device indicates the first beam and the second beam to the terminal device includes: The network device indicates a first TCI state and a second TCI state to the terminal device. If the terminal device determines, based on the beam parameter corresponding to the first control-resource set, that the first control-resource set uses a receive beam (namely, the first beam) corresponding to the first TCI state, and determines, based on the beam parameter corresponding to the second control-resource set, that the second control-resource set uses a receive beam (namely, the second beam) corresponding to the second TCI state, the terminal device determines, based on the first TCI state, a receive beam (namely, the first beam) for receiving the physical downlink control channel corresponding to the first control-resource set, and determines, based on the second TCI state, a receive beam (namely, the second beam) for receiving the physical downlink control channel corresponding to the second control-resource set. If the terminal device determines, based on the beam parameter corresponding to the first control-resource set, that the first control-resource set uses a receive beam (namely, the second beam) corresponding to the second TCI state, and determines, based on the beam parameter corresponding to the second control-resource set, that the second control-resource set uses a receive beam (namely, the first beam) corresponding to the first TCI state, the terminal device determines, based on the second TCI state, a receive beam (namely, the second beam) for receiving the physical downlink control channel corresponding to the first control-resource set, and determines, based on the first TCI state, a receive beam (namely, the first beam) for receiving the physical downlink control channel corresponding to the second control-resource set.

In addition to configuring, by using the beam parameter, a common beam used by a control-resource set, control-resource sets may alternatively be grouped. A control-resource set that belongs to a 1^{st} group uses the first beam, a control-resource set that belongs to a 2^{nd} group uses the second beam, and a control-resource set that belongs to both the groups simultaneously uses the first beam and the second beam.

302: The network device determines, in the first beam and the second beam based on the beam parameter corresponding to the first control-resource set and the beam parameter corresponding to the second control-resource set, the beam used by the first control-resource set and the beam used by the second control-resource set.

Step 302 is similar to step 301. For details, refer to the related descriptions of step 301.

It should be noted that there is no fixed execution sequence between step 301 and step 302. Step 301 may be performed before step 302, step 302 is performed before step 301, or step 301 and step 302 are simultaneously performed based on a case. This is not specifically limited in this application.

Optionally, that the network device indicates the first beam and the second beam to the terminal device includes: The network device indicates the first TCI state and the second TCI state to the terminal device. If the network device determines, based on the beam parameter corresponding to the first control-resource set, that the first control-resource set uses a transmit beam (namely, the first beam) corresponding to the first TCI state, and the network device determines, based on the beam parameter corresponding to the second control-resource set, that the second control-resource set uses a transmit beam (namely, the second beam) corresponding to the second TCI state, the network device determines, based on the first TCI state, a transmit beam for sending the physical downlink control channel corresponding to the first control-resource set, and determines, based on the second TCI state, a transmit beam for sending the physical downlink control channel corresponding to the second control-resource set. If the network device determines, based on the beam parameter corresponding to the first control-resource set, that the first control-resource set uses a transmit beam (namely, the second beam) corresponding to the second TCI state, and the network device determines, based on the beam parameter corresponding to the second control-resource set, that the second control-resource set uses a transmit beam (namely, the first beam) corresponding to the first TCI state, the network device determines, based on the second TCI state, a transmit beam for sending the physical downlink control channel corresponding to the first control-resource set, and determines, based on the first TCI state, a transmit beam for sending the physical downlink control channel corresponding to the second control-resource set.

303: The network device sends, to the terminal device based on the beam used by the first control-resource set, the physical downlink control channel corresponding to the first control-resource set, and sends, to the terminal device based on the beam used by the second control-resource set, the physical downlink control channel corresponding to the second control-resource set. Accordingly, the terminal device receives, from the network device based on the beam used by the first control-resource set, the physical downlink control channel corresponding to the first control-resource set, and receives, from the network device based on the beam used by the second control-resource set, the physical downlink control channel corresponding to the second control-resource set.

For example, as shown in FIG. 4, the first control-resource set uses the first beam, and the second control-resource set uses the second beam. The first beam corresponds to the first TRP, and the second beam corresponds to the second TRP. The network device includes the first TRP and the second TRP. The terminal device receives, from the first TRP by using the first beam, the physical downlink control channel corresponding to the first control-resource set. The terminal device receives, from the second TRP by using the second beam, the physical downlink control channel corresponding to the second control-resource set. In this way, physical downlink control channel repetition transmission is performed with the terminal device by using the different TRPs, to implement the reliable transmission, and help improve the communication transmission performance.

In this embodiment of this application, the terminal device determines, in the first beam and the second beam based on the beam parameter corresponding to the first control-resource set and the beam parameter corresponding to the second control-resource set, the beam used by the first control-resource set and the beam used by the second control-resource set. The first beam and the second beam are the two common beams available for downlink transmission. The first control-resource set and the second control-resource set are the two control-resource sets for physical downlink control channel repetition transmission. The terminal device receives, based on the beam used by the first control-resource set, the physical downlink control channel corresponding to the first control-resource set, and receives, based on the beam used by the second control-resource set, the physical downlink control channel corresponding to the second control-resource set. In this way, the terminal device correctly uses, on the channels corresponding to the corresponding control-resource sets, the beams indicated by the network device, so that the channels corresponding to the control-resource sets are received by using the correct beams, to improve the communication transmission performance. In addition, the terminal device determines, based on the beam parameter corresponding to the first control-resource set, the beam used by the first control-resource set, and determines, based on the beam parameter corresponding to the second control-resource set, the beam used by the second control-resource set. The network device does not need to indicate, to the terminal device, a beam used by each control-resource set, to reduce beam indication overheads.

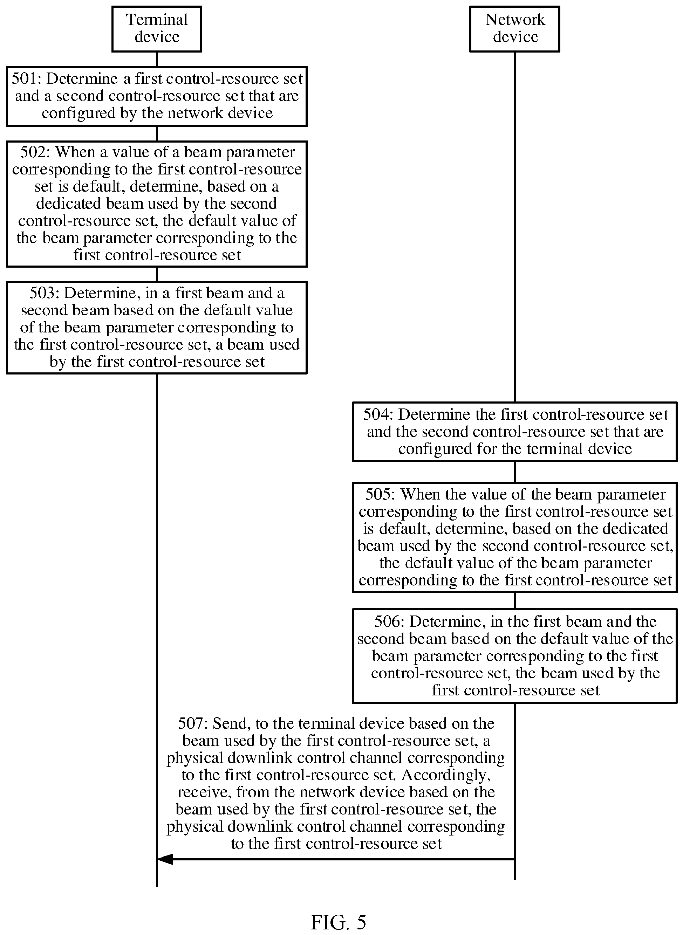

FIG. 5 is a diagram of a second embodiment of a beam determining method according to an embodiment of this application. Refer to FIG. 5. The method includes the following steps.

501: A terminal device determines a first control-resource set and a second control-resource set that are configured by a network device.

The first control-resource set and the second control-resource set are two control-resource sets for physical downlink control channel repetition transmission. That is, the first control-resource set and the second control-resource set are both for physical downlink control channel repetition transmission. The first control-resource set uses a common beam, and the second control-resource set uses a dedicated beam. That is, the second control-resource set does not use a common beam, but uses a dedicated beam indicated by the network device to the terminal device.

For some possible manners of distinguishing between the first control-resource set and the second control-resource set, refer to the related descriptions of step 301 in the embodiment shown in FIG. 3. Details are not described herein again.

502: When a value of a beam parameter corresponding to the first control-resource set is default, the terminal device determines, based on the dedicated beam used by the second control-resource set, the default value of the beam parameter corresponding to the first control-resource set.

Specifically, when the value of the beam parameter corresponding to the first control-resource set is default, the terminal device may determine, based on the dedicated beam used by the second control-resource set, the default value of the beam parameter corresponding to the first control-resource set. In other words, the terminal device may determine, in a first beam and a second beam based on the dedicated beam used by the second control-resource set, the beam used by the first control-resource set. For the first beam and the second beam, refer to the related descriptions of step 301 in the embodiment shown in FIG. 3.

Optionally, the network device configures or activates, for the terminal device, two beam sets or TCI state sets available for downlink transmission. The common beam used by the first control-resource set and the dedicated beam used by the second control-resource set belong to different beam sets. In other words, the common beam used by the first control-resource set and the dedicated beam used by the second control-resource set belong to different TCI state sets. That is, a beam indicated by the default value of the beam parameter corresponding to the first control-resource set and the dedicated beam used by the second control-resource set belong to the different beam sets. For example, when the dedicated beam used by the second control-resource set belongs to a first beam set, the beam indicated by the default value of the beam parameter of the first control-resource set is a beam that is in the first beam and the second beam and that belongs to a second beam set. Alternatively, when the dedicated beam used by the second control-resource set belongs to a second beam set, the beam indicated by the default value of the beam parameter of the first control-resource set is a beam that is in the first beam and the second beam and that belongs to a first beam set. In other words, when the dedicated beam used by the second control-resource set belongs to the first beam set, the beam used by the first control-resource set is the beam that is in the first beam and the second beam and that belongs to the second beam set. Alternatively, when the dedicated beam used by the second control-resource set belongs to the second beam set, the beam used by the first control-resource set is the beam that is in the first beam and the second beam and that belongs to the first beam set.

For the beam indicated by the default value of the beam parameter corresponding to the first control-resource set, refer to related descriptions of step 503 below.

For example, the beam used by the first control-resource set belongs to the first beam set, and the beam used by the second control-resource set belongs to the second beam set. The first beam set and the second beam set may be two beam sets configured by the network device for the terminal device, or two beam sets activated by the network device for the terminal device. The first beam set corresponds to a first TRP, and the second beam set corresponds to a second TRP. As shown in FIG. 4, in a scenario in which the terminal device performs transmission with a plurality of TRPs, the terminal device communicates, with the first TRP by using the first beam, a physical downlink control channel corresponding to the first control-resource set, and the terminal device communicates, with the second TRP by using the second beam, a physical downlink control channel corresponding to the second control-resource set, so that physical downlink control channel repetition transmission is performed with the terminal device by using different TRPs, and communication transmission reliability is improved.

503: The terminal device determines, in the first beam and the second beam based on the default value of the beam parameter corresponding to the first control-resource set, the beam used by the first control-resource set.

The first beam and the second beam are two common beams available for downlink transmission. For the first beam and the second beam, refer to the related descriptions of step 301 in the embodiment shown in FIG. 3. Details are not described herein again.

Optionally, when the default value of the beam parameter corresponding to the first control-resource set is a first value, the first control-resource set uses the first beam. That is, the beam indicated by the default value of the beam parameter corresponding to the first control-resource set is the first beam. Alternatively, when the default value of the beam parameter corresponding to the first control-resource set is a second value, the first control-resource set uses the second beam. That is, the beam indicated by the default value of the beam parameter corresponding to the first control-resource set is the second beam. Alternatively, when the default value of the beam parameter corresponding to the first control-resource set is a third value, the first control-resource set uses the first beam and the second beam. That is, beams indicated by the default value of the beam parameter corresponding to the first control-resource set are the first beam and the second beam.

Optionally, the default value of the beam parameter corresponding to the first control-resource set is one of the first value and the second value, and the beam indicated by the default value of the beam parameter corresponding to the first control-resource set and the dedicated beam used by the second control-resource set belong to the different beam sets. The two different beam sets are two beams configured or activated by the network device for the terminal device.

For example, if the default value of the beam parameter corresponding to the first control-resource set is the first value, it can be learned that the beam indicated by the default value is the first beam. The first beam and the dedicated beam used by the second control-resource set belong to the different beam sets. The different beam sets correspond to the different TRPs, so that physical downlink control channel repetition transmission is performed by using the different TRPs, and the communication transmission reliability is improved.

Optionally, that the network device indicates the first beam and the second beam to the terminal device includes: The network device indicates a first TCI state and a second TCI state to the terminal device. If the terminal device determines, based on the default value of the beam parameter corresponding to the first control-resource set, that the first control-resource set uses a receive beam (namely, the first beam) corresponding to the first TCI state, the terminal device determines, based on the first TCI state, a receive beam (namely, the first beam) for receiving the physical downlink control channel corresponding to the first control-resource set. If the terminal device determines, based on the default value of the beam parameter corresponding to the first control-resource set, that the first control-resource set uses a receive beam (namely, the second beam) corresponding to the second TCI state, the terminal device determines, based on the second TCI state, a receive beam (namely, the second beam) for receiving the physical downlink control channel corresponding to the first control-resource set.

504: The network device determines the first control-resource set and the second control-resource set that are configured for the terminal device.

505: When the value of the beam parameter corresponding to the first control-resource set is default, the network device determines, based on the dedicated beam used by the second control-resource set, the default value of the beam parameter corresponding to the first control-resource set.

506: The terminal device determines, in the first beam and the second beam based on the default value of the beam parameter corresponding to the first control-resource set, the beam used by the first control-resource set.

It should be noted that there is no fixed execution sequence between step 501 to step 503 and step 504 to step 506. Step 501 to step 503 may be performed before step 504 to step 506, step 504 to step 506 may be performed before step 501 to step 503, or step 501 to step 503 and step 504 to step 506 are simultaneously performed based on a case. This is not specifically limited in this application.

Optionally, that the network device indicates the first beam and the second beam to the terminal device includes: The network device indicates the first TCI state and the second TCI state to the terminal device. If the network device determines, based on the default value of the beam parameter corresponding to the first control-resource set, that the first control-resource set uses a transmit beam (namely, the first beam) corresponding to the first TCI state, the network device determines, based on the first TCI state, a transmit beam for sending the physical downlink control channel corresponding to the first control-resource set. If the network device determines, based on the default value of the beam parameter corresponding to the first control-resource set, that the second control-resource set uses a transmit beam (namely, the second beam) corresponding to the second TCI state, the network device determines, based on the second TCI state, a transmit beam for sending the physical downlink control channel corresponding to the second control-resource set.

507: The network device sends, to the terminal device based on the beam used by the first control-resource set, the physical downlink control channel corresponding to the first control-resource set. Accordingly, the terminal device receives, from the network device based on the beam used by the first control-resource set, the physical downlink control channel corresponding to the first control-resource set.

For example, the first control-resource set uses the first beam, and the second control-resource set uses the dedicated beam. The first beam corresponds to the first TRP, and the dedicated beam corresponds to the second TRP. The network device includes the first TRP and the second TRP. The terminal device receives, from the first TRP by using the first beam, the physical downlink control channel corresponding to the first control-resource set. The terminal device receives, from the second TRP by using the dedicated beam, the physical downlink control channel corresponding to the second control-resource set. In this way, physical downlink control channel repetition transmission is performed with the terminal device by using the different TRPs, to implement reliable transmission, and help improve communication transmission performance.

In this embodiment of this application, the terminal device determines the first control-resource set and the second control-resource set that are configured by the network device. The first control-resource set and the second control-resource set are the two control-resource sets for physical downlink control channel repetition transmission. The first control-resource set uses the common beam, and the second control-resource set uses the dedicated beam. When the value of the beam parameter corresponding to the first control-resource set is default, the terminal device determines, based on the dedicated beam used by the second control-resource set, the default value of the beam parameter corresponding to the first control-resource set. The terminal device determines, in the first beam and the second beam based on the default value of the beam parameter corresponding to the first control-resource set, the beam used by the first control-resource set. The first beam and the second beam are the two common beams available for downlink transmission. In this way, the terminal device correctly uses, on the channels corresponding to the corresponding control-resource sets, the beams indicated by the network device, so that the channels corresponding to the control-resource sets are received by using the correct beams, to improve the communication transmission performance. In addition, the terminal device determines, based on the default value of the beam parameter corresponding to the first control-resource set, the beam used by the first control-resource set. The network device does not need to indicate, to the terminal device, a beam used by each control-resource set, to reduce beam indication overheads.

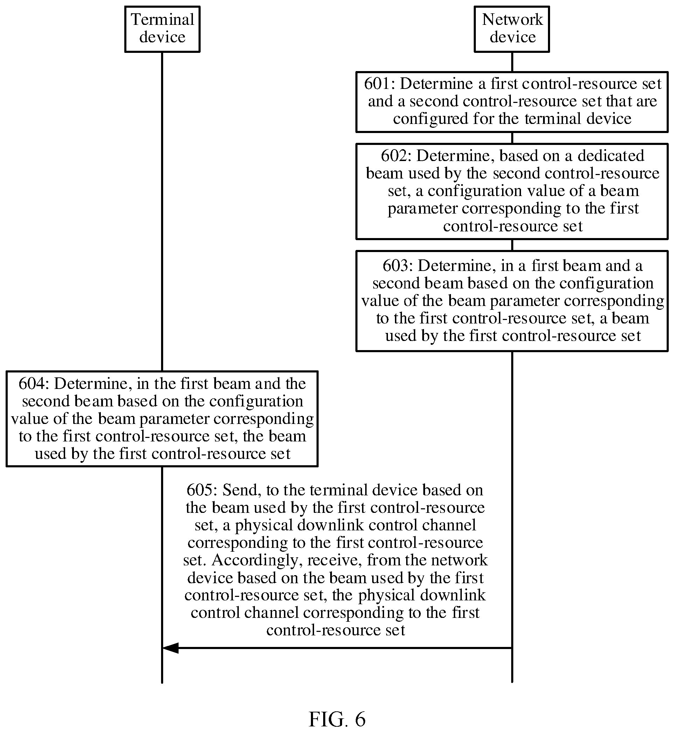

FIG. 6 is a diagram of a third embodiment of a beam determining method according to an embodiment of this application. Refer to FIG. 6. The method includes the following steps.

601: A network device determines a first control-resource set and a second control-resource set that are configured for a terminal device.

The first control-resource set and the second control-resource set are two control-resource sets for physical downlink control channel repetition transmission. That is, the first control-resource set and the second control-resource set are both for physical downlink control channel repetition transmission. The first control-resource set uses a common beam, and the second control-resource set uses a dedicated beam. That is, the second control-resource set does not use a common beam, but uses a dedicated beam indicated by the network device to the terminal device.

For some possible manners of distinguishing between the first control-resource set and the second control-resource set, refer to the related descriptions of step 301 in the embodiment shown in FIG. 3. Details are not described herein again.

602: The network device determines, based on the dedicated beam used by the second control-resource set, a configuration value of a beam parameter corresponding to the first control-resource set.

In step 602, for the value configured by the network device for the beam parameter corresponding to the first control-resource set, referring to the dedicated beam used by the second control-resource set is needed.

Specifically, a value of the beam parameter corresponding to the first control-resource set is configured by the network device. The network device may determine, based on the dedicated beam used by the second control-resource set, the configuration value of the beam parameter corresponding to the first control-resource set. In other words, the network device determines, in a first beam and a second beam based on the dedicated beam used by the second control-resource set, the beam used by the first control-resource set. For the first beam and the second beam, refer to the related descriptions of step 301 in the embodiment shown in FIG. 3.

Optionally, the network device configures or activates, for the terminal device, two beam sets or TCI state sets available for downlink transmission. The common beam used by the first control-resource set and the dedicated beam used by the second control-resource set belong to different beam sets. In other words, the common beam used by the first control-resource set and the dedicated beam used by the second control-resource set belong to different TCI state sets. That is, a beam indicated by the configuration value of the beam parameter corresponding to the first control-resource set and the dedicated beam used by the second control-resource set belong to the different beam sets. For example, when the dedicated beam used by the second control-resource set belongs to a first beam set, the beam indicated by the value configured by the network device for the beam parameter corresponding to the first control-resource set is a beam that is in the first beam and the second beam and that belongs to a second beam set. Alternatively, when the dedicated beam used by the second control-resource set belongs to a second beam set, the beam indicated by the value configured by the network device for the beam parameter corresponding to the first control-resource set is a beam that is in the first beam and the second beam and that belongs to a first beam set.

For the beam indicated by the configuration value of the beam parameter corresponding to the first control-resource set, refer to related descriptions of step 603 below.

For example, the beam used by the first control-resource set belongs to the first beam set, and the beam used by the second control-resource set belongs to the second beam set. The first beam set and the second beam set may be two beam sets configured by the network device for the terminal device, or two beam sets activated by the network device for the terminal device. The first beam set corresponds to a first TRP, and the second beam set corresponds to a second TRP. As shown in FIG. 4, in a scenario in which the terminal device performs transmission with a plurality of TRPs, the terminal device communicates, with the first TRP by using the first beam, a physical downlink control channel corresponding to the first control-resource set, and the terminal device communicates, with the second TRP by using the second beam, a physical downlink control channel corresponding to the second control-resource set, so that physical downlink control channel repetition transmission is performed with the terminal device by using different TRPs, and communication transmission reliability is improved.

603: The network device determines, in the first beam and the second beam based on the configuration value of the beam parameter corresponding to the first control-resource set, the beam used by the first control-resource set.

The first beam and the second beam are two common beams that are available for downlink transmission and that are indicated by the network device to the terminal device. For the first beam and the second beam, refer to the related descriptions of step 301 in the embodiment shown in FIG. 3. Details are not described herein again.

Optionally, when the configuration value of the beam parameter corresponding to the first control-resource set is a first value, the first control-resource set uses the first beam. In other words, the beam indicated by the configuration value of the beam parameter corresponding to the first control-resource set is the first beam. Alternatively, when the configuration value of the beam parameter corresponding to the first control-resource set is a second value, the first control-resource set uses the second beam. That is, the beam indicated by the configuration value of the beam parameter corresponding to the first control-resource set is the second beam. Alternatively, when the configuration value of the beam parameter corresponding to the first control-resource set is a third value, the first control-resource set uses the first beam and the second beam. That is, beams indicated by the configuration value of the beam parameter corresponding to the first control-resource set are the first beam and the second beam.

Optionally, the configuration value of the beam parameter corresponding to the first control-resource set is one of the first value and the second value, and the beam indicated by the configuration value of the beam parameter corresponding to the first control-resource set and the dedicated beam used by the second control-resource set belong to two different beam sets. The two different beam sets are two beam sets configured or activated by the network device for the terminal device.

For example, if the configuration value of the beam parameter corresponding to the first control-resource set is the first value, it can be learned that the beam indicated by the configuration value is the first beam. The first beam and the dedicated beam used by the second control-resource set belong to the different beam sets. The different beam sets correspond to the different TRPs, so that physical downlink control channel repetition transmission is performed by using the different TRPs, and the communication transmission reliability is improved.

Optionally, that the network device indicates the first beam and the second beam to the terminal device includes: The network device indicates a first TCI state and a second TCI state to the terminal device. If the network device determines, based on the configuration value of the beam parameter corresponding to the first control-resource set, that the first control-resource set uses a beam (namely, the first beam) corresponding to the first TCI state, the network device determines, based on the first TCI state, a transmit beam for sending the physical downlink control channel corresponding to the first control-resource set. If the network device determines, based on the configuration value of the beam parameter corresponding to the first control-resource set, that the TCI stateTCI statesecond control-resource set uses a beam (namely, the second beam) corresponding to the second TCI-state, the network device determines, based on the second TCI-state, a transmit beam for sending the physical downlink control channel corresponding to the second control-resource set.

604: The terminal device determines, in the first beam and the second beam based on the configuration value of the beam parameter corresponding to the first control-resource set, the beam used by the first control-resource set.

The first beam and the second beam are the two common beams that are available for downlink transmission and that are indicated by the network device to the terminal device. For the first beam and the second beam, refer to the related descriptions of step 301 in the embodiment shown in FIG. 3.

Optionally, when the configuration value of the beam parameter corresponding to the first control-resource set is the first value, the terminal device determines that the first control-resource set uses the first beam. When the configuration value of the beam parameter corresponding to the first control-resource set is the second value, the terminal device determines that the first control-resource set uses the second beam. When the configuration value of the beam parameter corresponding to the first control-resource set is the third value, the terminal device determines that the first control-resource set uses the first beam and the second beam.

Step 604 is similar to step 603. For details, refer to the related descriptions of step 603. Details are not described herein again.

Optionally, that the network device indicates the first beam and the second beam to the terminal device includes: The network device indicates the first TCI state and the second TCI state to the terminal device. If the terminal device determines, based on the configuration value of the beam parameter corresponding to the first control-resource set, that the first control-resource set uses a receive beam (namely, the first beam) corresponding to the first TCI state, the terminal device determines, based on the first TCI state, a receive beam (namely, the first beam) for receiving the physical downlink control channel corresponding to the first control-resource set. If the terminal device determines, based on TCI stateTCI statea configuration value of a beam parameter corresponding to the second control-resource set, that the second control-resource set uses a receive beam (namely, the second beam) corresponding to the second TCI-state, the terminal device determines, based on the second TCI-state, a receive beam for receiving the physical downlink control channel corresponding to the second control-resource set.

605: The network device sends, to the terminal device based on the beam used by the first control-resource set, the physical downlink control channel corresponding to the first control-resource set. Accordingly, the terminal device receives, from the network device based on the beam used by the first control-resource set, the physical downlink control channel corresponding to the first control-resource set.

Step 605 is similar to step 507 in the embodiment shown in FIG. 5. For details, refer to the related descriptions of step 507 in the embodiment shown in FIG. 5. Details are not described herein again.

In this embodiment of this application, the network device determines the first control-resource set and the second control-resource set that are configured for the terminal device. The first control-resource set and the second control-resource set are the two control-resource sets for physical downlink control channel repetition transmission. The first control-resource set uses the common beam, and the second control-resource set uses the dedicated beam. The network device determines, based on the dedicated beam used by the second control-resource set, the configuration value of the beam parameter corresponding to the first control-resource set. The network device determines, in the first beam and the second beam based on the configuration value of the beam parameter corresponding to the first control-resource set, the beam used by the first control-resource set. The first beam and the second beam are the two common beams available for downlink transmission. In this way, the network device correctly determines the beam used by the first control-resource set, to use the beam on the physical downlink control channel corresponding to the first control-resource set, so that the physical downlink control channel corresponding to the first control-resource set is transmitted by using the correct beam, to improve communication transmission performance. In addition, the terminal device determines, based on the configuration value of the beam parameter corresponding to the first control-resource set, the beam used by the first control-resource set. The network device does not need to indicate, to the terminal device, a beam used by each control-resource set, to reduce beam indication overheads.

It should be noted that, in the embodiments shown in FIG. 3, FIG. 5, and FIG. 6, the technical solutions in this application are described by using an example in which the terminal device and the network device determine the beam used by the physical downlink control channel corresponding to the first control-resource set and/or the beam used by the physical downlink control channel corresponding to the second control-resource set. In actual application, the technical solutions in this application are also applicable to a case in which the terminal device or the network device determines a beam used by another channel or a beam used by another reference signal. For example, the another channel includes a physical uplink control channel, a physical uplink shared channel, a physical downlink shared channel, an SRS, or a CSI-RS.

For example, a first physical uplink control channel and a second physical uplink control channel are two physical uplink control channels associated for transmission. For example, the first physical uplink control channel and the second physical uplink control channel are for repetition transmission. The terminal device and the network device may separately determine, by using the foregoing technical solutions, a beam used by the first physical uplink control channel and a beam used by the second physical uplink control channel. Then, the terminal device sends the first physical uplink control channel to the network device based on the beam used by the first physical uplink control channel, and sends the second physical uplink control channel to the network device based on the beam used by the second physical uplink control channel. Accordingly, the network device receives the first physical uplink control channel from the terminal device based on the beam used by the first physical uplink control channel, and receives the second physical uplink control channel from the terminal device based on the beam used by the second physical uplink control channel.

For example, a first physical uplink shared channel and a second physical uplink shared channel are two physical uplink shared channels associated for transmission. For example, the first physical uplink shared channel and the second physical uplink shared channel are for repetition transmission. The terminal device and the network device may separately determine, by using the foregoing technical solutions, a beam used by the first physical uplink shared channel and a beam used by the second physical uplink shared channel. Then, the terminal device sends the first physical uplink shared channel to the network device based on the beam used by the first physical uplink shared channel, and sends the second physical uplink shared channel to the network device based on the beam used by the second physical uplink shared channel. Accordingly, the network device receives the first physical uplink shared channel from the terminal device based on the beam used by the first physical uplink shared channel, and receives the second physical uplink shared channel from the terminal device based on the beam used by the second physical uplink shared channel.

For example, a first SRS and a second SRS are two SRSs associated for transmission. Alternatively, a first SRS set and a second SRS set are two SRS sets associated for transmission. For example, the first SRS set and the second SRS set are two SRS sets of a same type, for example, two SRS sets of a codebook (codebook) type, two SRS sets of a non-codebook (noncodebook) type, two SRS sets of an antenna switch (antenna switch) type, or two SRS sets of a beam management (beam management) type. For another example, the first SRS and the second SRS are SRSs that belong to two SRS sets of a same type. The terminal device and the network device may separately determine, by using the foregoing technical solutions, a beam used by the first SRS and a beam used by the second SRS. Then, the terminal device sends the first SRS to the network device based on the beam used by the first SRS, and sends the second SRS to the network device based on the beam used by the second SRS. Accordingly, the network device receives the first SRS from the terminal device based on the beam used by the first SRS, and receives the second SRS from the terminal device based on the beam used by the second SRS. For example, the terminal device and the network device may separately determine, by using the foregoing technical solutions, a beam used by the first SRS set and a beam used by the second SRS set. Then, the terminal device sends, to the network device based on the beam used by the first SRS set, a reference signal corresponding to the first SRS set, and sends, to the network device based on the beam used by the second SRS set, a reference signal corresponding to the second SRS set. Accordingly, the network device receives, from the terminal device based on the beam used by the first SRS set, the reference signal corresponding to the first SRS set, and receives, from the terminal device based on the beam used by the second SRS set, the reference signal corresponding to the second SRS set.

For example, a first physical downlink shared channel and a second physical downlink shared channel are two physical downlink shared channels associated for transmission. For example, the first physical downlink shared channel and the second physical downlink shared channel are for repetition transmission. The terminal device and the network device may separately determine, by using the foregoing technical solutions, a beam used by the first physical downlink shared channel and a beam used by the second physical downlink shared channel. Then, the network device sends the first physical downlink shared channel to the terminal device based on the beam used by the first physical downlink shared channel, and sends the second physical downlink shared channel to the terminal device based on the beam used by the second physical downlink shared channel. Accordingly, the terminal device receives the first physical downlink shared channel from the network device based on the beam used by the first physical downlink shared channel, and receives the second physical downlink shared channel from the network device based on the beam used by the second physical downlink shared channel.

For example, a first CSI-RS and a second CSI-RS are two CSI-RSs associated for transmission. A first CSI-RS set and a second CSI-RS set are two CSI-RS sets associated for transmission. For example, the first CSI-RS set and the second CSI-RS set are two CSI-RS sets for joint measurement. For another example, the first CSI-RS and the second CSI-RS are two CSI-RSs for joint measurement, or the first CSI-RS and the second CSI-RS are CSI-RS resources that belong to two CSI-RS sets for joint measurement. The terminal device and the network device may separately determine, by using the foregoing technical solutions, a beam used by the first CSI-RS and a beam used by the second CSI-RS. Then, the network device sends the first CSI-RS to the terminal device based on the beam used by the first CSI-RS, and sends the second CSI-RS to the terminal device based on the beam used by the second CSI-RS. Accordingly, the terminal device receives the first CSI-RS from the network device based on the beam used by the first CSI-RS, and receives the second CSI-RS from the network device based on the beam used by the second CSI-RS. For example, the network device sends, to the terminal device based on a beam used by the first CSI-RS set, a reference signal corresponding to the first CSI-RS set, and sends, to the terminal device based on a beam used by the second CSI-RS set, a reference signal corresponding to the second CSI-RS set. Accordingly, the terminal device receives, from the network device based on the beam used by the first CSI-RS set, the reference signal corresponding to the first CSI-RS set, and receives, from the network device based on the beam used by the second CSI-RS set, the reference signal corresponding to the second CSI-RS set.

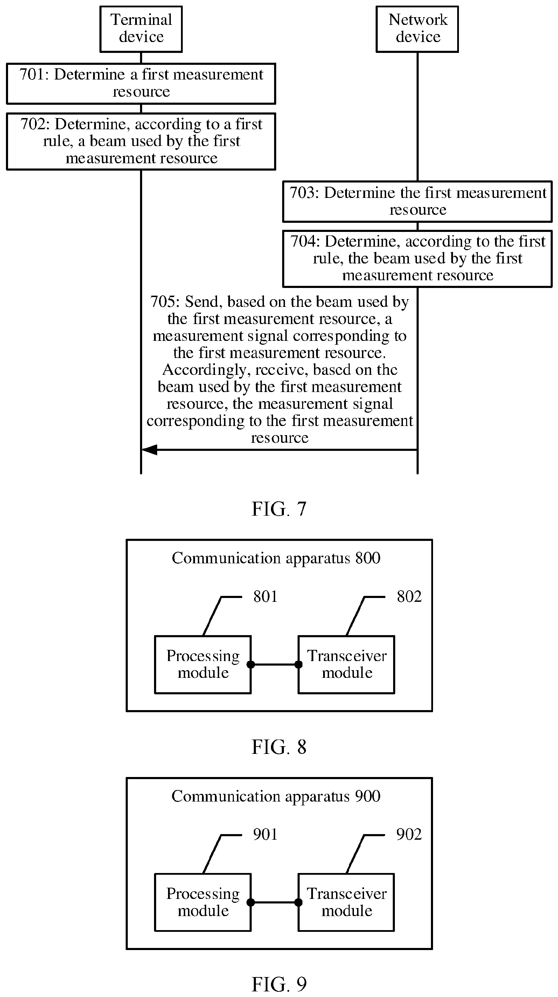

FIG. 7 is a diagram of a fourth embodiment of a beam determining method according to an embodiment of this application. Refer to FIG. 7. The method includes the following steps.

701: A terminal device determines a first measurement resource.

The first measurement resource is a measurement resource configured by a network device for the terminal device.

Specifically, the network device configures, for the terminal device, a measurement resource for multi-TRP joint beam measurement, to implement joint beam measurement between the terminal device and a plurality of TRPs. The first measurement resource belongs to the measurement resource for the multi-TRP joint beam measurement.

702: The terminal device determines, according to a first rule, a beam used by the first measurement resource.

The following describes two possible implementations in step 702. This application is still applicable to another implementation, and the following implementations do not constitute a limitation on this application.

Implementation I: Step 702 specifically includes: The terminal device determines that the first measurement resource uses a preconfigured beam corresponding to the first measurement resource.

In this implementation, the network device preconfigures the corresponding beam for the first measurement resource. The terminal device may determine that the first measurement resource uses the preconfigured beam corresponding to the first measurement resource.

Implementation II: Step 702 specifically includes: The terminal device determines that the first measurement resource uses a default beam corresponding to the first measurement resource.

For this implementation, the following describes, with reference to two possible cases, the default beam corresponding to the first measurement resource.

Case 1: The network device configures, for the terminal device, the measurement resource for the multi-TRP joint beam measurement, to implement the joint beam measurement between the terminal device and the plurality of TRPs. Specifically, the network device configures at least one measurement reporting configuration for the terminal device, and measurement resources associated with measurement reporting configurations are configured in two different resource sets (for example, resource sets). A measurement resource included in each resource set corresponds to one TRP, and the terminal device may distinguish, by using the resource sets, between the measurement resources corresponding to different TRPs.

Further, the measurement reporting configuration may further include a group-based reporting configuration parameter, for example, a group-based beam reporting-R17 (groupBasedBeamReporting-r17) parameter. The group-based beam reporting-R17 parameter indicates that the terminal device needs to use a group-based reporting scheme in the R17 protocol, that is, indicates the terminal device to pair the measurement resources in the two resource sets and then report at least one obtained resource pair. In addition, the terminal device should ensure that two measurement resources included in each of the at least one resource pair belong to the two resource sets. In addition, measurement signals corresponding to the two measurement resources may be simultaneously received by the terminal device.

Based on Case 1, the following describes several possible implementations in which the terminal device determines the default beam corresponding to the first measurement resource.

Implementation 1: If the first measurement resource belongs to a resource set with a smaller index in the two different resource sets, the default beam corresponding to the first measurement resource is a first beam; if the first measurement resource belongs to a resource set with a larger index in the two different resource sets, the default beam corresponding to the first measurement resource is a second beam; if the first measurement resource belongs to a resource set with a higher configuration ranking in the two different resource sets, the default beam corresponding to the first measurement resource is a first beam; if the first measurement resource belongs to a resource set with a lower configuration ranking in the two different resource sets, the default beam corresponding to the first measurement resource is a second beam; if the first measurement resource belongs to a resource set with a larger index in the two different resource sets, the default beam corresponding to the first measurement resource is a first beam; if the first measurement resource belongs to a resource set with a lower configuration ranking in the two different resource sets, the default beam corresponding to the first measurement resource is a first beam; if the first measurement resource belongs to a resource set with a smaller index in the two different resource sets, the default beam corresponding to the first measurement resource is a second beam; or if the first measurement resource belongs to a resource set with a higher configuration ranking in the two different resource sets, the default beam corresponding to the first measurement resource is a second beam.

The first beam and the second beam are two common beams available for downlink transmission. For the first beam and the second beam, refer to the related descriptions of the first beam and the second beam in step 301 in the embodiment shown in FIG. 3. Details are not described herein again.

Specifically, if the first measurement resource belongs to the resource set with the smaller index or the higher configuration ranking in the two different resource sets, the first measurement resource uses the first beam as the default beam; or if the first measurement resource belongs to the resource set with the larger index or the lower configuration ranking in the two different resource sets, the first measurement resource uses the second beam as the default beam. Alternatively, if the first measurement resource belongs to the resource set with the larger index or the lower configuration ranking in the two different resource sets, the first measurement resource uses the first beam as the default beam; or if the resource belongs to the resource set with the smaller index or the higher configuration ranking in the two different resource sets, the first measurement resource uses the second beam as the default beam.

In this implementation, optionally, when a first condition is satisfied, the terminal device determines that the first measurement resource uses the default beam corresponding to the first measurement resource.

The first condition includes one or a combination of the following:
1. The network device configures, for the terminal device, common beams available for downlink transmission.
2. The network device indicates, to the terminal device, two common beams available for downlink transmission.
3. The first measurement resource has no corresponding preconfigured beam.
4. The first measurement resource is an aperiodic measurement resource.
5. A time interval between a start time point occupied by the first measurement resource and a triggering time point at which a downlink control channel triggers transmission of the first measurement resource is less than a first threshold. For example, a time interval between a 1^{st} time domain symbol corresponding to the first measurement resource and a last time domain symbol on which the downlink control channel triggers the transmission of the first measurement resource is less than the first threshold.
6. A time domain symbol occupied by the first measurement resource does not carry a signal other than a measurement signal corresponding to the first measurement resource.

In other words, optionally, a stipulation may be as follows: Only when a second condition is satisfied, does the terminal device determine, in the manner in Implementation I, the default beam corresponding to the first measurement resource, and determine that the first measurement resource uses the default beam corresponding to the first measurement resource.

Implementation 2: If a control-resource set with a smallest index in one or more control-resource sets communicated by the terminal device in a latest slot corresponds to one beam, the default beam corresponding to the first measurement resource is the beam corresponding to the control-resource set with the smallest index.

The latest slot is a latest slot in which the terminal device performs control-resource set transmission. For example, if the terminal device is currently in an (N+5)^{th} slot, and a slot in which the terminal device last received the control-resource set is an (N+3)^{th} slot, it can be learned that the latest slot is the (N+3)^{th} slot. N is an integer greater than or equal to 0.

Implementation 3: A control-resource set with a smallest index in one or more control-resource sets communicated by the terminal device in a latest slot corresponds to two beams. If the first measurement resource belongs to a resource set with a smaller index in the two different resource sets, the default beam corresponding to the first measurement resource is a 1^{st} beam in the two beams; if the first measurement resource belongs to a resource set with a higher configuration ranking in the two different resource sets, the default beam corresponding to the first measurement resource is a 1^{st} beam in the two beams; if the first measurement resource belongs to a resource set with a larger index in the two different resource sets, the default beam corresponding to the first measurement resource is a 2^{nd} beam in the two beams; if the first measurement resource belongs to a resource set with a lower configuration ranking in the two different resource sets, the default beam corresponding to the first measurement resource is a 2^{nd} beam in the two beams; if the first measurement resource belongs to a resource set with a larger index in the two different resource sets, the default beam corresponding to the first measurement resource is a 1^{st} beam in the two beams; if the first measurement resource belongs to a resource set with a lower configuration ranking in the two different resource sets, the default beam corresponding to the first measurement resource is a 1^{st} beam in the two beams; if the first measurement resource belongs to a resource set with a smaller index in the two different resource sets, the default beam corresponding to the first measurement resource is a 2^{nd} beam in the two beams; or if the first measurement resource belongs to a resource set with a higher configuration ranking in the two different resource sets, the default beam corresponding to the first measurement resource is a 2^{nd} beam in the two beams.

The two beams corresponding to the control-resource set with the smallest index are indicated by the network device to the terminal device by using a MAC CE. Optionally, the 1^{st} beam in the two beams is a 1^{st} beam indicated in the MAC CE, and the 2^{nd} beam in the two beams is a 2^{nd} beam indicated in the MAC CE. That is, a sequence of the two beams may be defined based on an indication sequence in the MAC CE.

Specifically, if the first measurement resource belongs to the resource set with the smaller index or the higher configuration ranking in the two different resource sets, the first measurement resource uses the 1^{st} beam in the two beams corresponding to the control-resource set with the smallest index as the default beam; or if the first measurement resource belongs to the resource set with the larger index or the lower configuration ranking in the two different resource sets, the first measurement resource uses the 2^{nd} beam in the two beams corresponding to the control-resource set with the smallest index as the default beam. Alternatively, if the first measurement resource belongs to the resource set with the larger index or the lower configuration ranking in the two different resource sets, the first measurement resource uses the 1^{st} beam in the two beams corresponding to the control-resource set with the smallest index as the default beam; or if the first measurement resource belongs to the resource set with the smaller index or the higher configuration ranking in the two resource sets, the first measurement resource uses the 2^{nd} beam in the two beams corresponding to the control-resource set with the smallest index as the default beam.

In this implementation, optionally, when a second condition is satisfied, the terminal device determines that the first measurement resource uses the default beam corresponding to the first measurement resource.

The second condition includes one or a combination of the following:
1. The network device does not configure, for the terminal device, a common beam available for downlink transmission.
2. The network device does not indicate, to the terminal device, a common beam available for downlink transmission.
3. The first measurement resource has no corresponding preconfigured beam.
4. The first measurement resource is an aperiodic measurement resource.
5. A time interval between a start time domain position occupied by the first measurement resource and a triggering time point at which a downlink control channel triggers transmission of the first measurement resource is less than a first threshold. For example, a time interval between a 1^{st} time domain symbol corresponding to the first measurement resource and a last time domain symbol on which the downlink control channel triggers the transmission of the first measurement resource is less than the first threshold.
6. A time domain symbol occupied by the first measurement resource does not carry a signal other than a measurement signal corresponding to the first measurement resource.
7. The network device configures a single frequency network scheme A (sfnSchemeA) for the terminal device. In the single frequency network scheme A, one control-resource set of the terminal device corresponds to two beams, and a physical downlink control channel corresponding to the control-resource set is simultaneously sent by using the two beams corresponding to the control-resource set.
8. Alternatively, the network device does not configure a first parameter for the terminal device, where the first parameter indicates the terminal device to receive a physical downlink shared channel of the terminal device by using two default beams.

In other words, optionally, a stipulation may be as follows: Only when a third condition is satisfied, does the terminal device determine, in the manner in Implementation 3, the default beam corresponding to the first measurement resource, and determine that the first measurement resource uses the default beam corresponding to the first measurement resource.

Implementation 4: The network device indicates TCI states to the terminal device by using a downlink control channel DCI, where a TCI field in the DCI includes at least one TCI field value. If the first measurement resource belongs to a resource set with a smaller index in the two different resource sets, the default beam corresponding to the first measurement resource is a beam corresponding to a 1^{st} TCI state in two TCI states indicated by a first TCI field value, where the first TCI field value is a smallest TCI field value in TCI field values that are in the at least one TCI field value and that indicate two TCI states; if the first measurement resource belongs to a resource set with a higher configuration ranking in the two different resource sets, the default beam corresponding to the first measurement resource is a beam corresponding to a 1^{st} TCI state in two TCI states indicated by a first TCI field value; if the first measurement resource belongs to a resource set with a larger index in the two different resource sets, the default beam corresponding to the first measurement resource is a beam corresponding to a 2^{nd} TCI state in two TCI states indicated by a first TCI field value; if the first measurement resource belongs to a resource set with a lower configuration ranking in the two different resource sets, the default beam corresponding to the first measurement resource is a beam corresponding to a 2^{nd} TCI state in two TCI states indicated by a first TCI field value; if the first measurement resource belongs to a resource set with a larger index in the two different resource sets, the default beam corresponding to the first measurement resource is a beam corresponding to a 1^{st} TCI state in two TCI states indicated by a first TCI field value; if the first measurement resource belongs to a resource set with a lower configuration ranking in the two different resource sets, the default beam corresponding to the first measurement resource is a beam corresponding to a 1^{st} TCI state in two TCI states indicated by a first TCI field value; if the first measurement resource belongs to a resource set with a smaller index in the two different resource sets, the default beam corresponding to the first measurement resource is a beam corresponding to a 2^{nd} TCI state in two TCI states indicated by a first TCI field value; or if the first measurement resource belongs to a resource set with a higher configuration ranking in the two different resource sets, the default beam corresponding to the first measurement resource is a beam corresponding to a 2^{nd} TCI state in two TCI states indicated by a first TCI field value.

The TCI field in the DCI includes the at least one TCI field value. For example, the TCI field includes three bits, and the TCI field includes eight possible field values: 000, 001, 010, 011, 100, 101, 110, and 111. If field values that are in the eight possible field values and that indicate two TCI states are 000, 001, and 010, it can be learned that the first TCI field value is the field value 000 with a smallest value.

Specifically, if the first measurement resource belongs to the resource set with the smaller index or the higher configuration ranking in the two different resource sets, the first measurement resource uses the beam corresponding to the 1^{st} TCI state in the two TCI states indicated by the first TCI field value as the default beam; or if the first measurement resource belongs to the resource set with the larger index or the lower configuration ranking in the two different resource sets, the first measurement resource uses the beam corresponding to the 2^{nd} state in the two TCI states as the default beam. Alternatively, if the first measurement resource belongs to the resource set with the larger index or the lower configuration ranking in the two different resource sets, the first measurement resource uses the beam corresponding to the 1^{st} state in the two TCI states as the default beam; or if the first measurement resource belongs to the resource set with the smaller index or the higher configuration ranking in the two different resource sets, the first measurement resource uses the beam corresponding to the 2^{nd} TCI state in the two TCI states as the default beam.

In this implementation, optionally, when a third condition is satisfied, the terminal device determines that the first measurement resource uses the default beam corresponding to the first measurement resource.

The third condition includes one or a combination of the following:
1. The network device does not configure, for the terminal device, a common beam available for downlink transmission.
2. The network device does not indicate, to the terminal device, a common beam available for downlink transmission.
3. The first measurement resource has no corresponding preconfigured beam.
4. The first measurement resource is an aperiodic measurement resource.
5. A time interval between a start time point occupied by the first measurement resource and a triggering time point at which a physical downlink control channel triggers transmission of the first measurement resource is less than a first threshold. For example, a time interval between a 1^{st} time domain symbol occupied by the first measurement resource and a last time domain symbol on which a downlink control channel triggers the transmission of the first measurement resource is less than the first threshold.
6. A time domain symbol occupied by the first measurement resource does not carry a signal other than a measurement signal corresponding to the first measurement resource.
7. The network device configures a first parameter for the terminal device, where the first parameter is used by the terminal device to receive a physical downlink shared channel of the terminal device by using two default beams.

In other words, optionally, a stipulation may be as follows: Only when the third condition is satisfied, does the terminal device determine, in the manner in Implementation 4, the default beam corresponding to the first measurement resource, and determine that the first measurement resource uses the default beam corresponding to the first measurement resource.

Case 2: The network device configures, for the terminal device, a measurement resource for multi-TRP joint channel measurement, to implement the joint beam measurement between the terminal device and the plurality of TRPs. Specifically, the network device configures at least one measurement reporting configuration for the terminal device, and measurement resources associated with measurement reporting configurations are configured in one resource set (for example, resource set). The resource set is further divided into two resource subsets, and a resource in each resource subset corresponds to one TRP. The terminal device may distinguish, by using the resource subsets, the resources corresponding to different TRPs.

Further, the resource set further includes at least one resource pair, each resource pair includes two measurement resources, and the two measurement resources are respectively from the two resource subsets. Each resource pair is for performing two-TRP joint beam measurement once. That is, measurement signals respectively corresponding to the two measurement resources are respectively sent by using two TRPs, and the terminal device performs joint measurement on the measurement signals corresponding to the two measurement resources, to obtain, through the measurement, a joint channel including the two TRPs.

Based on Case 2, the following describes several possible implementations in which the terminal device determines the default beam corresponding to the first measurement resource.

Implementation 1: The resource set includes the resource pair. If the first measurement resource is a resource with a smaller index in the resource pair, the default beam corresponding to the first measurement resource is a first beam; if the first measurement resource is a resource with a higher configuration ranking in the resource pair, the default beam corresponding to the first measurement resource is a first beam; if the first measurement resource is a resource with a larger index in the resource pair, the default beam corresponding to the first measurement resource is a second beam; if the first measurement resource is a resource with a lower configuration ranking in the resource pair, the default beam corresponding to the first measurement resource is a second beam; if the first measurement resource is a resource with a larger index in the resource pair, the default beam corresponding to the first measurement resource is a first beam; if the first measurement resource is a resource with a lower configuration ranking in the resource pair, the default beam corresponding to the first measurement resource is a first beam; if the first measurement resource is a resource with a smaller index in the resource pair, the default beam corresponding to the first measurement resource is a second beam; or if the first measurement resource is a resource with a higher configuration ranking in the resource pair, the default beam corresponding to the first measurement resource is a second beam.

The first beam and the second beam are two common beams that are available for downlink transmission and that are indicated by the network device to the terminal device. For the first beam and the second beam, refer to the related descriptions of the first beam and the second beam in step 301 in the embodiment shown in FIG. 3. Details are not described herein again.

Specifically, if the first measurement resource is the measurement resource with the larger index or the lower configuration ranking in the resource pair, the first measurement resource uses the second beam as the default beam; if the first measurement resource is the measurement resource with the larger index or the lower configuration ranking in the resource pair, the first measurement resource uses the first beam as the default beam; or if the first measurement resource is the measurement resource with the smaller index or the higher configuration ranking in the resource pair, the resource uses the second beam as the default beam.

In this implementation, optionally, when a first condition is satisfied, the terminal device determines that the first measurement resource uses the default beam corresponding to the first measurement resource. For the first condition, refer to the related descriptions in Case 1 in step 702.

In this implementation, optionally, a stipulation may be as follows: Only when the first condition is satisfied, does the terminal device determine, in the manner in Implementation 1, the default beam corresponding to the first measurement resource, and determine that the first measurement resource uses the default beam corresponding to the first measurement resource.

Implementation 2: If a control-resource set with a smallest index in one or more control-resource sets communicated by the terminal device in a latest slot corresponds to one beam, the default beam corresponding to the first measurement resource is the beam corresponding to the control-resource set with the smallest index. For the latest slot, refer to the foregoing related descriptions.

Implementation 3: The resource set includes the resource pair, and a control-resource set with a smallest index in one or more control-resource sets communicated by the terminal device in a latest slot corresponds to two beams. If the first measurement resource is a resource with a smaller index in the resource pair, the default beam corresponding to the first measurement resource is a 1^{st} beam in the two beams; if the first measurement resource is a resource with a higher configuration ranking in the resource pair, the default beam corresponding to the first measurement resource is a 1^{st} beam in the two beams; if the first measurement resource is a resource with a larger index in the resource pair, the default beam corresponding to the first measurement resource is a 2^{nd} beam in the two beams; if the first measurement resource is a resource with a lower configuration ranking in the resource pair, the default beam corresponding to the first measurement resource is a 2^{nd} beam in the two beams; if the first measurement resource is a resource with a larger index in the resource pair, the default beam corresponding to the first measurement resource is a 1^{st} beam in the two beams; if the first measurement resource is a resource with a lower configuration ranking in the resource pair, the default beam corresponding to the first measurement resource is a 1^{st} beam in the two beams; if the first measurement resource is a resource with a smaller index in the resource pair, the default beam corresponding to the first measurement resource is a 2^{nd} beam in the two beams; or if the first measurement resource is a resource with a higher configuration ranking in the resource pair, the default beam corresponding to the first measurement resource is a 2^{nd} beam in the two beams.

For the two beams corresponding to the control-resource set with the smallest index and the latest slot, refer to the related descriptions in Case 1 in step 702. Details are not described herein again.

Specifically, if the first measurement resource is the measurement resource with the smaller index or the higher configuration ranking in the resource pair, the first measurement resource uses the 1^{st} beam in the two beams corresponding to the control-resource set with the smallest index as the default beam; or if the first measurement resource is the measurement resource with the larger index or the lower configuration ranking in the resource pair, the first measurement resource uses the 2^{nd} beam in the two beams corresponding to the control-resource set with the smallest index as the default beam. Alternatively, if the first measurement resource is the measurement resource with the larger index or the lower configuration ranking in the resource pair, the first measurement resource uses the 1^{st} beam in the two beams corresponding to the control-resource set with the smallest index as the default beam; or if the first measurement resource is the measurement resource with the smaller index or the higher configuration ranking in the resource pair, the first measurement resource uses the 2^{nd} beam in the two beams corresponding to the control-resource set with the smallest index as the default beam.

In this implementation, optionally, when a second condition is satisfied, the terminal device determines that the first measurement resource uses the default beam corresponding to the first measurement resource. For the second condition, refer to the related descriptions in Case 1 in step 702.

In other words, optionally, a stipulation may be as follows: Only when the second condition is satisfied, does the terminal device determine, in the manner in Implementation 3, the default beam corresponding to the first measurement resource, and determine that the first measurement resource uses the default beam corresponding to the first measurement resource.

Implementation 4: The resource set includes the resource pair, and the network device indicates TCI states to the terminal device by using DCI, where a TCI field in the DCI includes at least one TCI field value. If the first measurement resource belongs to a resource set with a smaller index in the resource pair, the default beam corresponding to the first measurement resource is a beam corresponding to a 1^{st} TCI state in two TCI states indicated by a first TCI field value, where the first TCI field value is a smallest TCI field value in TCI field values that are in the at least one TCI field value and that indicate two TCI states; if the first measurement resource belongs to a resource set with a higher configuration ranking in the resource pair, the default beam corresponding to the first measurement resource is a beam corresponding to a 1^{st} TCI state in two TCI states indicated by a first TCI field value; if the first measurement resource belongs to a resource set with a larger index in the resource pair, the default beam corresponding to the first measurement resource is a beam corresponding to a 2^{nd} TCI state in two TCI states indicated by a first TCI field value; if the first measurement resource belongs to a resource set with a lower configuration ranking in the resource pair, the default beam corresponding to the first measurement resource is a beam corresponding to a 2^{nd} TCI state in two TCI states indicated by a first TCI field value; if the first measurement resource belongs to a resource set with a larger index in the resource pair, the default beam corresponding to the first measurement resource is a beam corresponding to a 1^{st} TCI state in two TCI states indicated by a first TCI field value; if the first measurement resource belongs to a resource set with a lower configuration ranking in the resource pair, the default beam corresponding to the first measurement resource is a beam corresponding to a 1^{st} TCI state in two TCI states indicated by a first TCI field value; if the first measurement resource belongs to a resource set with a smaller index in the resource pair, the default beam corresponding to the first measurement resource is a beam corresponding to a 2^{nd} TCI state in two TCI states indicated by a first TCI field value; or if the first measurement resource belongs to a resource set with a higher configuration ranking in the resource pair, the default beam corresponding to the first measurement resource is a beam corresponding to a 2^{nd} TCI state in two TCI states indicated by a first TCI field value.

For the first TCI field value, refer to the related descriptions in Case 1 in step 702.

Specifically, if the first measurement resource is a resource with a smaller index or a higher configuration ranking in the resource pair, the first measurement resource uses the beam corresponding to the 1^{st} TCI state in the two TCI states indicated by the first TCI field value as the default beam; or if the first measurement resource is a resource with a larger index or a lower configuration ranking in the resource pair, the first measurement resource uses the beam corresponding to the 2^{nd} state in the two TCI states as the default beam. Alternatively, if the first measurement resource is a resource with a larger index or a lower configuration ranking in the resource pair, the first measurement resource uses the beam corresponding to the 1^{st} state in the two TCI states as the default beam; or if the first measurement resource is a resource with a smaller index or a higher configuration ranking in the resource pair, the first measurement resource uses the beam corresponding to the 2^{nd} TCI state in the two TCI states as the default beam.

In this implementation, optionally, when a third condition is satisfied, the terminal device determines that the first measurement resource uses the default beam corresponding to the first measurement resource. For the third condition, refer to the related descriptions in Case 1 in step 702.

703: The network device determines the first measurement resource.

704: The network device determines, according to the first rule, the beam used by the first measurement resource.

Step 703 and step 704 are similar to step 701 and step 702. For details, refer to the related descriptions of step 701 and step 702. Details are not described herein again.

It should be noted that there is no fixed execution sequence between steps 701 and 702 and steps 703 and 704. Step 701 and step 702 may be performed before step 703 and step 704, step 703 and step 704 may be performed before step 701 and step 702, or steps 701 and 702 and steps 703 and 704 are simultaneously performed based on a case. This is not specifically limited in this application.

705: The network device sends, to the terminal device based on the beam used by the first measurement resource, the measurement signal corresponding to the first measurement resource. Accordingly, the terminal device receives, from the network device based on the beam used by the first measurement resource, the measurement signal corresponding to the first measurement resource.

In the embodiment shown in FIG. 7, the terminal device and the network device may separately determine the beam used by the first measurement resource, to correctly communicate the measurement signal corresponding to the first measurement resource. In a multi-TRP joint beam measurement process, the terminal device and the network device may determine, by using the embodiment shown in FIG. 7, a beam used by each measurement resource, to implement measurement signal transmission between the terminal device and the plurality of TRPs (the plurality of TRPs may be included in the network device), and implement the multi-TRP joint beam measurement.

The foregoing method embodiments may be implemented separately or in combination. For terms and related technologies in embodiments, refer to each other. In other words, technical solutions that do not conflict with each other or that do not logically conflict with each other in different embodiments may be combined with each other. This is not specifically limited in this application.

Communication apparatuses provided in embodiments of this application are described below.

FIG. 8 is a diagram of a first structure of a communication apparatus according to an embodiment of this application. Refer to FIG. 8. The communication apparatus may be configured to perform the processes performed by the terminal device in the embodiments shown in FIG. 3 and FIG. 7. For details, refer to the related descriptions in the foregoing method embodiments.

The communication apparatus 800 includes a processing module 801 and a transceiver module 802. The transceiver module 802 may implement a corresponding communication function, and the processing module 801 is configured to perform data processing. The transceiver module 802 may also be referred to as a communication interface or a communication module.

Optionally, the communication apparatus 800 may further include a storage module. The storage module may be configured to store instructions and/or data. The processing module 801 may read the instructions and/or the data in the storage module, so that the communication apparatus implements the foregoing method embodiments.

The communication apparatus module 800 may be configured to perform the actions performed by the terminal device in the embodiments shown in FIG. 3 and FIG. 7. The communication apparatus 800 may be a terminal device or a component that may be configured in the terminal device. The processing module 801 is configured to perform the processing-related operations on the terminal device side in the embodiments shown in FIG. 3 and FIG. 7. Optionally, the transceiver module 802 is configured to perform the receiving-related operations on the terminal device side in the embodiments shown in FIG. 3 and FIG. 7.

Optionally, the transceiver module 802 may include a sending module and a receiving module. The sending module is configured to perform the sending operations in the embodiments shown in FIG. 3 and FIG. 7. The receiving module is configured to perform the receiving operations in the embodiments shown in FIG. 3 and FIG. 7.

It should be noted that the communication apparatus 800 may include the sending module but not include the receiving module. Alternatively, the communication apparatus 800 may include the receiving module but not include the sending module. This may be specifically determined depending on whether the foregoing solutions performed by the communication apparatus 800 include a sending action and a receiving action.

In a possible implementation, the communication apparatus 800 is configured to perform the actions performed by the terminal device in the embodiment shown in FIG. 3.

The processing module 801 is configured to determine, in a first beam and a second beam based on a beam parameter corresponding to a first control-resource set and a beam parameter corresponding to a second control-resource set, a beam used by the first control-resource set and a beam used by the second control-resource set, where the first beam and the second beam are two common beams available for downlink transmission, and the first control-resource set and the second control-resource set are two control-resource sets for physical downlink control channel repetition transmission. The transceiver module 802 is configured to receive, based on the beam used by the first control-resource set, a physical downlink control channel corresponding to the first control-resource set, and receive, based on the beam used by the second control-resource set, a physical downlink control channel corresponding to the second control-resource set.

In another possible implementation, the communication apparatus 800 is configured to perform the actions performed by the terminal device in the embodiment shown in FIG. 7. The processing module 801 is configured to determine a first measurement resource, and determine, according to a first rule, a beam used by the first measurement resource. The transceiver module 802 is configured to receive, from a network device based on the beam used by the first measurement resource, a measurement signal corresponding to the first measurement resource.

It should be understood that a specific process in which the modules perform the foregoing corresponding processes has been described in detail in the foregoing method embodiments. For brevity, details are not described herein again.

The processing module 801 in the foregoing embodiment may be implemented by at least one processor or processor-related circuit. The transceiver module 802 may be implemented by a transceiver or a transceiver-related circuit. The transceiver module 802 may also be referred to as the communication module or the communication interface. The storage module may be implemented by using at least one memory.

FIG. 9 is a diagram of a second structure of a communication apparatus according to an embodiment of this application. Refer to FIG. 9. The communication apparatus may be configured to perform the processes performed by the network device in the embodiments shown in FIG. 3 and FIG. 7. For details, refer to the related descriptions in the foregoing method embodiments.

The communication apparatus 900 includes a processing module 901 and a transceiver module 902. The transceiver module 902 may implement a corresponding communication function, and the processing module 901 is configured to perform data processing. The transceiver module 902 may also be referred to as a communication interface or a communication module.

Optionally, the communication apparatus 900 may further include a storage module. The storage module may be configured to store instructions and/or data. The processing module 901 may read the instructions and/or the data in the storage module, so that the communication apparatus implements the foregoing method embodiments.

The communication apparatus module 900 may be configured to perform the actions performed by the network device in the embodiments shown in FIG. 3 and FIG. 7. The communication apparatus 900 may be a network device or a component that may be configured in the network device. The processing module 901 is configured to perform the processing-related operations on the network device side in the embodiments shown in FIG. 3 and FIG. 7. Optionally, the transceiver module 902 is configured to perform the receiving-related operations on the network device side in the embodiments shown in FIG. 3 and FIG. 7.

Optionally, the transceiver module 902 may include a sending module and a receiving module. The sending module is configured to perform the sending operations in the embodiments shown in FIG. 3 and FIG. 7. The receiving module is configured to perform the receiving operations in the embodiments shown in FIG. 3 and FIG. 7.

It should be noted that the communication apparatus 900 may include the sending module but not include the receiving module. Alternatively, the communication apparatus 900 may include the receiving module but not include the sending module. This may be specifically determined depending on whether the foregoing solutions performed by the communication apparatus 900 include a sending action and a receiving action.

In a possible implementation, the communication apparatus 900 is configured to perform the actions performed by the network device in the embodiment shown in FIG. 3.

The processing module 901 is configured to determine, in a first beam and a second beam based on a beam parameter corresponding to a first control-resource set and a beam parameter corresponding to a second control-resource set, a beam used by the first control-resource set and a beam used by the second control-resource set, where the first beam and the second beam are two common beams available for downlink transmission, and the first control-resource set and the second control-resource set are two control-resource sets for physical downlink control channel repetition transmission. The transceiver module 902 is configured to send, based on the beam used by the first control-resource set, a physical downlink control channel corresponding to the first control-resource set, and send, based on the beam used by the second control-resource set, a physical downlink control channel corresponding to the second control-resource set.

In another possible implementation, the communication apparatus 900 is configured to perform the actions performed by the network device in the embodiment shown in FIG. 7.

The processing module 901 is configured to determine a first measurement resource, and determine, according to a first rule, a beam used by the first measurement resource.

The transceiver module 902 is configured to send, to a terminal device based on the beam used by the first measurement resource, a measurement signal corresponding to the first measurement resource.

It should be understood that a specific process in which the modules perform the foregoing corresponding processes has been described in detail in the foregoing method embodiments. For brevity, details are not described herein again.

The processing module 901 in the foregoing embodiment may be implemented by at least one processor or processor-related circuit. The transceiver module 902 may be implemented by a transceiver or a transceiver-related circuit. The transceiver module 902 may also be referred to as the communication module or the communication interface. The storage module may be implemented by using at least one memory.

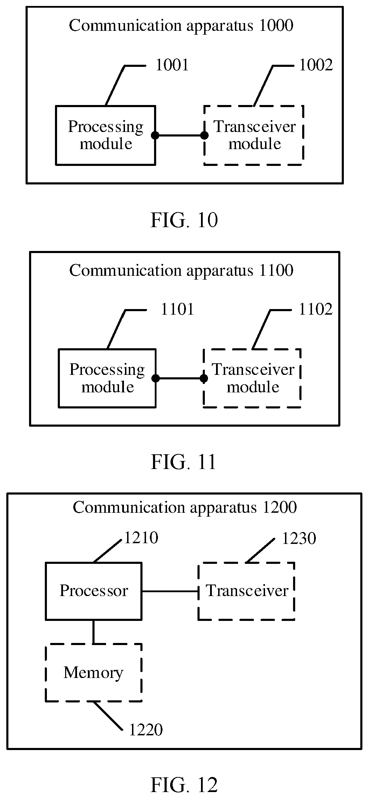

FIG. 10 is a diagram of a third structure of a communication apparatus according to an embodiment of this application. Refer to FIG. 10. The communication apparatus may be configured to perform the processes performed by the terminal device in the embodiment shown in FIG. 5. For details, refer to the related descriptions in the foregoing method embodiments.

The communication apparatus 1000 includes a processing module 1001. Optionally, the communication apparatus 1000 further includes a transceiver module 1002. The transceiver module 1002 may implement a corresponding communication function, and the processing module 1001 is configured to perform data processing. The transceiver module 1002 may also be referred to as a communication interface or a communication module.

Optionally, the communication apparatus 1000 may further include a storage module. The storage module may be configured to store instructions and/or data. The processing module 1001 may read the instructions and/or the data in the storage module, so that the communication apparatus implements the foregoing method embodiments.

The communication apparatus 1000 may be configured to perform the actions performed by the terminal device in the embodiment shown in FIG. 5. The communication apparatus 1000 may be a terminal device or a component that may be configured in the terminal device. The processing module 1001 is configured to perform the processing-related operations on the terminal device side in the embodiment shown in FIG. 5. Optionally, the transceiver module 1002 is configured to perform the receiving-related operations on the network device side in the embodiment shown in FIG. 5.

Optionally, the transceiver module 1002 may include a sending module and a receiving module. The sending module is configured to perform the sending operation in the embodiment shown in FIG. 5. The receiving module is configured to perform the receiving operation in the embodiment shown in FIG. 5.

It should be noted that the communication apparatus 1000 may include the sending module but not include the receiving module. Alternatively, the communication apparatus 1000 may include the receiving module but not include the sending module. This may be specifically determined depending on whether the foregoing solutions performed by the communication apparatus 1000 include a sending action and a receiving action.

The communication apparatus 1000 is configured to perform the actions performed by the terminal device in the embodiment shown in FIG. 5.

The processing module 1001 is configured to: determine a first control-resource set and a second control-resource set that are configured by a network device, where the first control-resource set and the second control-resource set are two control-resource sets for physical downlink control channel repetition transmission, the first control-resource set uses a common beam, and the second control-resource set uses a dedicated beam; when a value of a beam parameter corresponding to the first control-resource set is default, determine, based on the dedicated beam used by the second control-resource set, the default value of the beam parameter corresponding to the first control-resource set; and determine, in a first beam and a second beam based on the default value of the beam parameter corresponding to the first control-resource set, the beam used by the first control-resource set, where the first beam and the second beam are two common beams that are available for downlink transmission and that are indicated by the network device to the communication apparatus 1000.

It should be understood that a specific process in which the modules perform the foregoing corresponding processes has been described in detail in the foregoing method embodiments. For brevity, details are not described herein again.

The processing module 1001 in the foregoing embodiment may be implemented by at least one processor or processor-related circuit. The transceiver module 1002 may be implemented by a transceiver or a transceiver-related circuit. The transceiver module 1002 may also be referred to as the communication module or the communication interface. The storage module may be implemented by using at least one memory.

FIG. 11 is a diagram of a fourth structure of a communication apparatus according to an embodiment of this application. Refer to FIG. 11. The communication apparatus may be configured to perform the processes performed by the network device in the embodiments shown in FIG. 5 and FIG. 6. For details, refer to the related descriptions in the foregoing method embodiments.

The communication apparatus 1100 includes a processing module 1101. Optionally, the communication apparatus 1100 further includes a transceiver module 1102. The transceiver module 1102 may implement a corresponding communication function, and the processing module 1101 is configured to perform data processing. The transceiver module 1102 may also be referred to as a communication interface or a communication module.

Optionally, the communication apparatus 1100 may further include a storage module. The storage module may be configured to store instructions and/or data. The processing module 1101 may read the instructions and/or the data in the storage module, so that the communication apparatus implements the foregoing method embodiments.

The communication apparatus 1100 may be configured to perform the actions performed by the network device in the embodiments shown in FIG. 5 and FIG. 6. The communication apparatus 1100 may be a network device or a component that may be configured in the network device. The processing module 1101 is configured to perform the processing-related operations on the network device side in the embodiments shown in FIG. 5 and FIG. 6. Optionally, the transceiver module 1102 is configured to perform the receiving-related operations on the network device side in the embodiments shown in FIG. 5 and FIG. 6.

Optionally, the transceiver module 1102 may include a sending module and a receiving module. The sending module is configured to perform the sending operation in the embodiment shown in FIG. 6. The receiving module is configured to perform the receiving operations in the embodiments shown in FIG. 5 and FIG. 6.

It should be noted that the communication apparatus 1100 may include the sending module but not include the receiving module. Alternatively, the communication apparatus 1100 may include the receiving module but not include the sending module. This may be specifically determined depending on whether the foregoing solutions performed by the communication apparatus 1000 include a sending action and a receiving action.

In a possible implementation, the communication apparatus 1100 is configured to perform the actions performed by the network device in the embodiment shown in FIG. 5.

The processing module 1101 is configured to: determine a first control-resource set and a second control-resource set that are configured for a terminal device, where the first control-resource set and the second control-resource set are two control-resource sets for physical downlink control channel repetition transmission, that is, the first control-resource set and the second control-resource set are both for physical downlink control channel repetition transmission; and the first control-resource set uses a common beam, and the second control-resource set uses a dedicated beam; when a value of a beam parameter corresponding to the first control-resource set is default, determine, based on the dedicated beam used by the second control-resource set, the default value of the beam parameter corresponding to the first control-resource set; and determine, in a first beam and a second beam based on the default value of the beam parameter corresponding to the first control-resource set, the beam used by the first control-resource set, where the first beam and the second beam are two common beams available for downlink transmission, that is, the first beam and the second beam are both the common beams available for downlink transmission.

In another possible implementation, the communication apparatus 1100 is configured to perform the actions performed by the network device in the embodiment shown in FIG. 6.

The processing module 1101 is configured to: determine a first control-resource set and a second control-resource set that are configured for a terminal device, where the first control-resource set and the second control-resource set are two control-resource sets for physical downlink control channel repetition transmission, the first control-resource set uses a common beam, and the second control-resource set uses a dedicated beam; determine, based on the dedicated beam used by the second control-resource set, a configuration value of a beam parameter corresponding to the first control-resource set; and determine, in a first beam and a second beam based on the configuration value of the beam parameter corresponding to the first control-resource set, the beam used by the first control-resource set, where the first beam and the second beam are two common beams that are available for downlink transmission and that are indicated by the communication apparatus 1100 to the terminal device.

It should be understood that a specific process in which the modules perform the foregoing corresponding processes has been described in detail in the foregoing method embodiments. For brevity, details are not described herein again.

The processing module 1101 in the foregoing embodiment may be implemented by at least one processor or processor-related circuit. The transceiver module 1102 may be implemented by a transceiver or a transceiver-related circuit. The transceiver module 1102 may also be referred to as the communication module or the communication interface. The storage module may be implemented by using at least one memory.

FIG. 12 is a diagram of a fifth structure of a communication apparatus according to an embodiment of this application. Refer to FIG. 12. The communication apparatus 1200 includes a processor 1210. The processor 1210 is coupled to a memory 1220. The memory 1220 is configured to store a computer program or instructions and/or data. The processor 1210 is configured to execute the computer program or the instructions and/or the data stored in the memory 1220, so that the methods in the foregoing method embodiments are performed.

Optionally, the communication apparatus 1200 includes one or more processors 1210.

Optionally, as shown in FIG. 12, the communication apparatus 1200 may further include the memory 1220.

Optionally, the communication apparatus 1200 may include one or more memories 1220.

Optionally, the memory 1220 may be integrated with the processor 1210, or separately disposed.

Optionally, as shown in FIG. 12, the communication apparatus 1200 may further include a transceiver 1230, and the transceiver 1230 is configured to receive and/or send a signal. For example, the processor 1210 is configured to control the transceiver 1230 to receive and/or send the signal.

In a solution, the communication apparatus 1200 is configured to implement the operations performed by the terminal device in the foregoing method embodiments.

For example, the processor 1210 is configured to implement the processing-related operations performed by the terminal device in the foregoing method embodiments, and the transceiver 1230 is configured to implement the operations related to transmitting and receiving and performed by the terminal device in the foregoing method embodiments.

In a solution, the communication apparatus 1200 is configured to implement the operations performed by the network device in the foregoing method embodiments.

For example, the processor 1210 is configured to implement the processing-related operations performed by the network device in the foregoing method embodiments, and the transceiver 1230 is configured to implement the operations related to transmitting and receiving and performed by the network device in the foregoing method embodiments.

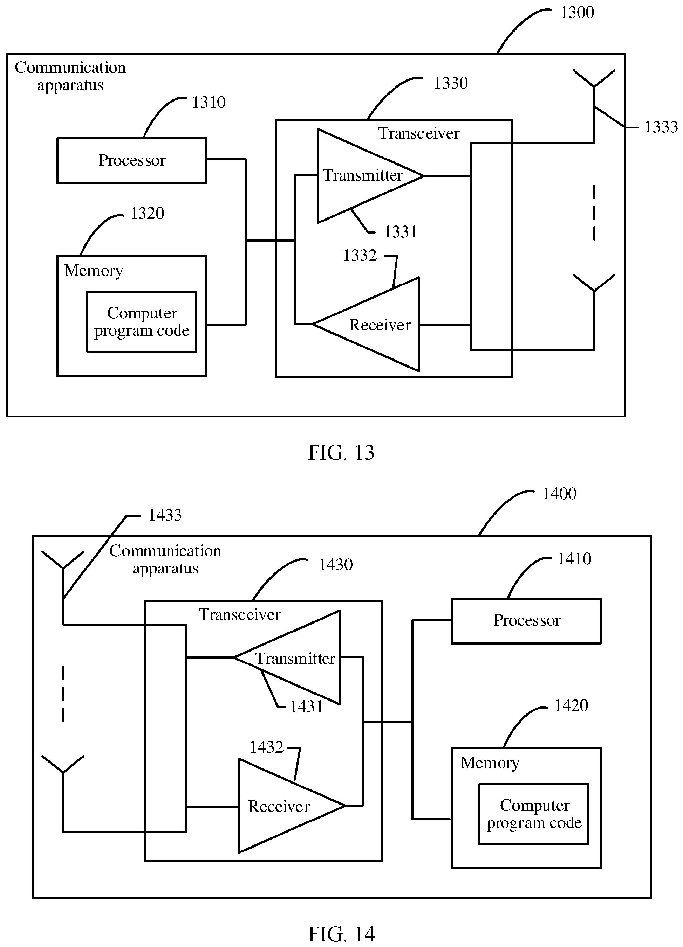

FIG. 13 is a diagram of a sixth structure of a communication apparatus according to an embodiment of this application. Refer to FIG. 13. The communication apparatus 1300 may be a terminal device, a processor of the terminal device, or a chip. The communication apparatus 1300 may be configured to perform the operations performed by the terminal device in the foregoing method embodiments.

When the communication apparatus 1300 is the terminal device, FIG. 13 is a simplified diagram of a structure of the terminal device. As shown in FIG. 13, the terminal device includes a processor, a memory, and a transceiver. The memory may store computer program code. The transceiver includes a transmitter 1331, a receiver 1332, a radio frequency circuit (not shown in the figure), an antenna 1333, and an input/output apparatus (not shown in the figure).

The processor is mainly configured to: process a communication protocol and communication data, control the terminal device, execute a software program, process data of the software program, and so on. The memory is mainly configured to store the software program and data. The radio frequency circuit is mainly configured to perform conversion between a baseband signal and a radio frequency signal, and process the radio frequency signal. The antenna is mainly configured to transmit and receive a radio frequency signal in a form of an electromagnetic wave. The input/output apparatus, for example, a touchscreen, a display screen, or a keyboard, is mainly configured to receive data input by a user and output data to the user. It should be noted that some types of terminal devices may not have the input/output apparatus.

When data needs to be sent, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, FIG. 13 shows only one memory, one processor, and one transceiver. In an actual terminal device product, there may be one or more processors and one or more memories. The memory may also be referred to as a storage medium, a storage device, or the like. The memory may be disposed independent of the processor, or may be integrated with the processor. This is not limited in this embodiment of this application.

In this embodiment of this application, the antenna and the radio frequency circuit that have transmit and receive functions may be considered as a transceiver module of the terminal device, and the processor that has a processing function may be considered as a processing module of the terminal device.

As shown in FIG. 13, the terminal device includes the processor 1310, the memory 1320, and the transceiver 1330. The processor 1310 may also be referred to as a processing unit, a processing board, a processing module, a processing apparatus, or the like. The transceiver 1330 may also be referred to as a transceiver unit, a transceiver, a transceiver apparatus, or the like.

Optionally, a component configured to implement a receiving function in the transceiver 1330 may be considered as a receiving module, and a component configured to implement a sending function in the transceiver 1330 may be considered as a sending module. That is, the transceiver 1330 includes a receiver and a transmitter. The transceiver may also be sometimes referred to as a transceiver, a transceiver module, a transceiver circuit, or the like. The receiver may also be sometimes referred to as a receiver, a receiving module, a receiver circuit, or the like. The transmitter may also be sometimes referred to as a transmitter, a transmitting module, a transmitter circuit, or the like.

For example, in an implementation, the processor 1310 is configured to perform the processing actions on the terminal device side in the embodiment shown in FIG. 3, and the transceiver 1330 is configured to perform the transmit and receive actions on the terminal device side in FIG. 3.

For example, in an implementation, the processor 1310 is configured to perform the processing actions on the terminal device side in the embodiment shown in FIG. 5. Optionally, the transceiver 1330 is configured to perform the transmit and receive actions on the terminal device side in FIG. 5.

For example, in an implementation, the processor 1310 is configured to perform the processing actions on the terminal device side in the embodiment shown in FIG. 6. Optionally, the transceiver 1330 is configured to perform the transmit and receive actions on the terminal device side in FIG. 6.

For example, in an implementation, the processor 1310 is configured to perform the processing actions on the terminal device side in the embodiment shown in FIG. 7. Optionally, the transceiver 1330 is configured to perform the transmit and receive actions on the terminal device side in FIG. 7.

It should be understood that FIG. 13 is merely an example rather than a limitation. The terminal device including the transceiver module and the processing module may not depend on the structures shown in FIG. 7 and FIG. 9.

When the communication apparatus 1300 is the chip, the chip includes a processor, a memory, and a transceiver. The transceiver may be an input/output circuit or a communication interface. The processor may be a processing module, a microprocessor, or an integrated circuit integrated on the chip. The sending operations of the terminal device in the foregoing method embodiments may be understood as output of the chip, and the receiving operations of the terminal device in the foregoing method embodiments may be understood as input of the chip.

FIG. 14 is a diagram of a seventh structure of a communication apparatus according to an embodiment of this application. Refer to FIG. 14. The communication apparatus 1400 may be a network device, or may be a chip. The communication apparatus 1400 may be configured to perform the operations performed by the network device in the foregoing method embodiments.

When the communication apparatus 1400 is the network device, for example, a base station, FIG. 14 is a simplified diagram of a structure of the base station. The base station includes a part 1410, a part 1420, and a part 1430. The part 1410 is mainly configured to: perform baseband processing, control the base station, and so on. The part 1410 is usually a control center of the base station, may be usually referred to as a processor, and is configured to control the base station to perform the processing operations on the network device side in the foregoing method embodiments. The part 1420 is mainly configured to store computer program code and data. The part 1430 is mainly configured to transmit and receive a radio frequency signal, and perform conversion between the radio frequency signal and a baseband signal. The part 1430 may be usually referred to as a transceiver module, a transceiver, a transceiver circuit, a transceiver, or the like. The transceiver module in the part 1430 may also be referred to as a transceiver, a transceiver, or the like, and includes an antenna 1433 and a radio frequency circuit (not shown). The radio frequency circuit is mainly configured to perform radio frequency processing. Optionally, in the part 1430, a component configured to implement a receiving function may be considered as a receiver, and a component configured to implement a sending function may be considered as a transmitter. That is, the part 1430 includes a receiver 1432 and a transmitter 1431. The receiver may also be referred to as a receiving module, a receiver, a receiver circuit, or the like, and the transmitter may be referred to as a transmitting module, a transmitter, a transmitter circuit, or the like.

The part 1410 and the part 1420 may include one or more boards, and each board may include one or more processors and one or more memories. The processor is configured to read and execute a program in the memory, to implement a baseband processing function and control the base station. If there are a plurality of boards, the boards may be connected with each other to enhance a processing capability. In an optional implementation, a plurality of boards may share one or more processors, a plurality of boards share one or more memories, or a plurality of boards share one or more processors simultaneously.

For example, in an implementation, the transceiver module in the part 1430 is configured to perform the processes related to transmitting and receiving and performed by the network device in the embodiments shown in FIG. 3, FIG. 5, FIG. 6, and FIG. 7. The processor in the part 1410 is configured to perform the processing-related processes performed by the network device in the embodiments shown in FIG. 3, FIG. 5, FIG. 6, and FIG. 7.

It should be understood that FIG. 14 is merely an example rather than a limitation. The network device including the processor, the memory, and the transceiver may not depend on the structures shown in FIG. 9 and FIG. 11.

When the communication apparatus 1400 is the chip, the chip includes a transceiver, a memory, and a processor. The transceiver may be an input/output circuit or a communication interface. The processor is a processor, a microprocessor, or an integrated circuit integrated on the chip. The sending operations of the network device in the foregoing method embodiments may be understood as output of the chip, and the receiving operations of the network device in the foregoing method embodiments may be understood as input of the chip.

An embodiment of this application further provides a computer-readable storage medium. The computer-readable storage medium stores computer instructions for implementing the methods performed by the first communication device in the foregoing method embodiments.

For example, when a computer program is executed by a computer, the computer is enabled to implement the methods performed by the first communication device in the foregoing method embodiments.

An embodiment of this application further provides a computer program product including instructions. When the instructions are executed by a computer, the computer is enabled to implement the methods performed by the first communication device in the foregoing method embodiments.

An embodiment of this application further provides a communication system. The communication system includes the first communication device and the second communication device in the foregoing embodiments.

An embodiment of this application further provides a chip apparatus, including a processor, configured to invoke a computer program or computer instructions stored in a memory, so that the processor performs the methods in the embodiments shown in FIG. 3, FIG. 5, FIG. 6, and FIG. 7.

In a possible implementation, input of the chip apparatus corresponds to the receiving operations in the embodiments shown in FIG. 3, FIG. 5, FIG. 6, and FIG. 7, and output of the chip apparatus corresponds to the sending operations in the embodiments shown in FIG. 3, FIG. 5, FIG. 6, and FIG. 7.

Optionally, the processor is coupled to the memory through an interface.

Optionally, the chip apparatus further includes the memory. The memory stores the computer program or the computer instructions.

The processor mentioned anywhere above may be a general-purpose central processing unit, a microprocessor, an application-specific integrated circuit (application-specific integrated circuit, ASIC), or one or more integrated circuits for controlling program execution of the methods in the embodiments shown in FIG. 3, FIG. 5, FIG. 6, and FIG. 7. The memory mentioned anywhere above may be a read-only memory (read-only memory, ROM), another type of static storage device that may store static information and instructions, a random access memory (random access memory, RAM), or the like.

It may be clearly understood by persons skilled in the art that, for the purpose of convenient and brief description, for a specific working process of the foregoing system, apparatus, and unit, refer to the corresponding process in the foregoing method embodiments. Details are not described herein again.

In the several embodiments provided in this application, it should be understood that the disclosed system, apparatus, and method may be implemented in other manners. For example, the foregoing apparatus embodiment is merely an example. For example, division into the units is merely logical function division, and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located in one position, or may be distributed on a plurality of network units. Some or all of the units may be selected based on actual requirements to achieve the objectives of the solutions in embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions in this application essentially, the part making a contribution, or all or some of the technical solutions may be implemented in a form of a software product. The computer software product is stored in a storage medium, and includes several instructions for enabling a computer device (which may be a personal computer, a server, a network device, or the like) to perform all or some steps of the methods in embodiments of this application. The foregoing storage medium includes any medium that can store program code, such as a USB flash drive, a removable hard disk, a ROM, a RAM, a magnetic disk, or an optical disc.

In conclusion, the foregoing embodiments are merely intended for describing the technical solutions in this application, but not for limiting this application. Although this application is described in detail with reference to the foregoing embodiments, persons of ordinary skill in the art should understand that they may still make modifications to the technical solutions recorded in the foregoing embodiments or make equivalent replacements to some technical features thereof. However, these modifications or replacements do not make the essence of the corresponding technical solutions depart from the scope of the technical solutions in embodiments of this application.

## Claims

1. A beam determining method, wherein the method comprises:
determining, by a terminal device in a first beam and a second beam based on a beam parameter corresponding to a first control-resource set and a beam parameter corresponding to a second control-resource set, a beam used by the first control-resource set and a beam used by the second control-resource set, wherein the first beam and the second beam are two common beams that are available for downlink transmission and that are indicated by a network device to the terminal device, and the first control-resource set and the second control-resource set are two control-resource sets for physical downlink control channel repetition transmission; and
receiving, by the terminal device based on the beam used by the first control-resource set, a physical downlink control channel corresponding to the first control-resource set, and receiving, based on the beam used by the second control-resource set, a physical downlink control channel corresponding to the second control-resource set.

2. A beam determining method, wherein the method comprises:
determining, by a network device in a first beam and a second beam based on a beam parameter corresponding to a first control-resource set and a beam parameter corresponding to a second control-resource set, a beam used by the first control-resource set and a beam used by the second control-resource set, wherein the first beam and the second beam are two common beams that are available for downlink transmission and that are indicated by the network device to a terminal device, and the first control-resource set and the second control-resource set are two control-resource sets for physical downlink control channel repetition transmission; and
sending, by the network device based on the beam used by the first control-resource set, a physical downlink control channel corresponding to the first control-resource set, and sending, based on the beam used by the second control-resource set, a physical downlink control channel corresponding to the second control-resource set.

3. The method according to claim 1 or 2, wherein the first control-resource set and the second control-resource set are control-resource sets respectively associated with two search spaces for physical downlink control channel repetition transmission, wherein
the first control-resource set is a control-resource set with a smaller index in the two control-resource sets, and the second control-resource set is a control-resource set with a larger index in the two control-resource sets;
the first control-resource set is a control-resource set with a higher configuration ranking in the two control-resource sets, and the second control-resource set is a control-resource set with a lower configuration ranking in the two control-resource sets;
the first control-resource set is a control-resource set corresponding to a search space with a smaller index in the two search spaces, and the second control-resource set is a control-resource set corresponding to a search space with a larger index in the two search spaces; or
the first control-resource set is a control-resource set corresponding to a search space with a higher configuration ranking in the two search spaces, and the second control-resource set is a control-resource set corresponding to a search space with a lower configuration ranking in the two search spaces.

4. The method according to any one of claims 1 to 3, wherein for either of the first control-resource set and the second control-resource set,
when a value of a beam parameter corresponding to the control-resource set is a first value, the control-resource set uses the first beam;
when a value of a beam parameter corresponding to the control-resource set is a second value, the control-resource set uses the second beam; or
when a value of a beam parameter corresponding to the control-resource set is a third value, the control-resource set uses the first beam and the second beam.

5. The method according to claim 4, wherein a value of the beam parameter corresponding to the first control-resource set and a value of the beam parameter corresponding to the second control-resource set are configured by the network device; and
the beam parameter corresponding to the first control-resource set and the beam parameter corresponding to the second control-resource set satisfy at least one of the following:
neither the value of the beam parameter corresponding to the first control-resource set nor the value of the beam parameter corresponding to the second control-resource set is the third value;
the value of the beam parameter corresponding to the first control-resource set is different from the value of the beam parameter corresponding to the second control-resource set;
a value of a beam parameter corresponding to one of the first control-resource set and the second control-resource set is the first value, and a value of a beam parameter corresponding to the other control-resource set is the second value;
the value of the beam parameter corresponding to the first control-resource set is the first value, and the value of the beam parameter corresponding to the second control-resource set is the second value; or
the value of the beam parameter corresponding to the first control-resource set is the second value, and the value of the beam parameter corresponding to the second control-resource set is the first value.

6. The method according to claim 4, wherein a value of a beam parameter corresponding to one of the first control-resource set and the second control-resource set is default, and a value of a beam parameter corresponding to the other control-resource set is configured by the network device, wherein
the default value of the beam parameter corresponding to the one of the first control-resource set and the second control-resource set is determined based on the value of the beam parameter corresponding to the other control-resource set.

7. The method according to claim 6, wherein that the value of the beam parameter corresponding to the one of the first control-resource set and the second control-resource set is determined based on the value of the beam parameter corresponding to the other control-resource set comprises:
if the value of the beam parameter corresponding to the other control-resource set is the first value, the default value of the beam parameter corresponding to the one of the first control-resource set and the second control-resource set is the second value; or
if the value of the beam parameter corresponding to the other control-resource set is the second value, the default value of the beam parameter corresponding to the one of the first control-resource set and the second control-resource set is the first value.

8. The method according to claim 4, wherein a value of the beam parameter corresponding to the first control-resource set and a value of the beam parameter corresponding to the second control-resource set are both default; and
the default value of the beam parameter corresponding to the first control-resource set is the first value, and the default value of the beam parameter corresponding to the second control-resource set is the second value; or
the default value of the beam parameter corresponding to the first control-resource set is the second value, and the default value of the beam parameter corresponding to the second control-resource set is the first value.

9. The method according to any one of claims 1 and 3 to 8, wherein when a first condition is satisfied, the terminal device determines, in the first beam and the second beam based on the beam parameter corresponding to the first control-resource set and the beam parameter corresponding to the second control-resource set, the beam used by the first control-resource set and the beam used by the second control-resource set, wherein the first condition comprises at least one or a combination of the following:
the network device configures the first control-resource set and the second control-resource set to each use a common beam;
the network device configures common beams for the terminal device;
the network device configures, for the terminal device, two groups of common beams available for downlink transmission; or
index values of control-resource set pools associated with all control-resource sets configured by the network device for the terminal device are the same.

10. The method according to any one of claims 2 to 8, wherein when a first condition is satisfied, the network device determines, in the first beam and the second beam based on the beam parameter corresponding to the first control-resource set and the beam parameter corresponding to the second control-resource set, the beam used by the first control-resource set and the beam used by the second control-resource set, wherein the first condition comprises at least one or a combination of the following:
the network device configures the first control-resource set and the second control-resource set to each use a common beam;
the network device configures common beams for the terminal device;
the network device configures, for the terminal device, two groups of common beams available for downlink transmission; or
index values of control-resource set pools associated with all control-resource sets configured by the network device for the terminal device are the same.

11. A beam determining method, wherein the method comprises:
determining, by a terminal device, a first control-resource set and a second control-resource set that are configured by a network device, wherein the first control-resource set and the second control-resource set are two control-resource sets for physical downlink control channel repetition transmission, the first control-resource set uses a common beam, and the second control-resource set uses a dedicated beam;
when a value of a beam parameter corresponding to the first control-resource set is default, determining, by the terminal device based on the dedicated beam used by the second control-resource set, the default value of the beam parameter corresponding to the first control-resource set; and
determining, by the terminal device in a first beam and a second beam based on the default value of the beam parameter corresponding to the first control-resource set, the beam used by the first control-resource set, wherein the first beam and the second beam are two common beams that are available for downlink transmission and that are indicated by the network device to the terminal device.

12. A beam determining method, wherein the method comprises:
determining, by a network device, a first control-resource set and a second control-resource set that are configured for a terminal device, wherein the first control-resource set and the second control-resource set are two control-resource sets for physical downlink control channel repetition transmission, the first control-resource set uses a common beam, and the second control-resource set uses a dedicated beam;
when a value of a beam parameter corresponding to the first control-resource set is default, determining, by the network device based on the dedicated beam used by the second control-resource set, the default value of the beam parameter corresponding to the first control-resource set; and
determining, by the network device in a first beam and a second beam based on the default value of the beam parameter corresponding to the first control-resource set, the beam used by the first control-resource set, wherein the first beam and the second beam are two common beams that are available for downlink transmission and that are indicated by the network device to the terminal device.

13. The method according to claim 11 or 12, wherein when the default value of the beam parameter corresponding to the first control-resource set is a first value, the first control-resource set uses the first beam;
when the default value of the beam parameter corresponding to the first control-resource set is a second value, the first control-resource set uses the second beam; or
when the default value of the beam parameter corresponding to the first control-resource set is a third value, the first control-resource set uses the first beam and the second beam.

14. The method according to claim 13, wherein the default value of the beam parameter corresponding to the first control-resource set is one of the first value and the second value, and a beam indicated by the default value of the beam parameter corresponding to the first control-resource set and the dedicated beam used by the second control-resource set belong to two different beam sets, wherein the two different beam sets are two beam sets configured or activated by the network device for the terminal device.

15. A beam determining method, wherein the method comprises:
determining, by a network device, a first control-resource set and a second control-resource set that are configured for a terminal device, wherein the first control-resource set and the second control-resource set are two control-resource sets for physical downlink control channel repetition transmission, the first control-resource set uses a common beam, and the second control-resource set uses a dedicated beam;
determining, by the network device based on the dedicated beam used by the second control-resource set, a configuration value of a beam parameter corresponding to the first control-resource set; and
determining, by the network device in a first beam and a second beam based on the configuration value of the beam parameter corresponding to the first control-resource set, the beam used by the first control-resource set, wherein the first beam and the second beam are two common beams that are available for downlink transmission and that are indicated by the network device to the terminal device.

16. The method according to claim 15, wherein when the configuration value of the beam parameter corresponding to the first control-resource set is a first value, the first control-resource set uses the first beam;
when the configuration value of the beam parameter corresponding to the first control-resource set is a second value, the first control-resource set uses the second beam; or
when the configuration value of the beam parameter corresponding to the first control-resource set is a third value, the first control-resource set uses the first beam and the second beam.

17. The method according to claim 16, wherein the configuration value of the beam parameter corresponding to the first control-resource set is one of the first value and the second value, and a beam indicated by the configuration value of the beam parameter corresponding to the first control-resource set and the dedicated beam used by the second control-resource set belong to two different beam sets, wherein the two different beam sets are two beam sets configured or activated by the network device for the terminal device.

18. The method according to claim 14 or 17, wherein the beam used by the first control-resource set belongs to a first beam set, and the beam used by the second control-resource set belongs to a second beam set; and the first beam set corresponds to a first transmission reception point TRP, and the second beam set corresponds to a second TRP.

19. The method according to any one of claims 11 to 18, wherein the first control-resource set and the second control-resource set are control-resource sets respectively associated with two search spaces for physical downlink control channel repetition transmission, wherein
the first control-resource set is a control-resource set with a smaller index in the two control-resource sets, and the second control-resource set is a control-resource set with a larger index in the two control-resource sets;
the first control-resource set is a control-resource set with a larger index in the two control-resource sets, and the second control-resource set is a control-resource set with a smaller index in the two control-resource sets;
the first control-resource set is a control-resource set with a higher configuration ranking in the two control-resource sets, and the second control-resource set is a control-resource set with a lower configuration ranking in the two control-resource sets;
the first control-resource set is a control-resource set with a lower configuration ranking in the two control-resource sets, and the second control-resource set is a control-resource set with a higher configuration ranking in the two control-resource sets;
the first control-resource set is a control-resource set corresponding to a search space with a smaller index in the two search spaces, and the second control-resource set is a control-resource set corresponding to a search space with a larger index in the two search spaces;
the first control-resource set is a control-resource set corresponding to a search space with a larger index in the two search spaces, and the second control-resource set is a control-resource set corresponding to a search space with a smaller index in the two search spaces;
the first control-resource set is a control-resource set corresponding to a search space with a higher configuration ranking in the two search spaces, and the second control-resource set is a control-resource set corresponding to a search space with a lower configuration ranking in the two search spaces; or
the first control-resource set is a control-resource set corresponding to a search space with a lower configuration ranking in the two search spaces, and the second control-resource set is a control-resource set corresponding to a search space with a higher configuration ranking in the two search spaces.

20. The method according to any one of claims 1 to 19, wherein the first beam and the second beam comprise any one of the following:
the first beam is a beam with a smaller index in the two common beams available for downlink transmission, and the second beam is a beam with a larger index in the two common beams available for downlink transmission;
the first beam is a beam with a higher configuration ranking in the two common beams available for downlink transmission, and the second beam is a beam with a lower configuration ranking in the two common beams available for downlink transmission;
the first beam belongs to the first beam set, and the second beam belongs to the second beam set, wherein the first beam set and the second beam set are two beam sets that are of a same type and that are configured by the network device for the terminal device; and the first beam set is a beam set with a smaller index in the two beam sets of the same type, and the second beam set is a beam set with a larger index in the two beam sets; or the first beam set is a beam set with a higher configuration ranking in the two beam sets of the same type, and the second beam set is a beam set with a lower configuration ranking in the two beam sets;
the first beam belongs to a first beam group, and the second beam belongs to a second beam group, wherein the first beam group and the second beam group are two beam groups that are of a same type and that are activated by the network device by using a medium access control control element MAC CE; and the first beam group is a beam group with a smaller index in the two beam groups of the same type, and the second beam group is a beam group with a larger index in the two beam groups of the same type; or the first beam group is a beam group with a higher ranking of activation in the MAC CE in the two beam groups of the same type, and the second beam group is a beam group with a lower ranking of activation in the MAC CE in the two beam groups of the same type;
the first beam is a beam corresponding to a smaller transmission configuration indicator TCI field value in the two common beams available for downlink transmission, and the second beam is a beam corresponding to a larger TCI field value in the two common beams available for downlink transmission;
the first beam is a beam indicated by a 1^{st} transmission configuration indicator TCI field in downlink control information DCI, and the second beam is a beam indicated by a 2^{nd} TCI field in the DCI;
the first beam is a beam corresponding to a 1^{st} part of field values in all field values of a TCI field in DCI, and the second beam is a beam corresponding to a 2^{nd} part of field values in all the field values of the TCI field in the DCI;
the first beam and the second beam are two beams that are of a same type and that are indicated by a same TCI field in DCI, the first beam is a beam with a higher ranking of activation in a MAC CE in the two beams of the same type, and the second beam is a beam with a lower ranking of activation in the MAC CE in the two beams of the same type; or
the first beam is a beam indicated by first DCI, and the second beam is a beam indicated by second DCI, wherein the first DCI is DCI carried on a physical downlink control channel PDCCH corresponding to a first control-resource set group in two control-resource set groups configured by the network device for the terminal device, the second DCI is DCI carried on a PDCCH corresponding to a second control-resource set group in the two control-resource set groups, the first control-resource set group is a control-resource set group with a smaller group index in the two control-resource set groups, and the second control-resource set group is a control-resource set group with a larger group index in the two control-resource set groups; or a value of a first field in the first DCI indicates that a beam indicated by the first DCI is the first beam, and a value of a first field in the second DCI indicates that a beam indicated by the second DCI is the second beam.

21. A first communication apparatus, wherein the first communication apparatus comprises:
a processing module, configured to determine, in a first beam and a second beam based on a beam parameter corresponding to a first control-resource set and a beam parameter corresponding to a second control-resource set, a beam used by the first control-resource set and a beam used by the second control-resource set, wherein the first beam and the second beam are two common beams that are available for downlink transmission and that are indicated by a second communication apparatus to the first communication apparatus, and the first control-resource set and the second control-resource set are two control-resource sets for physical downlink control channel repetition transmission; and
a transceiver module, configured to receive, based on the beam used by the first control-resource set, a physical downlink control channel corresponding to the first control-resource set, and receive, based on the beam used by the second control-resource set, a physical downlink control channel corresponding to the second control-resource set.

22. A second communication apparatus, wherein the second communication apparatus comprises:
a processing module, configured to determine, in a first beam and a second beam based on a beam parameter corresponding to a first control-resource set and a beam parameter corresponding to a second control-resource set, a beam used by the first control-resource set and a beam used by the second control-resource set, wherein the first beam and the second beam are two common beams that are available for downlink transmission and that are indicated by the second communication apparatus to a first communication apparatus, and the first control-resource set and the second control-resource set are two control-resource sets for physical downlink control channel repetition transmission; and
a transceiver module, configured to send, based on the beam used by the first control-resource set, a physical downlink control channel corresponding to the first control-resource set, and send, based on the beam used by the second control-resource set, a physical downlink control channel corresponding to the second control-resource set.

23. The first communication apparatus according to claim 21 or the second communication apparatus according to claim 22, wherein the first control-resource set and the second control-resource set are control-resource sets respectively associated with two search spaces for physical downlink control channel repetition transmission, wherein
the first control-resource set is a control-resource set with a smaller index in the two control-resource sets, and the second control-resource set is a control-resource set with a larger index in the two control-resource sets;
the first control-resource set is a control-resource set with a higher configuration ranking in the two control-resource sets, and the second control-resource set is a control-resource set with a lower configuration ranking in the two control-resource sets;
the first control-resource set is a control-resource set corresponding to a search space with a smaller index in the two search spaces, and the second control-resource set is a control-resource set corresponding to a search space with a larger index in the two search spaces; or
the first control-resource set is a control-resource set corresponding to a search space with a higher configuration ranking in the two search spaces, and the second control-resource set is a control-resource set corresponding to a search space with a lower configuration ranking in the two search spaces.

24. The first communication apparatus according to claim 21 or 23 or the second communication apparatus according to claim 22 or 23, wherein for either of the first control-resource set and the second control-resource set,
when a value of a beam parameter corresponding to the control-resource set is a first value, the control-resource set uses the first beam;
when a value of a beam parameter corresponding to the control-resource set is a second value, the control-resource set uses the second beam; or
when a value of a beam parameter corresponding to the control-resource set is a third value, the control-resource set uses the first beam and the second beam.

25. The first communication apparatus or the second communication apparatus according to claim 24, wherein a value of the beam parameter corresponding to the first control-resource set and a value of the beam parameter corresponding to the second control-resource set are configured by the second communication apparatus; and
the beam parameter corresponding to the first control-resource set and the beam parameter corresponding to the second control-resource set satisfy at least one of the following:
neither the value of the beam parameter corresponding to the first control-resource set nor the value of the beam parameter corresponding to the second control-resource set is the third value;
the value of the beam parameter corresponding to the first control-resource set is different from the value of the beam parameter corresponding to the second control-resource set;
a value of a beam parameter corresponding to one of the first control-resource set and the second control-resource set is the first value, and a value of a beam parameter corresponding to the other control-resource set is the second value;
the value of the beam parameter corresponding to the first control-resource set is the first value, and the value of the beam parameter corresponding to the second control-resource set is the second value; or
the value of the beam parameter corresponding to the first control-resource set is the second value, and the value of the beam parameter corresponding to the second control-resource set is the first value.

26. The first communication apparatus or the second communication apparatus according to claim 24, wherein a value of a beam parameter corresponding to one of the first control-resource set and the second control-resource set is default, and a value of a beam parameter corresponding to the other control-resource set is configured by the second communication apparatus, wherein
the default value of the beam parameter corresponding to the one of the first control-resource set and the second control-resource set is determined based on the value of the beam parameter corresponding to the other control-resource set.

27. The first communication apparatus or the second communication apparatus according to claim 26, wherein that the value of the beam parameter corresponding to the one of the first control-resource set and the second control-resource set is determined based on the value of the beam parameter corresponding to the other control-resource set comprises:
if the value of the beam parameter corresponding to the other control-resource set is the first value, the default value of the beam parameter corresponding to the one of the first control-resource set and the second control-resource set is the second value; or
if the value of the beam parameter corresponding to the other control-resource set is the second value, the default value of the beam parameter corresponding to the one of the first control-resource set and the second control-resource set is the first value.

28. The first communication apparatus or the second communication apparatus according to claim 24, wherein a value of the beam parameter corresponding to the first control-resource set and a value of the beam parameter corresponding to the second control-resource set are both default; and
the default value of the beam parameter corresponding to the first control-resource set is the first value, and the default value of the beam parameter corresponding to the second control-resource set is the second value; or
the default value of the beam parameter corresponding to the first control-resource set is the second value, and the default value of the beam parameter corresponding to the second control-resource set is the first value.

29. The first communication apparatus according to any one of claims 21 and 23 to 28, wherein the processing module is specifically configured to: when a first condition is satisfied, determine, in the first beam and the second beam based on the beam parameter corresponding to the first control-resource set and the beam parameter corresponding to the second control-resource set, the beam used by the first control-resource set and the beam used by the second control-resource set, wherein the first condition comprises at least one or a combination of the following:
the second communication apparatus configures the first control-resource set and the second control-resource set to each use a common beam;
the second communication apparatus configures common beams for the first communication apparatus;
the second communication apparatus configures, for the first communication apparatus, two groups of common beams available for downlink transmission; or
index values of control-resource set pools associated with all control-resource sets configured by the second communication apparatus for the first communication apparatus are the same.

30. The second communication apparatus according to any one of claims 22 to 28, wherein the processing module is specifically configured to: when a first condition is satisfied, determine, in the first beam and the second beam based on the beam parameter corresponding to the first control-resource set and the beam parameter corresponding to the second control-resource set, the beam used by the first control-resource set and the beam used by the second control-resource set, wherein the first condition comprises at least one or a combination of the following:
the second communication apparatus configures the first control-resource set and the second control-resource set to each use a common beam;
the second communication apparatus configures common beams for the first communication apparatus;
the second communication apparatus configures, for the first communication apparatus, two groups of common beams available for downlink transmission; or
index values of control-resource set pools associated with all control-resource sets configured by the second communication apparatus for the first communication apparatus are the same.

31. A first communication apparatus, wherein the method comprises:
a processing module, configured to: determine a first control-resource set and a second control-resource set that are configured by a second communication apparatus, wherein the first control-resource set and the second control-resource set are two control-resource sets for physical downlink control channel repetition transmission, the first control-resource set uses a common beam, and the second control-resource set uses a dedicated beam; when a value of a beam parameter corresponding to the first control-resource set is default, determine, based on the dedicated beam used by the second control-resource set, the default value of the beam parameter corresponding to the first control-resource set; and determine, in a first beam and a second beam based on the default value of the beam parameter corresponding to the first control-resource set, the beam used by the first control-resource set, wherein the first beam and the second beam are two common beams that are available for downlink transmission and that are indicated by the second communication apparatus to the first communication apparatus.

32. A second communication apparatus, wherein the method comprises:
a processing module, configured to: determine a first control-resource set and a second control-resource set that are configured for a first communication apparatus, wherein the first control-resource set and the second control-resource set are two control-resource sets for physical downlink control channel repetition transmission, the first control-resource set uses a common beam, and the second control-resource set uses a dedicated beam; when a value of a beam parameter corresponding to the first control-resource set is default, determine, based on the dedicated beam used by the second control-resource set, the default value of the beam parameter corresponding to the first control-resource set; and determine, in a first beam and a second beam based on the default value of the beam parameter corresponding to the first control-resource set, the beam used by the first control-resource set, wherein the first beam and the second beam are two common beams that are available for downlink transmission and that are indicated by the second communication apparatus to the first communication apparatus.

33. The first communication apparatus according to claim 31 or the second communication apparatus according to claim 32, wherein when the default value of the beam parameter corresponding to the first control-resource set is a first value, the first control-resource set uses the first beam;
when the default value of the beam parameter corresponding to the first control-resource set is a second value, the first control-resource set uses the second beam; or
when the default value of the beam parameter corresponding to the first control-resource set is a third value, the first control-resource set uses the first beam and the second beam.

34. The first communication apparatus or the second communication apparatus according to claim 33, wherein the default value of the beam parameter corresponding to the first control-resource set is one of the first value and the second value, and a beam indicated by the default value of the beam parameter corresponding to the first control-resource set and the dedicated beam used by the second control-resource set belong to two different beam sets, wherein the two different beam sets are two beam sets configured or activated by the second communication apparatus for the first communication apparatus.

35. A second communication apparatus, wherein the second communication apparatus comprises:
a processing module, configured to: determine a first control-resource set and a second control-resource set that are configured for a first communication apparatus, wherein the first control-resource set and the second control-resource set are two control-resource sets for physical downlink control channel repetition transmission, the first control-resource set uses a common beam, and the second control-resource set uses a dedicated beam; determine, based on the dedicated beam used by the second control-resource set, a configuration value of a beam parameter corresponding to the first control-resource set; and determine, in a first beam and a second beam based on the configuration value of the beam parameter corresponding to the first control-resource set, the beam used by the first control-resource set, wherein the first beam and the second beam are two common beams that are available for downlink transmission and that are indicated by the second communication apparatus to the first communication apparatus.

36. The second communication apparatus according to claim 35, wherein when the configuration value of the beam parameter corresponding to the first control-resource set is a first value, the first control-resource set uses the first beam;
when the configuration value of the beam parameter corresponding to the first control-resource set is a second value, the first control-resource set uses the second beam; or
when the configuration value of the beam parameter corresponding to the first control-resource set is a third value, the first control-resource set uses the first beam and the second beam.

37. The second communication apparatus according to claim 36, wherein the configuration value of the beam parameter corresponding to the first control-resource set is one of the first value and the second value, and a beam indicated by the configuration value of the beam parameter corresponding to the first control-resource set and the dedicated beam used by the second control-resource set belong to two different beam sets, wherein the two different beam sets are two beam sets configured or activated by the second communication apparatus for the first communication apparatus.

38. The first communication apparatus according to claim 34 or the second communication apparatus according to claim 34 or 37, wherein the beam used by the first control-resource set belongs to a first beam set, and the beam used by the second control-resource set belongs to a second beam set; and the first beam set corresponds to a first transmission reception point TRP, and the second beam set corresponds to a second TRP.

39. The first communication apparatus according to claim 31, 33, 34, or 38 or the second communication apparatus according to any one of claims 32 to 38, wherein the first control-resource set and the second control-resource set are control-resource sets respectively associated with two search spaces for physical downlink control channel repetition transmission, wherein
the first control-resource set is a control-resource set with a smaller index in the two control-resource sets, and the second control-resource set is a control-resource set with a larger index in the two control-resource sets;
the first control-resource set is a control-resource set with a larger index in the two control-resource sets, and the second control-resource set is a control-resource set with a smaller index in the two control-resource sets;
the first control-resource set is a control-resource set with a higher configuration ranking in the two control-resource sets, and the second control-resource set is a control-resource set with a lower configuration ranking in the two control-resource sets;
the first control-resource set is a control-resource set with a lower configuration ranking in the two control-resource sets, and the second control-resource set is a control-resource set with a higher configuration ranking in the two control-resource sets;
the first control-resource set is a control-resource set corresponding to a search space with a smaller index in the two search spaces, and the second control-resource set is a control-resource set corresponding to a search space with a larger index in the two search spaces;
the first control-resource set is a control-resource set corresponding to a search space with a larger index in the two search spaces, and the second control-resource set is a control-resource set corresponding to a search space with a smaller index in the two search spaces;
the first control-resource set is a control-resource set corresponding to a search space with a higher configuration ranking in the two search spaces, and the second control-resource set is a control-resource set corresponding to a search space with a lower configuration ranking in the two search spaces; or
the first control-resource set is a control-resource set corresponding to a search space with a lower configuration ranking in the two search spaces, and the second control-resource set is a control-resource set corresponding to a search space with a higher configuration ranking in the two search spaces.

40. The first communication apparatus according to any one of claims 21, 23 to 29, 31, 33, 34, 38, and 39 or the second communication apparatus according to any one of claims 22 to 28, 30, and 32 to 39, wherein the first beam and the second beam comprise any one of the following:
the first beam is a beam with a smaller index in the two common beams available for downlink transmission, and the second beam is a beam with a larger index in the two common beams available for downlink transmission;
the first beam is a beam with a higher configuration ranking in the two common beams available for downlink transmission, and the second beam is a beam with a lower configuration ranking in the two common beams available for downlink transmission;
the first beam belongs to the first beam set, and the second beam belongs to the second beam set, wherein the first beam set and the second beam set are two beam sets that are of a same type and that are configured by the second communication apparatus for the first communication apparatus; and the first beam set is a beam set with a smaller index in the two beam sets of the same type, and the second beam set is a beam set with a larger index in the two beam sets; or the first beam set is a beam set with a higher configuration ranking in the two beam sets of the same type, and the second beam set is a beam set with a lower configuration ranking in the two beam sets;
the first beam belongs to a first beam group, and the second beam belongs to a second beam group, wherein the first beam group and the second beam group are two beam groups that are of a same type and that are activated by the second communication apparatus by using a medium access control control element MAC CE; and the first beam group is a beam group with a smaller index in the two beam groups of the same type, and the second beam group is a beam group with a larger index in the two beam groups of the same type; or the first beam group is a beam group with a higher ranking of activation in the MAC CE in the two beam groups of the same type, and the second beam group is a beam group with a lower ranking of activation in the MAC CE in the two beam groups of the same type;
the first beam is a beam corresponding to a smaller transmission configuration indicator TCI field value in the two common beams available for downlink transmission, and the second beam is a beam corresponding to a larger TCI field value in the two common beams available for downlink transmission;
the first beam is a beam indicated by a 1^{st} transmission configuration indicator TCI field in downlink control information DCI, and the second beam is a beam indicated by a 2^{nd} TCI field in the DCI;
the first beam is a beam corresponding to a 1^{st} part of field values in all field values of a TCI field in DCI, and the second beam is a beam corresponding to a 2^{nd} part of field values in all the field values of the TCI field in the DCI;
the first beam and the second beam are two beams that are of a same type and that are indicated by a same TCI field in DCI, the first beam is a beam with a higher ranking of activation in a MAC CE in the two beams of the same type, and the second beam is a beam with a lower ranking of activation in the MAC CE in the two beams of the same type; or
the first beam is a beam indicated by first DCI, and the second beam is a beam indicated by second DCI, wherein the first DCI is DCI carried on a physical downlink control channel PDCCH corresponding to a first control-resource set group in two control-resource set groups configured by the second communication apparatus for the first communication apparatus, the second DCI is DCI carried on a PDCCH corresponding to a second control-resource set group in the two control-resource set groups, the first control-resource set group is a control-resource set group with a smaller group index in the two control-resource set groups, and the second control-resource set group is a control-resource set group with a larger group index in the two control-resource set groups; or a value of a first field in the first DCI indicates that a beam indicated by the first DCI is the first beam, and a value of a first field in the second DCI indicates that a beam indicated by the second DCI is the second beam.

41. A communication apparatus, wherein the communication apparatus comprises a processor, and the processor is configured to execute a computer program or computer instructions in a memory, to perform the method according to any one of claims 1, 3 to 9, and 20, to perform the method according to any one of claims 11, 13, 14, and 18 to 20, to perform the method according to any one of claims 2 to 8, 10, and 20, or to perform the method according to any one of claims 12 to 20.

42. A computer-readable storage medium, wherein the computer-readable storage medium stores a computer program; and when the computer program is executed by a communication apparatus, the communication apparatus is enabled to perform the method according to any one of claims 1, 3 to 9, and 20, the communication apparatus is enabled to perform the method according to any one of claims 11, 13, 14, and 18 to 20, the communication apparatus is enabled to perform the method according to any one of claims 2 to 8, 10, and 20, or the communication apparatus is enabled to perform the method according to any one of claims 12 to 20.
